(19) Europäisches Patentamt

European Patent Office

Office européen des brevets

(11) **EP 1 686 517 A1**

(12) **EUROPEAN PATENT APPLICATION**
published in accordance with Art. 158(3) EPC

(43) Date of publication:
**02.08.2006 Bulletin 2006/31**

(51) Int Cl.:
***G06Q 10/00*** (2006.01)

(21) Application number: **04724730.9**

(22) Date of filing: **31.03.2004**

(86) International application number:
**PCT/JP2004/004598**

(87) International publication number:
**WO 2005/050512 (02.06.2005 Gazette 2005/22)**

(84) Designated Contracting States:
**AT BE BG CH CY CZ DE DK EE ES FI FR GB GR HU IE IT LI LU MC NL PL PT RO SE SI SK TR**

(30) Priority: **23.10.2003 JP 2003396346**

(71) Applicants:
• **Intellectual Property Bank Corp.**
**Tokyo 105-0001 (JP)**
• **Masuyama, Hiroaki**
**Toyonaka-shi,**
**Osaka 560-0054 (JP)**

(72) Inventors:
• **MASUYAMA, Hiroaki**
**Toyonaka-shi, Osaka 560-0054 (JP)**
• **MIYAMOTO, Kaoru,**
**Villa White Nagasaki 102**
**Tokyo 171-0051 (JP)**

(74) Representative: **Style, Kelda Camilla Karen et al**
**Page White & Farrer,**
**54 Doughty Street**
**London WC1N 2LS (GB)**

(54) **ENTERPRISE EVALUATION DEVICE AND ENTERPRISE EVALUATION PROGRAM**

(57) There are provided an enterprise evaluation device and an enterprise evaluation program capable of performing relative evaluation of profit-earning capacity of intellectual asset including such as patents, know-how, bland, and management efficiency in each enterprise under a condition not depending on the enterprise size or intellectual resource profit value. The enterprise evaluation device includes: financial affair information acquisition means for acquiring a total asset, manufacturing/sales profit, royalty income of patent and the like, financial asset, profitability of the financial asset, tangible fixed asset, and profitability of tangible fixed asset of an enterprise from a financial affair database containing enterprise financial affair information; intellectual asset profit calculation means for calculating the intellectual asset profit by subtracting a value obtained by multiplying the financial asset by profitability of the financial asset and a value obtained by multiplying the tangible fixed asset by profitability of the tangible value from the sum of the acquired manufacturing/sales profit and the royalty income of patents and the like; intellectual asset profitability calculation means for calculating intellectual asset profitability by dividing the calculated intellectual asset profit by the total asset; and output means for outputting the calculated intellectual asset profitability to display means or the like. By notifying the calculated intellectual asset profitability to a user, the user can relatively compare the intellectual asset profitability of each enterprise.

FIG. 30

**Description**

TECHNICAL FIELD

The present invention relates to an enterprise evaluation device and enterprise evaluation program for evaluating the value of each enterprise based on finance information of enterprises.

BACKGROUND ART

Conventionally, Japanese Patent Laid-Open Publication No. 2000-348015 describes a system, method and recording medium for evaluating an evaluation item based on first data having a predetermined renewal interval and second data having a renewal interval that is shorter than that of the first data. This evaluation system has (a) means for creating a first evaluation model according to input of the first data of the sample target, (b) means for applying the first data of the sample target to the first evaluation model and calculating first evaluation output, (c) means for creating a second evaluation model according to input of the second data and the first evaluation output of the sample targets, (d) means for applying the first data to the first evaluation model according to the input of the first data of an evaluation target and calculating second evaluation output, and (e) means for applying the second data and the second evaluation output of the evaluation target to the second evaluation model and calculating the evaluation output of the evaluation target, and thereby evaluates the evaluation item of the evaluation target that could change with time.

In the above-mentioned evaluation system, to predict changes in the enterprise evaluation derived from financial data in which the renewal period is relatively long such as every year or every quarter, data in which the renewal period is relatively short such as stock price, interest and currency exchange that fluctuate from day to day is used to reflect changes in the economy. In this system, enterprise evaluation is made in a timely manner at the point in time such evaluation is to be made.

Further, Japanese Patent Laid-Open Publication No. 2001-76042 describes an intellectual property evaluation device and intellectual property evaluation method for evaluating the proprietary nature of intellectual property relating to a pending or registered invention or the like. This evaluation device has an actual profit input means for inputting data regarding the actual profit, a present value rate input means for inputting data regarding the present value rate per year, a compound present value calculation means for calculating the compound present values of annual compensation by multiplying the data regarding the actual profit with the data regarding the present value rates per year, an intellectual property price calculation means for calculating an intellectual property price by totaling the calculated compound present value of the annual compensation amounts, and an output means for outputting the intellectual property value amount calculated with the intellectual property price calculation means.

The above-mentioned intellectual property evaluation device is to comprehend the asset value of currently remaining patents by depreciating registered patents and the related sales volume and profits. Moreover, with respect to the evaluation of the value of each patent, the input ranking of evaluation conducted by one's own company and evaluation conducted by other companies is evaluated as the contribution.

Further, Japanese Patent Publication No. 2002-502529 of Translation of PCT Application describes a method for processing data, including the steps of maintaining at least one first patent database, maintaining at least one second non-patent information database of interest to a corporate entity, and maintaining one or more groups, wherein each of the one or more groups has an arbitrary number of patents from the at least one first database, and further including a step of automatically processing non-patent information from the at least one second database and one patent of the foregoing one or more groups.

For financial institutions, investors and corporations, it is extremely important to assess the enterprise value of investment destinations and customers. Thus, conventionally, in order to assess such enterprise value, attempts have been made for objectively judging the enterprise value based on management-finance information regarding management, finance or stock prices. Among such attempts, there are methods of screening and ranking the company to be evaluated via multivariate analysis, statistical techniques and data mining methods.

DISCLOSURE OF THE INVENTION

Recently, with the increasing ratio of intangible assets making up the enterprise value, the value of intangible assets now has a great influence on the enterprise value. Nevertheless, generally speaking, an enterprise value is not a book value in a balance sheet represented by total assets = liabilities + stockholders' equity, and is roughly calculated by the total market value + liabilities. Therefore, when complete current value accounting is applied, the amount calculated by the total market value - stockholders' equity will represent the validity of invisible assets (intangible assets) of the enterprise. Nevertheless, there is a drawback in that it is difficult to specifically calculate the value of intangible assets and judge the value according to application.

With the system described in Japanese Patent Laid-Open Publication No. 2000-348015, a model for enterprise evaluation is created by inputting data (dynamic data) with a short renewal period such as stock prices in addition to data (static data) with a long renewal period such as financial data to be publicly announced at the end of the fiscal term. The static data and dynamic data related to the evaluation target are applied to this model. Thereby, the evaluation of the item to be evaluated, which could change over time, is calculated in a timely manner and as the latest information. Nevertheless, there is a drawback in that it is not possible to judge the profitability of the enterprise based on intellectual properties or to know the difference from the average profitability in the same industry.

Moreover, the intellectual property evaluation device described in Japanese Patent Laid-Open Publication No. 2001-76042 is to evaluate the intellectual property such as patents one by one each year, and there is a drawback in that it is not possible to judge the value of a specified enterprise.

With the method for processing data described in Japanese Patent Publication No. 2002-502529 of Translation of PCT Application, there is a database containing patent information data and non-patent information data (finance information, R&D information, configuration table of manufactured products, R&D expenses of manufactured products, royalty income from patents of manufactured products, information of competitors and so on of the enterprise), a network is connected with the user, the user inputs information that he/she wants and such information is subject to computer processing and provided to the user, whereby the user is able to make an evaluation. Further, in addition to searching patents relating to products manufactured by the enterprise, R&D expenses relating to such patents and the royalty income thereof are calculated and processed. Nevertheless, there is no materiality in the subject matter of the calculation processing other than (R&D)/(number of patents), and there is a problem in that it is also difficult to implement regarding the other indexes. Moreover, there is a drawback in that it is not possible to evaluate enterprises by tabulating all patents owned by an enterprise, not specific patents, and then combining this information and finance information.

The total market value is determined by the stock prices in the market. Thus, whether the current stock price and the value of intangible assets calculated based on the stockholders' equity in the book are valid is an extremely important element for investors in the decision-making of stock trading. Enterprises are hoping to increase their value of intangible assets and thereby increase their enterprise value by procuring funds and continuing technical developments. Therefore, increasing the value of intangible assets will be positioned as an important issue in the management strategy for enterprises.

There have been attempts of trying to evaluate intangible assets from the past. Nevertheless, there is a drawback in that it is not possible to evaluate the enterprise value validity by quantitatively and qualitatively incorporating the value of intangible assets. Further, when making an investment in a specified enterprise or jointly developing a product with a specified enterprise, or desiring to be employed in a specified enterprise, there is a drawback in that it is difficult to know the trend of such enterprise in each technical field or to predict the potential of such enterprise.

Thus, in light of the foregoing conventional circumstances, an object of the present invention is to provide an enterprise evaluation device and enterprise evaluation program capable of calculating an index representing the amount of profit estimated to be generated as based on intangible intellectual assets (off-balance assets) not indicated on a balance sheet.

Further, another object of the present invention is to provide an enterprise evaluation device and enterprise evaluation program capable of calculating an index that cannot be explained from on-balance assets and notifying to the user.

Moreover, still another object of the present invention is to provide an enterprise evaluation device and enterprise evaluation program capable of analyzing in detail the development strategy or intellectual property strategy of enterprises and thereby evaluating the values of enterprises by knowing how many patent applications are being filed based on the amount invested in research and development, and knowing how many patents are registered among those filed and how many are still working as effective patents, instead if evaluating each patent application one by one.

Further, yet another object of the present invention is to provide an enterprise evaluation device and enterprise evaluation program capable of calculating an index for performing the comparative assessment of profitability of intellectual assets such as patents, know-how, brands and management efficiency of the respective enterprises under conditions that will not be influenced by the size of the enterprise, or the size of the value of earnings on intellectual assets.

Moreover, yet another object of the present invention is to provide an enterprise evaluation device and enterprise evaluation program capable of notifying a user of the balance regarding portions exceeding the industry average among the amount of profit estimated to be generated by the respective enterprises based on off-balance intellectual assets (intangible intellectual assets not indicated on the balance sheet, and profitability of intellectual assets such as patents, know-how, brands and management efficiency).

Further, yet another object of the present invention is to provide an enterprise evaluation device and enterprise evaluation program capable of calculating an index that clarifies the positioning of earnings on intellectual assets of the enterprise to be researched in relation to competitors.

Moreover, yet another object of the present invention is to provide an enterprise evaluation device and enterprise evaluation program capable of calculating and displaying the relationship of the excess profitability of intellectual assets such as patents, know-how, brands and management efficiency in relation to other enterprises, and the contribution of intellectual assets in the increase of the value added amount of the respective enterprises.

Further, yet another object of the present invention is to provide an enterprise evaluation device and enterprise evaluation program capable of displaying the relationship of intellectual asset profits based on sales profits, R&D cost and patent and other royalty income, and the expected return on intellectual assets based on the enterprise value in the market.

Moreover, yet another object of the present invention is to provide an enterprise evaluation device and enterprise evaluation program capable of calculating an index for forecasting that the evaluation from the market will increase.

Further, yet another object of the present invention is to provide an enterprise evaluation device and enterprise evaluation program capable of calculating an index that is equivalent to the total asset value of the total effective number of patents owned by an enterprise.

Moreover, yet another object of the present invention is to provide an enterprise evaluation device and enterprise evaluation program capable of displaying and notifying a user of the correlation of the total patent assets and sales volume.

In order to achieve the foregoing objects, the present invention comprises:

a management-finance information acquisition means for acquiring the gross operating profit, patent and other royalty income, financial assets, return on financial assets, tangible fixed assets and return on tangible fixed assets of a specified enterprise from a management-finance database containing management-finance information of enterprises;

earnings on intellectual asset calculation means for calculating the earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income; and

output means for outputting the calculated earnings on intellectual asset to display means or the like.

According to the present invention, it is possible to calculate an index showing the balance obtained by deducting the expected return to be obtained from on-balance assets (assets on the balance sheet) from the total business profit. Further, according to the present invention, it is possible to calculate and notify the user of an index representing the amount of profit estimated to be generated based on off-balance (intangible assets indicated on the balance sheet) intellectual assets; that is, an index that cannot be explained from on-balance assets.

Moreover, the present invention comprises:

management-finance information acquisition means for acquiring the operating profit, R&D cost, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income; and

output means for outputting the calculated earnings on intellectual asset to display means or the like.

According to the present invention, it is possible to calculate the earnings on intellectual asset with the operating profit and R&D cost.

Further, the present invention comprises:

management-finance information acquisition means for acquiring the sales profit, administrative expenses, R&D cost, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income; and

output means for outputting the calculated earnings on intellectual asset to display means, printing means, recording medium, or another telecommunications device via a communication line.

According to the present invention, it is possible to calculate the earnings on intellectual asset with the sales profit, administrative expenses, R&D cost and patent and other royalty income.

Moreover, the present invention comprises:

management-finance information acquisition means for acquiring the operating profit, R&D cost included in manufacturing costs, R&D cost included in administrative expenses, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income; and

output means for outputting the calculated earnings on intellectual asset to display means or the like.

Moreover, the present invention comprises:

management-finance information acquisition means for acquiring the sales profit, R&D cost included in manufacturing costs, administrative expenses, R&D cost included in administrative expenses, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets, from the sum of the acquired sales profit, R&D cost included in manufacturing costs, R&D cost included in administrative expenses and patent and other royalty income; and

output means for outputting the calculated earnings on intellectual asset to display means or the like.

According to the present invention, it is possible to calculate the earnings on intellectual asset with the operating profit, R&D cost included in manufacturing costs, and R&D cost included in administrative expenses.

Further, the present invention comprises:

management-finance information acquisition means for acquiring the total assets, gross operating profit, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income;

return on intellectual asset calculation means for calculating return on intellectual asset through dividing the calculated earnings on intellectual asset by the total assets; and

output means for outputting the calculated return on intellectual asset to display means or the like.

Therefore, according to the present invention, it is possible to calculate and notify the user of the ratio of the earnings on intellectual asset to total assets. By notifying the return on intellectual asset to the user, it is possible to relative compare the profitabilities of the respective enterprises. In addition, according to the present invention, it is possible to perform comparative assessment of profitability of intellectual assets such as patents, know-how, brands and management efficiency of the respective enterprises under conditions that will not be influenced by the size of enterprises, or the size of value of the earnings on intellectual asset.

Moreover, the present invention comprises:

management-finance information acquisition means for acquiring the total assets, operating profit, R&D cost, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;

return on intellectual asset calculation means for calculating return on intellectual asset through dividing the calculated earnings on intellectual asset by the total assets; and
output means for outputting the calculated return on intellectual asset to display means or the like.

According to the present invention, it is possible to calculate the return on intellectual asset with the operating profit and R&D cost.

Further, the present invention comprises:

management-finance information acquisition means for acquiring the total assets, sales profit, administrative expenses, R&D cost, patent and other royalty income, financial assets, return on financial assets, tangible fixed assets and return on tangible fixed assets of a specified enterprise from a management-finance database containing management-finance information of enterprises;
earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income;
return on intellectual asset calculation means for calculating return on intellectual asset through dividing the calculated earnings on intellectual asset by the total assets; and
output means for outputting the calculated return on intellectual asset to display means or the like.

According to the present invention, it is possible to calculate the return on intellectual asset with the sales profit, administrative expenses and R&D cost.

Moreover, the present invention comprises:

management-finance information acquisition means for acquiring the total assets, operating profit, R&D cost included in manufacturing costs, R&D cost included in administrative expenses, patent and other royalty income, financial assets, return on financial assets, tangible fixed assets and return on tangible fixed assets of a specified enterprise from a management-finance database containing management-finance information of enterprises;
earnings on intellectual asset calculation means for calculating the earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income;
return on intellectual asset calculation means for calculating return on intellectual asset through dividing the calculated earnings on intellectual asset by the total assets; and
output means for outputting the calculated return on intellectual asset to display means or the like.

Moreover, the present invention comprises:

management-finance information acquisition means for acquiring the total assets, sales profit, R&D cost included in manufacturing costs, administrative expenses, R&D cost included in administrative expenses, patent and other royalty income, financial assets, return on financial assets, tangible fixed assets and return on tangible fixed assets of a specified enterprise from a management-finance database containing management-finance information of enterprises;
earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost included in manufacturing costs, R&D cost included in administrative expenses and patent and other royalty income;
return on intellectual asset calculation means for calculating return on intellectual asset through dividing the calculated earnings on intellectual asset by the total assets; and
output means for outputting the calculated return on intellectual asset to display means or the like.

According to the present invention, it is possible to calculate the return on intellectual asset with the operating profit, R&D cost included in manufacturing costs, and R&D cost included in administrative expenses.

Further, the present invention comprises:

management-finance information acquisition means for acquiring the total assets and return on intellectual asset of a specified enterprise in a specified period and average return on intellectual asset in a specified period from a management-finance database containing management-finance information of enterprises;
excess earnings on intellectual asset calculation means for calculating excess earnings on intellectual asset by multiplying the total assets to a value obtained by subtracting the average return on intellectual assets from the return on intellectual assets of the specified enterprise; and
output means for outputting the calculated excess earnings on intellectual asset to display means or the like.

Further, the present invention comprises:

management-finance information acquisition means for acquiring the total assets, gross operating profit, patent and other royalty income, financial assets, return on financial assets, tangible fixed assets and return on tangible fixed assets of a specified enterprise from a management-finance database containing management-finance information of enterprises;
earnings on intellectual asset calculation means for calculating earnings on intellectual asset of a specified enterprise by subtracting a value obtained by multiplying the return on financial assets to the financial assets and a value obtained by multiplying the return on tangible assets to the tangible fixed assets from the sum of the acquired gross operating profit and patent and other royalty income;
return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;
excess earnings on intellectual asset calculation means for calculating excess earnings on intellectual asset by multiplying the total assets to a value obtained by subtracting the average return on intellectual asset from the return on intellectual asset of a specified enterprise; and
output means for outputting the calculated excess earnings on intellectual asset to display means or the like.

Therefore, according to the present invention, it is possible to notify the user of the balance regarding the portion exceeding the industry average among the profits estimated to be generated based on off-balance intellectual assets (intangible intellectual assets not indicated on the balance sheet, and which show the profitability based on intellectual assets such as patents, know-how, brands and management efficiency) of the respective enterprises. Therefore, it is possible to clarify the positioning of the earnings on intellectual asset of the enterprise to be researched in relation to competitors.

Moreover, the present invention comprises:

management-finance information acquisition means for acquiring the total assets, operating profit, R&D cost, patent and other royalty income, financial assets, return on financial assets, tangible fixed assets and return on tangible fixed assets of a specified enterprise from a management-finance database containing management-finance information of enterprises;
earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;
return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;
excess earnings on intellectual asset calculation means for calculating excess earnings on intellectual asset by multiplying the total assets to a value obtained by subtracting the average return on intellectual asset from the return on intellectual asset of a specified enterprise; and
output means for outputting the calculated excess earnings on intellectual asset to display means or the like.

According to the present invention, it is possible to calculate the excess earnings on intellectual asset with the operating profit and R&D cost.

Further, the present invention comprises:

management-finance information acquisition means for acquiring the total assets, sales profit, administrative expenses, R&D cost, patent and other royalty income, financial assets, return on financial assets, tangible fixed assets and return on tangible fixed assets of a specified enterprise from a management-finance database containing management-finance information of enterprises;
earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income;
return on intellectual asset calculation means for calculating a return on intellectual asset of a specified enterprise through dividing the calculated earnings on intellectual asset of a specified enterprise by the total assets,- and calculating an average return on intellectual asset of a plurality of enterprises;
excess earnings on intellectual asset calculation means for calculating excess earnings on intellectual asset by multiplying the total assets to a value obtained by subtracting the average return on intellectual asset from the return on intellectual asset of a specified enterprise; and
output means for outputting the calculated excess earnings on intellectual asset to display means, printing means, recording medium, or another telecommunications device via a communication line.

According to the present invention, it is possible to calculate the excess earnings on intellectual asset with the sales profit, administrative expenses, R&D cost, patent and other royalty income and total assets.

Moreover, the present invention comprises:

management-finance information acquisition means for acquiring the total assets, operating profit, R&D cost included in manufacturing costs, R&D cost included in administrative expenses, patent and other royalty income, financial assets, return on financial assets, tangible fixed assets and return on tangible fixed assets of a specified_ enterprise from a management-finance database containing management-finance information of enterprises;
earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income; return on intellectual asset calculation means for calculating a return on intellectual asset of a specified enterprise through dividing the calculated earnings on intellectual asset of a specified enterprise by the total assets, and calculating an average return on intellectual asset of a plurality of enterprises; excess earnings on intellectual asset calculation means for calculating excess earnings on intellectual asset by multiplying the total assets to a value obtained by subtracting the average return on intellectual asset from the return on intellectual asset of a specified enterprise; and output means for outputting the calculated excess earnings on intellectual asset to display means or the like.

Further, the present invention comprises:

management-finance information acquisition means for acquiring the total assets, sales profit, R&D cost included in manufacturing costs, administrative expenses, R&D cost included in administrative expenses, patent and other royalty income, financial assets, return on financial assets, tangible fixed assets and return on tangible fixed assets of a specified enterprise from a management-finance database containing management-finance information of enterprises;
earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost included in manufacturing costs, R&D cost included in administrative expenses and patent and other royalty income;
return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;
excess earnings on intellectual asset calculation means for calculating excess earnings on intellectual asset by multiplying the total assets to a value obtained by subtracting the average return on intellectual asset from the return on intellectual asset of a specified enterprise; and
output means for outputting the calculated excess earnings on intellectual asset to display means or the like.

According to the present invention, it is possible to calculate the excess earnings on intellectual asset with the operating profit, R&D cost included in manufacturing costs, and R&D cost included in administrative expenses.

Further, the present invention comprises:

management-finance information acquisition means for acquiring the total assets, sales volume and return on intellectual asset of a specified enterprise in a specified period and average return on intellectual asset in a specified period from a management-finance database containing management-finance information of enterprises;
excess earnings on intellectual asset calculation means for calculating excess earnings on intellectual asset by multiplying the total assets to a value obtained by subtracting the average return on intellectual assets from the return on intellectual assets of the specified enterprise;

excess return on intellectual asset calculation means for calculating excess return on intellectual asset through dividing the calculated excess earnings on intellectual asset by the acquired sales volume; and

output means for outputting the calculated excess return on intellectual asset to display means, printing means, recording medium, or another telecommunications device via a communication line.

Further, the present invention comprises:

management-finance information acquisition means for acquiring the total assets, gross operating profit, patent and other royalty income, financial assets, return on financial assets, tangible fixed assets, sales volume and return on tangible fixed assets of a specified enterprise from a management-finance database containing management-finance information of enterprises;

earnings on intellectual asset calculation means for calculating earnings on intellectual asset of a specified enterprise by subtracting a value obtained by multiplying the return on financial assets to the financial assets and a value obtained by multiplying the return on tangible assets to the tangible fixed assets from the sum of the acquired gross operating profit and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume; and

output means for outputting the calculated excess return on intellectual asset to display means, printing means, recording medium, or another telecommunications device via a communication line.

Further, the present invention comprises:

management-finance information acquisition means for acquiring the rate of change in value added amount, labor distribution rate, rate of change in depreciation target tangible fixed assets, rate of change in the number of employees, total assets and return on intellectual asset of a specified enterprise, average return on intellectual asset and sales volume from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means or the like.

Therefore, according to the present invention, it is possible to calculate and display the relationship of the excess return on intellectual asset obtained through dividing excess profit strength of intellectual assets such as patents, know-how, brands and management efficiency in relation to other enterprises by the sales volume, and the contribution of intellectual assets (total factor productivity (TFP)) in the increase of the value added amount of the respective enterprises.

Moreover, according to the present invention, it is possible to determine that an enterprise showing a high value of excess return on intellectual asset in spite of its total factor productivity (TFP) is enthusiastic in creating intellectual property. In addition, it is possible to determine that an enterprise having a low value for both the total factor productivity (TFP) and excess return on intellectual asset has some kind of problem in terms of management.

Further, the present invention comprises:

management-finance information acquisition means for acquiring the rate of change in value added amount, labor distribution rate, rate of change in depreciation target tangible fixed assets, rate of change in the number of employees, total assets, gross operating profit, patent and other royalty income, financial assets, return on financial assets, tangible fixed assets, sales volume and return on tangible fixed assets of a specified enterprise from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

earnings on intellectual asset calculation means for calculating earnings on intellectual asset of a specified enterprise by subtracting a value obtained by multiplying the return on financial assets to the financial assets and a value obtained by multiplying the return on tangible assets to the tangible fixed assets from the sum of the acquired gross operating profit and patent and other royalty income;

return on intellectual asset calculation means for calculating a return on intellectual asset of a specified enterprise through dividing the calculated earnings on intellectual asset of a specified enterprise by the total assets; and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means or the like.

Further, the present invention comprises:

management-finance information acquisition means for acquiring the rate of change in value added amount, labor distribution rate, rate of change in depreciation target tangible fixed assets, rate of change in the number of employees, total assets, operating profit, R&D cost, patent and other royalty income, financial assets, return on financial assets, tangible fixed assets, sales volume and return on tangible fixed assets of a specified enterprise from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means or the like.

Further, the present invention comprises:

management-finance information acquisition means for acquiring the rate of change in value added amount, labor distribution rate, rate of change in depreciation target tangible fixed assets, rate of change in the number of employees, total assets, sales profit, administrative expenses, R&D cost, patent and other royalty income, financial assets, return on financial assets, tangible fixed assets, sales volume and return on tangible fixed assets of a specified enterprise from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means or the like.

Further, the present invention comprises:

management-finance information acquisition means for acquiring the rate of change in value added amount, labor distribution rate, rate of change in depreciation target tangible fixed assets, rate of change in the number of employees, total assets, operating profit, R&D cost included in manufacturing costs, R&D cost included in administrative expenses, patent and other royalty income, financial assets, return on financial assets, tangible fixed assets, sales volume and return on tangible fixed assets of a specified enterprise from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means or the like.

Further, the present invention comprises:

management-finance information acquisition means for acquiring the rate of change in value added amount, labor distribution rate, rate of change in depreciation target tangible fixed assets, rate of change in the number of employees, total assets, sales profit, R&D cost included in manufacturing costs, administrative expenses, R&D cost included in administrative expenses, patent and other royalty income, financial assets, return on financial assets, tangible fixed assets, sales volume and return on tangible fixed assets of a specified enterprise from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost included in manufacturing costs, R&D cost included in administrative expenses and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means or the like.

Further, the present invention comprises:

management-finance information acquisition means for acquiring the expected enterprise value profit, gross operating profit, patent and other royalty income, financial assets, return on financial assets, tangible fixed assets and return on tangible fixed assets of a specified enterprise from a management-finance database containing management-finance information of enterprises;

expected intellectual property profit calculation means for calculating expected intellectual property profit by subtracting the sum of a value obtained by multiplying the return on financial assets to the acquired financial assets and a value obtained by multiplying the return on tangible assets to the tangible fixed assets from the expected enterprise value profit;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income;

display data generation means for generating display data for associating the calculated expected intellectual property profit and earnings on intellectual asset for display; and

output means for outputting the display data to display means or the like.

Further, the present invention comprises:

management-finance information acquisition means for acquiring the expected enterprise value profit, operating profit, R&D cost, patent and other royalty income, financial assets, return on financial assets, tangible fixed assets and return on tangible fixed assets of a specified enterprise from a management-finance database containing management-finance information of enterprises;

expected intellectual property profit calculation means for calculating expected intellectual property profit by subtracting the sum of a value obtained by multiplying the return on financial assets to the acquired financial assets and a value obtained by multiplying the return on tangible assets to the tangible fixed assets from the expected enterprise value profit;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;

display data generation means for generating display data for associating the calculated expected intellectual property profit and earnings on intellectual asset for display; and

output means for outputting the display data to display means or the like.

Further, the present invention comprises:

management-finance information acquisition means for acquiring the fixed liabilities, return on fixed liabilities, total market value, return on total market value, gross operating profit, patent and other royalty income, financial assets, return on financial assets, tangible fixed assets and return on tangible fixed assets of a specified enterprise from a management-finance database containing management-finance information of enterprises;
expected intellectual property profit calculation means for calculating expected intellectual property profit by subtracting a value obtained by multiplying the return on financial assets to the financial assets and a value obtained by multiplying the return on tangible assets to the tangible fixed assets from the sum of a value obtained by multiplying the return on fixed liabilities to the acquired fixed liabilities and a value obtained by multiplying the return on total market value to the total market value;
earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income;
display data generation means for generating display data for associating the calculated expected intellectual property profit and earnings on intellectual asset for display; and
output means for outputting the display data to display means or the like.

Therefore, according to the present invention, it is possible to display the relationship of the earnings on intellectual asset based on the sales profit, R&D cost and patent and other royalty income, and the expected intellectual property profit based on the enterprise value in the market.

Further, the present invention comprises:

management-finance information acquisition means for acquiring the fixed liabilities, return on fixed liabilities, total market value, return on total market value, operating profit, R&D cost, patent and other royalty income, financial assets, return on financial assets, tangible fixed assets and return on tangible fixed assets of a specified enterprise from a management-finance database containing management-finance information of enterprises;
expected intellectual property profit calculation means for calculating expected intellectual property profit by subtracting a value obtained by multiplying the return on financial assets to the acquired financial assets and a value obtained by multiplying the return on tangible assets to the tangible fixed assets from the sum of a value obtained by multiplying the return on fixed liabilities to the acquired fixed liabilities and a value obtained by multiplying the return on total market value to the total market value;
earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;
display data generation means for generating display data for associating the calculated expected intellectual property profit and earnings on intellectual asset for display; and
output means for outputting the display data to display means or the like.

According to the present invention, an enterprise having a large earnings on intellectual asset value is anticipated to receive high market value. In addition, an enterprise having a low earnings on intellectual asset value is anticipated to have a large expected intellectual property profit.

Moreover, the present invention comprises:

management-finance information acquisition means for acquiring R&D cost in a first specified period of a specified enterprise from a management-finance database containing management-finance information of enterprises;
gazette acquisition means for acquiring registration gazettes based on patent applications filed by a specified enterprise within a second specified period from a database;
number-of-inventions acquisition means for acquiring the number of patents subjected to, before a predetermined time, registration or number of claims of the patents as the number of inventions from the acquired registration gazettes;
number-of-extinguished-inventions acquisition means for acquiring the number of extinguished inventions of patents extinguished before the predetermined time among the acquired number of inventions;
total number-of-effective-patents calculation means for calculating the total number of effective patents by subtracting the number of extinguished inventions from the acquired number of inventions;
total patent assets calculation means for calculating the total patent assets by multiplying the total number of effective patents to a value obtained through dividing the acquired R&D cost by the number of inventions; and
output means for outputting the calculated total patent assets to display means or the like.

The present invention comprises:

> management-finance information acquisition means for acquiring R&D cost in a first specified period of a specified enterprise from a management-finance database containing management-finance information of enterprises;
> gazette acquisition means for acquiring registration gazettes based on patent applications filed by a specified enterprise within a second specified period from a database;
> number-of-inventions acquisition means for acquiring the number of patents subjected to, before a predetermined time, registration or number of claims of the patents as the number of inventions from the acquired registration gazettes;
> number-of-extinguished-inventions acquisition means for acquiring the number of extinguished inventions of patents extinguished before the predetermined time among the acquired number of inventions;
> total number-of-effective-patents calculation means for calculating the total number of effective patents by subtracting the number of extinguished inventions from the acquired number of inventions;
> total patent assets calculation means for calculating the total patent assets by multiplying the total number of effective patents to a value obtained through dividing the acquired R&D cost by the number of inventions; and
> output means for outputting the calculated total patent assets to display means or the like.

Therefore, according to the present invention, it is possible to calculate an index corresponding to the total asset value of all effective patents owned by an enterprise.

Further, according to the present invention, since the total patent assets have been calculated with the patent or utility model subject to registration, it is possible to calculate an index corresponding to the amount of intellectual assets owned by an enterprise based on the R&D cost input per patent that was actually patented and became effective. Since this index of total patent assets shows the total asset value of patents owned by an enterprise, an enterprise showing a large value has a large total asset value based on patents, and it is possible to know how much intangible assets the enterprise to be researched is possessing.

Moreover, the present invention comprises:

> management-finance information acquisition means for acquiring R&D cost in a first specified period of a specified enterprise from a management-finance database containing management-finance information of enterprises;
> gazette acquisition means for acquiring registration gazettes based on patent applications filed by a specified enterprise within a second specified period from a database;
> number of inventions per applicant acquisition means for acquiring the number of patents subjected to, before a predetermined time, registration or number of claims of the patents as the number of registered inventions from each of the acquired registration gazettes, acquiring the number of applicants listed in each of the acquired gazettes, and acquiring the number of registered inventions per unit of applicant through dividing the acquired number of registered inventions by the number of applicants;
> number of registered inventions acquisition means for acquiring the total number of registered inventions as the number of inventions by integrating the acquired number of registered inventions per unit of applicant for the all acquired gazettes;
> number-of-extinguished-inventions acquisition means for acquiring the number of extinguished inventions of patents extinguished before the predetermined time among the acquired number of inventions;
> total number-of-effective-patents calculation means for calculating the total number of effective patents by subtracting the number of extinguished inventions from the acquired number of inventions;
> total effective patent remaining ratio calculation means for calculating the total effective patent remaining ratio through dividing the calculated total number of effective patents by the number of inventions;
> total patent assets calculation means for calculating the total patent assets by multiplying the total number of effective patents to a value obtained through dividing the acquired R&D cost by the number of registered inventions; and
> output means for outputting the calculated total patent assets to display means or the like.

According to the present invention, since the total patent assets is calculated by calculating the number of registered inventions per unit of applicant by acquiring the number of applicants listed in patent gazettes, and acquiring the number of inventions of the enterprise to be researched based on such number of registered inventions per unit of applicant, it is possible to calculate the accurate patent assets even if the patent inventions or registered utility models are co-owned applications.

Further, the present invention comprises:

> management-finance information acquisition means for acquiring R&D cost in a first specified period and sales volume in a second specified period of a specified enterprise from a management-finance database containing management-finance information of enterprises;

gazette acquisition means for acquiring registration gazettes based on patent applications filed by a specified enterprise within a third specified period from a database;

number-of-inventions acquisition means for acquiring the number of patents subjected to, before a predetermined time, registration or number of claims of the patents as the number of inventions from the acquired registration gazettes;

number-of-extinguished-inventions acquisition means for acquiring the number of extinguished inventions of patents extinguished before the predetermined time among the acquired number of inventions;

total number-of-effective-patents calculation means for calculating the total number of effective patents by subtracting the number of extinguished inventions from the acquired number of inventions;

total patent assets calculation means for calculating the total patent assets by multiplying the total number of effective patents to a value obtained through dividing the acquired R&D cost by the number of inventions;

display.data generation means for generating display data for associating the calculated total patent assets and the acquired sales volume for display; and

output means for outputting the display data to display means, printing means, recording medium, or another telecommunications device via a communication line.

Therefore, according to the present invention, it is possible to display the correlation of the total patent assets and sales volume and notify this to the user.

Moreover, according to the present invention, when an enterprise wishes to increase its sales volume, it is possible to know how much the total patent assets need to be increased. In addition, according to the present invention, when the total patent assets of the enterprise to be researched show a high value and the sales volume also shows a high value, it is possible to determine that such enterprise is increasing its sales volume based on its large total patent assets. Contrarily, when the total patent assets of the enterprise to be researched shows a low value and the sales volume also shows a low value, it is possible to determine that such enterprise is not improving its sales volume since it has small total patent assets.

Further, the present invention comprises:

management-finance information acquisition means for acquiring R&D cost in a first specified period and sales volume in a second specified period of a specified enterprise from a management-finance database containing management-finance information of enterprises;

gazette acquisition means for acquiring registration gazettes based on patent applications filed by a specified enterprise within a third specified period from a database;

number of inventions per applicant acquisition means for acquiring the number of patents subjected to, before a predetermined time, registration or number of claims of the patents as the number of registered inventions from each of the acquired registration gazettes, acquiring the number of applicants listed in each of the acquired gazettes, and acquiring the number of registered inventions per unit of applicant through dividing the acquired number of registered inventions by the number of applicants;

number of registered inventions acquisition means for acquiring the total number of registered inventions as the number of inventions by integrating the acquired number of registered inventions per unit of applicant for the all acquired gazettes;

number-of-extinguished-inventions acquisition means for acquiring the number of extinguished inventions of patents extinguished before the predetermined time among the acquired number of inventions;

total number-of-effective-patents calculation means for calculating the total number of effective patents by subtracting the number of extinguished inventions from the acquired number of inventions;

total effective patent remaining ratio calculation means for calculating the total effective patent remaining ratio through dividing the calculated total number of effective patents by the number of inventions;

total patent assets calculation means for calculating the total patent assets by multiplying the total number of effective patents to a value obtained through dividing the acquired R&D cost by the number of registered inventions;

display data generation means for generating display data for associating the calculated total patent assets and the acquired sales volume for display; and

output means for outputting the display data to display means or the like.

According to the present invention, since the total patent assets is calculated by calculating the number of registered inventions per unit of applicant by acquiring the number of applicants listed in patent gazettes, and acquiring the number of inventions of the enterprise to be researched based on such number of registered inventions per unit of applicant, it is possible to calculate the accurate patent assets and compare with the sales volume even if the patent inventions or registered utility models are co-owned applications.

BRIEF DESCRIPTION OF THE DRAWINGS

FIG. 1 is a diagram showing the overall configuration of an enterprise evaluation system;

FIG. 2 is a signal processing system block diagram of an enterprise evaluation device;

FIG. 3 is a diagram showing an example of management-finance information;

FIGs. 4A and 4B are diagrams showing an example of patent information;

FIG. 5 is a chart illustrating the respective indexes of "business, profit, and market value" calculated by the enterprise evaluation device and the calculating formula thereof;

FIG. 6 is a chart illustrating the respective indexes of "business, profit, and market value" calculated by the enterprise evaluation device and the calculating formula thereof;

FIG. 7 is a chart illustrating the respective indexes of "R&D, patent" calculated by the enterprise evaluation device and the calculating formula thereof;

FIG. 8 is a chart illustrating the respective indexes of "R&D, patent" calculated by the enterprise evaluation device and the calculating formula thereof;

FIG. 9 is a chart illustrating the respective indexes of "patent portfolio" calculated by the enterprise evaluation device and the calculating formula thereof;

FIG. 10 is a chart showing the annual transition of the total factor productivity (TFP) index calculated regarding the three major automobile makers;

FIG. 11 is a diagram showing a display example of associating and displaying the total factor productivity (TFP) and excess return on intellectual asset calculated regarding the five pharmaceutical companies;

FIG. 12 is a diagram showing a display example of associating and displaying the earnings on intellectual asset (EOIA) and expected intellectual property profit (EIPP) calculated regarding the six prominent companies in the precision equipment industry;

FIG. 13 is a diagram associating and representing the patent profitability $\alpha$ and return on intellectual asset (ROIA) in the chemical industry;

FIG. 14 is a diagram showing a display example of associating and displaying the patent profitability $\beta$ and earnings on intellectual asset (EOIA) in the chemical industry;

FIG. 15 is a diagram associating and representing the total patent assets and sales volume in the chemical industry;

FIG. 16 is a diagram associating and representing the total patent assets and sales volume in the electrical equipment industry;

FIG. 17 is a diagram showing a display example of associating and displaying the R&D cost ratio $\delta$ and excess earnings on intellectual asset (EXEOIA) in the chemical industry;

FIG. 18 is a diagram showing a display example of associating and displaying the R&D cost ratio $\delta$ and excess earnings on intellectual asset (EXEOIA) in the electrical equipment industry;

FIG. 19 is a processing flowchart upon calculating and outputting the respective indexes;

FIG. 20 is a diagram showing a display example of an enterprise value evaluation input condition setting screen for selecting the conditions of the target industry or respective enterprises upon calculating the index for determining the enterprise value;

FIG. 21 is a diagram showing a display example of selecting the item of "(B) management-finance analytical index" from the enterprise value evaluation menu for selecting the type of index for evaluating the enterprise value;

FIG. 22 is a diagram showing a display example displaying, in a pulldown menu format, the respective indexes existing at the lower level of the "(B) management-finance analytical index";

FIG. 23 is a diagram showing a display example of selecting the item of "(R) research and development index" from the enterprise value evaluation menu for selecting the type of index for evaluating the enterprise value;

FIG. 24 is a diagram showing a display example displaying, in a pulldown menu format, the respective indexes existing at the lower level of the "(R) research and development index";

FIG. 25 is a diagram showing a display example of selecting the item of "(D) excess profit analytical index" from the enterprise value evaluation menu for selecting the type of index for evaluating the enterprise value;

FIG. 26 is a diagram showing a display example displaying, in a pulldown menu format, the respective indexes existing at the lower level of the "(D) excess profit analytical index";

FIG. 27 is a diagram showing an output condition setting screen of the calculated index.

FIG. 28 is a diagram representing the transition of the earnings on intellectual asset (EOIA) regarding the respective companies in the chemical industry;

FIG. 29 is a diagram representing the transition of the earnings on intellectual asset (EOIA) regarding the respective companies in the electrical equipment industry;

FIG. 30 is a diagram representing the transition of the return on intellectual asset (ROIA) regarding the respective companies in the chemical industry;

FIG. 31 is a diagram representing the transition of the return on intellectual asset (ROIA) regarding the respective companies in the electrical equipment industry;

FIG. 32 is a diagram representing the transition of the excess earnings on intellectual asset (EXEOIA) regarding the respective companies in the chemical industry;

FIG. 33 is a diagram representing the transition of the excess earnings on intellectual asset (EXEOIA) regarding the respective companies in the electrical equipment industry;

FIG. 34 is a diagram showing a display example of associating and displaying the total factor productivity (TFP) and excess earnings on intellectual asset (EXEOIA) in the chemical industry;

FIG. 35 is a diagram showing a display example of associating and displaying the total factor productivity (TFP) and excess earnings on intellectual asset (EXEOIA) in the electrical equipment industry.

## BEST MODE FOR CARRYING OUT THE INVENTION

Embodiments of the present invention are now explained with reference to the drawings.

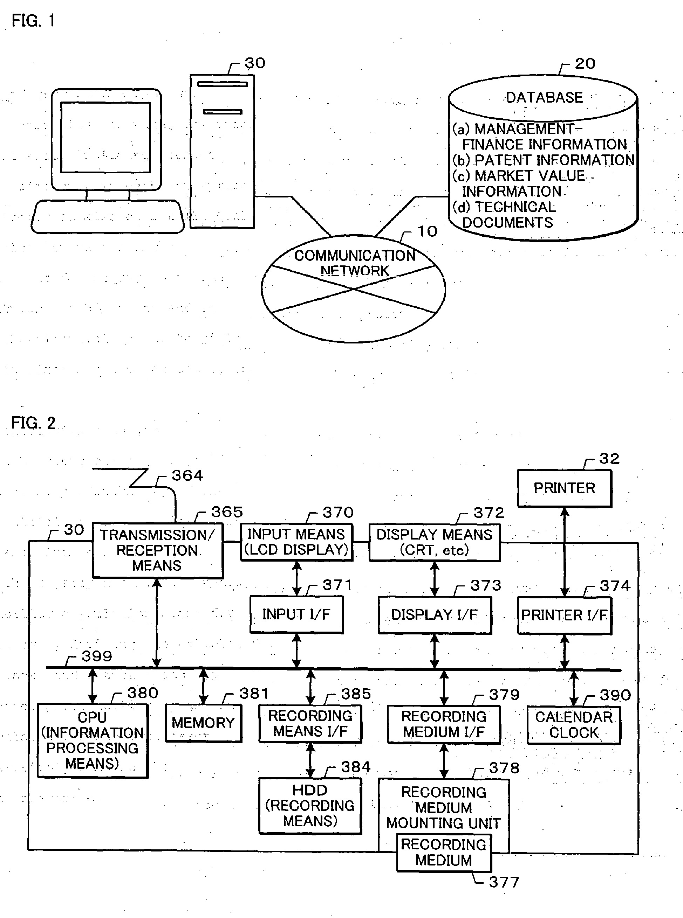

FIG. 1 is a diagram showing the overall configuration of an enterprise evaluation system according to the present invention.

As shown in FIG. 1, the enterprise value evaluation system is configured from a database 20 recording various types of information such as management-finance information, technical documents (in addition to patent information, information relating to utility models and technical journals, etc.), market value information (numerical value information of the market value), threshold for determining the validity of the enterprise value, determination result of the validity and category based on such threshold; an enterprise evaluation device 30 for inputting various types of information such as management-finance information, technical documents and market value information and outputting the judgment results of the validity of the enterprise value; and a communication network 10 such as the Internet or dedicated communication line for communicably connecting the enterprise evaluation device 30 and database 20.

Incidentally, the database 20 may be provided inside the enterprise evaluation device 30.

FIG. 2 is a signal processing system block diagram of an enterprise evaluation device 30 according to the present invention.

As shown in FIG. 2, the information transmission-reception unit of the enterprise evaluation device 30 is provided with a transmission-reception means 365 (including the functions of a management-finance information acquisition means, gazette acquisition means or output means) for transmitting and receiving information to and from another telecommunications device via the communication network 364 such as a public line or telecommunications network.

Further, the enterprise evaluation device 30 is also provided with an input interface 371 for acquiring various types of information input by the user via the input means 370 and transmitting this to the information processing means described later, and outputting display commands to an LCD or the like based on instructions from the information processing means, a display means 372 for displaying information such as images or texts, graphs or charts, a display interface 373 (including the function of an output means) for outputting image signals for display to the display means 372 based on the command from the information processing means, and a printer interface 374 for outputting information such as images or texts, graphs or charts to a printer 32 or the like. Incidentally, the input means 370 includes input devices such as a keyboard, mouse, tablet and the like.

Further, the enterprise evaluation device 30 is also provided with a recording medium mounting unit 378 for detachably mounting a recording medium 377, and a recording medium interface 379 (including the functions of a management-finance information acquisition means, gazette acquisition means or output means) for recording and reading various types of information in and from the recording medium 377. Incidentally, the recording medium 377 is a detachable recording medium in a magnetic recording format or optical recording format as represented by semiconductors such as a memory card, MO, magnetic disk and so on.

Moreover, the enterprise evaluation device 30 is also provided with an information processing means 380 for controlling the overall enterprise evaluation device 30, and a memory 381 configured from a ROM recording programs to be executed by the information processing means 380 and various constants, and a RAM which is a recording means to become the working area upon the information processing means 380 executing processing.

Further, the information processing means 380 is able to realize the various functions of a management-finance information acquisition means, gazette acquisition means, number-of-inventions acquisition means, number-of-extinguished-inventions acquisition means, total number-of-effective-patents calculation means, patent profitability calculation means, R&D cost ratio calculation means, expected intellectual property profit calculation means, display data generation means, and output means. Incidentally, instead of the information processing means 380 performing all of the processing to be performed by the foregoing means, a plurality of dedicated processing devices may be provided so that the respective processing devices can share and execute such processing in order to achieve the objects of the present invention.

Moreover, the enterprise evaluation device 30 is also provided with a recording means 384 such as a hard disk recording various types of information; for example, various constants relating to the processing of the enterprise evaluation device 30, attribute information upon communicably connecting to a telecommunications device on a network, connection information such as a URL (Uniform Resource Locators), gateway information, DNS (Domain Name System), management-finance information relating to the management of the enterprise, technical documents relating to patents, patent information, market value information, threshold for determining the enterprise value and determination results of validity based on such threshold; recording means interface 385 (including the functions of a management-finance information acquisition means, gazette acquisition means or output means) for reading information recorded in the recording means 384 and writing information into the recording means 384; and a calendar clock 390 for clocking the time.

The respective peripheral circuits of the information processing means 380, display interface 373, memory 381, recording means interface 385 and calendar clock 390 in the enterprise evaluation device 30 are connected to a bus 399, and the respective peripheral circuits can be controlled based on the processing program to be executed by the information processing means 380.

Incidentally, various databases of the management-finance information, technical documents and market value information may be stored in the recording means 384, provided by the storage medium 377 such as a CD-ROM, CD-RW, DVD or MO, or acquired from another telecommunications device (database 20 or the like) via the communication network 364.

Further, the enterprise evaluation device 30 can be realized by using various types of computers such as a personal computer or workstation. Moreover, computers may be connected via a network to share and implement the functions.

The management-finance information acquisition means of the transmission-reception means 365, recording means interface 385, recording medium interface 379 and information processing means 380 is capable of acquiring, from a management-finance information database (database 20, recording means 384, recording medium 377 or the like) recording management-finance information the gross operating profit, sales profit, operating profit, R&D cost, R&D cost included in manufacturing costs, administrative expenses, R&D cost included in administrative expenses, total assets, return on intellectual asset, average return on intellectual asset within a specified period, patent and other royalty income, financial assets, return on financial assets, tangible fixed assets, return on tangible fixed assets, rate of change in value added amount, labor distribution rate, rate of change in depreciation target tangible fixed assets, rate of change in the number of employees, average intellectual asset gross operating profit, expected enterprise value profit, fixed liabilities, return on fixed liabilities, total market value, sales volume, or return on total market value of a specified.

Further, the gazette acquisition means of the transmission-reception means 365, recording means interface 385, recording medium interface 379 and information processing means 380 is capable of acquiring registration gazettes based on patent applications or utility model applications filed by a specified enterprise in a specified period from a patent information database (database 20, recording means 384, recording medium 377 or the like).

Moreover, the earnings on intellectual asset calculation means of the information processing means 380 and the like is capable of calculating the earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income

Further, the earnings on intellectual asset calculation means of the information processing means 380 and the like is capable of calculating the earnings on intellectual asset by subtracting a value obtained by multiplying the return on financial assets to the financial assets and a value obtained by multiplying the return on tangible assets to the tangible fixed assets from the sum of the acquired operating profit and R&D cost and patent and other royalty income

Moreover, the earnings on intellectual asset calculation means of the information processing means 380 and the like is capable of calculating the earnings on intellectual asset by subtracting the administrative expenses, a value obtained by multiplying the return on financial assets to the financial assets and a value obtained by multiplying the return on tangible assets to the tangible fixed assets from the sum of the acquired sales profit and R&D cost and patent and other royalty income.

Further, the earnings on intellectual asset calculation means of the information processing means 380 and the like is capable of calculating the earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses, and patent and other royalty income.

Moreover, the earnings on intellectual asset calculation means of the information processing means 380 and the like is capable of calculating the earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost included in manufacturing costs, R&D cost included in administrative expenses, and patent and other royalty income.

Further, the return on intellectual asset calculation means of the information processing means 380 and the like is capable of calculating the return on intellectual asset through dividing the calculated earnings on intellectual asset by the total assets.

Moreover, the return on intellectual asset calculation means of the information processing means 380 and the like is capable of calculating the return on intellectual asset of a specified enterprise through dividing the calculated earnings on intellectual asset of a specified enterprise by the total assets, and calculating the average return on intellectual asset of a plurality of enterprises.

Further, the excess earnings on intellectual asset calculation means of the information processing means 380 and the like is capable of calculating the excess earnings on intellectual asset by multiplying the total assets to a value obtained by subtracting the average return on intellectual assets from the return on intellectual assets of the specified enterprise.

Moreover, the total factor productivity calculation means of the information processing means 380 and the like is capable of calculating the total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount.

Further, the expected intellectual property profit calculation means of the information processing means 380 and the like is capable of calculating the expected intellectual property profit by subtracting the sum of a value obtained by multiplying the return on financial assets to the acquired financial assets and a value obtained by multiplying the return on tangible assets to the tangible fixed assets from the expected enterprise value profit.

Moreover, the expected intellectual property profit calculation means of the information processing means 380 and the like is capable of calculating the expected intellectual property profit by subtracting a value obtained by multiplying the return on financial assets to the acquired financial assets and a value obtained by multiplying the return on tangible assets to the tangible fixed assets from the sum of a value obtained by multiplying the return on fixed liabilities to the acquired fixed liabilities and a value obtained by multiplying the return on total market value to the total market value.

Further, the excess return on intellectual asset calculation means of the information processing means 380 and the like is capable of calculating the excess return on intellectual asset through dividing the calculated excess earnings on intellectual asset by the acquired sales volume.

Moreover, the number-of-inventions acquisition means of the information processing means 380 and the like is capable of acquiring the number of patents subjected to, before a predetermined time, registration or number of claims of the patents as the number of inventions from the acquired registration gazettes.

Further, the number-of-extinguished-inventions acquisition means of the information processing means 380 and the like is capable of acquiring the number of extinguished inventions of patents extinguished before a predetermined time among the acquired number of inventions.

Moreover, the total number-of-effective-patents calculation means of the information processing means 380 and the like is capable of calculating the total number of effective patents by subtracting the number of extinguished inventions from the acquired number of inventions.

Further, the number of registered inventions acquisition means of the information processing means 380 and the like is capable of acquiring the total number of registered inventions as the number of inventions by integrating the acquired number of registered inventions per unit of applicant for all acquired gazettes.

Moreover, the total effective patent remaining ratio calculation means of the information processing means 380 and the like is capable of calculating the total number of effective patents by subtracting the number of extinguished inventions from the acquired number of inventions.

Further, the total patent assets calculation means of the information processing means 380 and the like is capable of calculating the total patent assets by multiplying the total number of effective patents to a value obtained through dividing the acquired R&D cost by the number of inventions.

Moreover, the total patent assets calculation means of the information processing means 380 and the like is capable of calculating the total patent assets by multiplying the total number of effective patents to a value obtained through dividing the acquired R&D cost by the number of registered inventions.

Further, the number of inventions per applicant acquisition means of the information processing means 380 and the like is capable of acquiring the number of registered patents subjected to, before a predetermined time, registration or number of claims of the patents as the number of registered inventions from each of the acquired registration gazettes, acquiring the number of applicants listed in each of the acquired gazettes, and acquiring the number of registered inventions per unit of applicant through dividing the acquired number of registered inventions by the number of applicants.

Moreover, the display data generation means of the information processing means 380 and the like is capable of generating display data for associating and displaying the calculated total factor productivity and excess return on intellectual asset.

Further, the display data generation means of the information processing means 380 and the like is capable of generating display data for associating and displaying the expected intellectual property profit and earnings on intellectual asset.

In addition, the output means of the display interface 373, transmission-reception means 365, recording means interface 385, recording medium interface 379, printer interface 374, information processing means 380 and the like is capable of outputting various types of information such as earnings on intellectual asset, return on intellectual asset, excess earnings on intellectual asset, excess return on intellectual asset, total patent assets and the like to a display means, printing means, recording medium, or another telecommunications device via a communication line.

Moreover, the output means of the display interface 373, transmission-reception means 365, recording means interface 385, recording medium interface 379, printer interface 374, information processing means 380 and the like is capable.of outputting display data to a display means, printing means, recording medium, or another telecommunications device via a communication line.

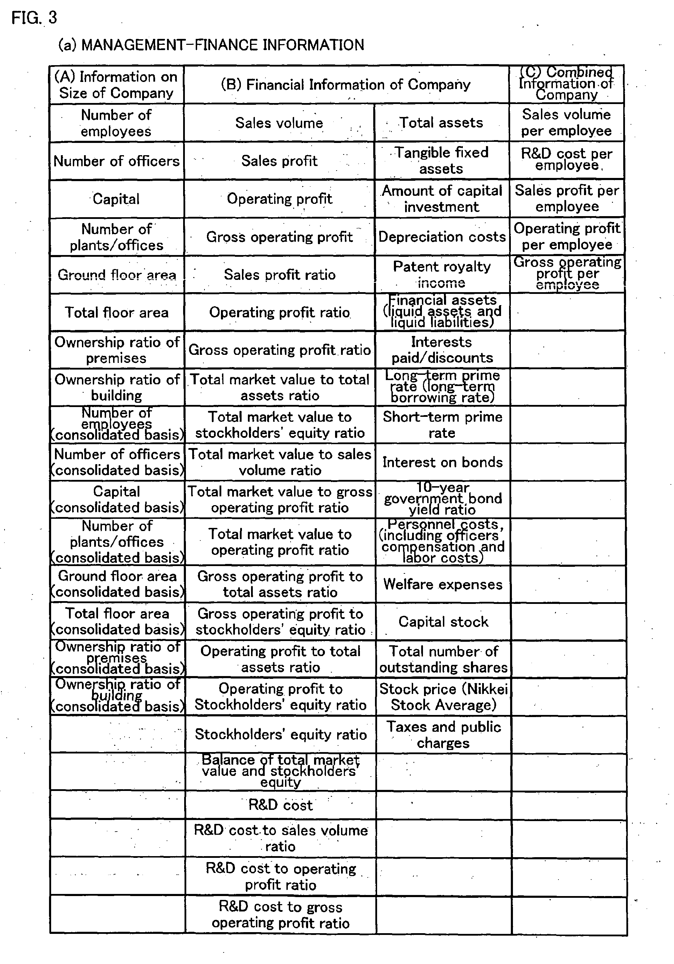

FIG. 3 is a chart representing an example of management-finance information recorded in the recording means of the database 20 or the like.

As shown in FIG. 3, management-finance information includes information showing the size of the company, information showing the financial information of the company, and combined information of the company calculated by combining the various types of information of the company. Incidentally, as the data of management-finance information, the annual security report of the company to be researched, and information acquired from commercial databases provided by newspaper publishers, research institutes and the like may be used.

Information showing the size of the company includes the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis).

The financial information of the company includes the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, R&D cost, R&D cost to sales volume ratio, R&D cost to gross operating profit ratio, gross operating profit ratio, R&D cost to operating profit ratio or gross operating profit.

Moreover, finance information of the company includes total assets, tangible fixed assets, amount of capital investment, depreciation costs, patent royalty income, financial assets (liquid assets and liquid liabilities), interests paid, discounts, long-term prime rate (long-term borrowing rate), short-term prime rate, interest on bonds, 10-year government bond yield ratio, personnel costs (including officers' compensation and labor costs), welfare expenses, capital stock, total number of outstanding shares, stock price (Nikkei Stock Average) or taxes and public charges.

The combined information of the company includes the sales volume per employee, R&D cost per employee, sales profit per employee, operating profit per employee, gross operating profit per employee and so on.

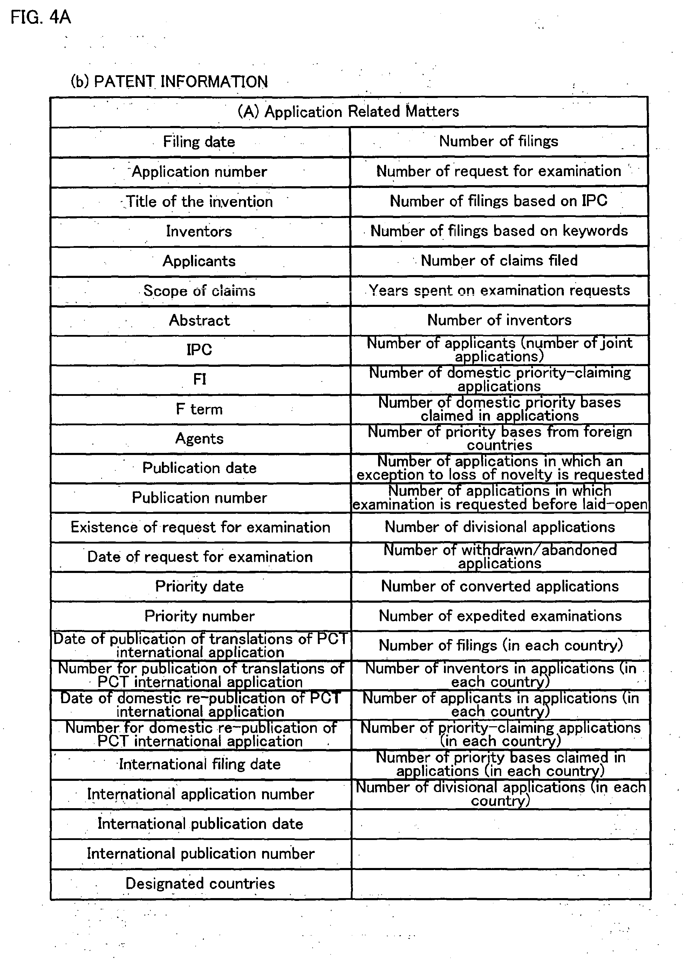

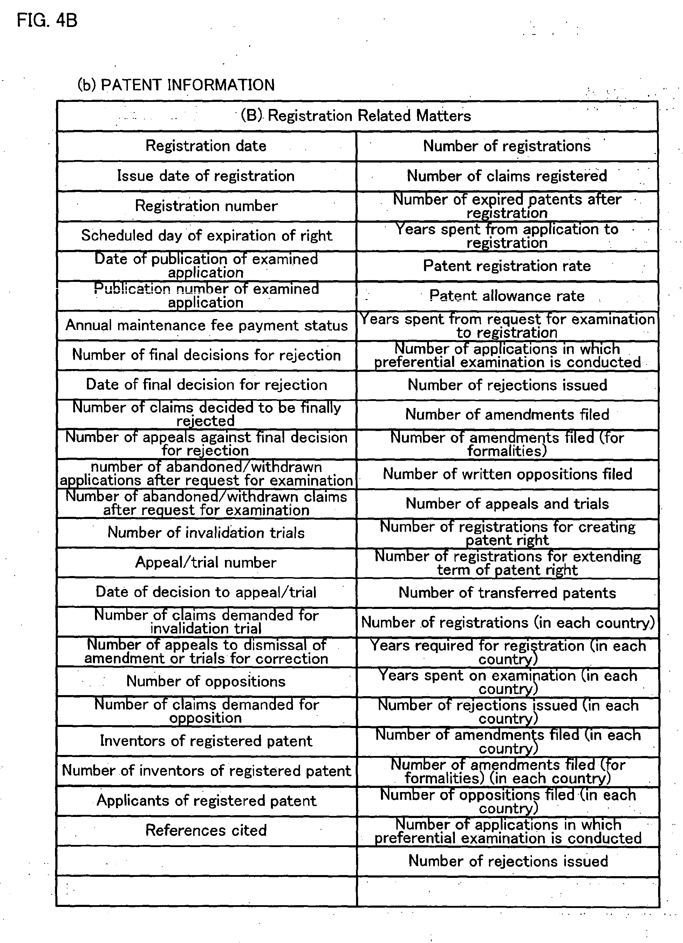

FIGs. 4A and 4B are diagrams showing an example of a technical document recorded in a recording means of the database 20 or the like.

As shown in FIGs. 4A and 4B, technical documents contain patent documents such as filing information and registration information of patents and utility models. As data of technical documents, for instance, the Industrial Property Digital Library database of the Japanese Patent Office, information relating to patents and utility models acquired from CD-ROM gazettes or other technical journals may be used.

Application information of an invention includes, for instance, per enterprise, the following: the filing date, application number, title of the invention, inventors, applicants, scope of claims, abstract, IPC, FI, F Term, agents, publication date, publication number, existence of request for examination, date of request for examination, priority date, priority number, date of publication of translations of PCT international application, number for publication of translations of PCT international application, date of domestic re-publication of PCT international application, number for domestic re-publication of PCT international application, international filing date, international application number, international publication date, international publication number, designated country, number of filings, number of examinations requested, number of filings based on IPC, number of filings based on keywords, number of claims filed, years spent on examination requests, number of inventors, number of applicants (number of joint applications), number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn/abandoned applications, number of converted applications, number of expedited examinations, number of filings in each foreign country, number of inventors in each foreign country, number of applicants in each foreign country, number of priority-claiming applications in each foreign country, number of priority bases claimed in applications in each foreign country or number of divisional applications in each foreign country.

Further, registration information of an invention includes, for example, per enterprise, the following: the registration date, issue date of registration, registration number, scheduled day of expiration of right, date of publication of examined application, publication number of examined application, annual maintenance fee payment status, number of final decisions for rejection, date of final decision for rejection, number of claims decided to be finally rejected, number of appeals against final decision for rejection, number of abandoned/withdrawn applications after request for examination, number of abandoned/withdrawn claims after request for examination, number of invalidation trials, appeal/trial number, date of decision to appeal/trial, number of claims demanded for invalidation trial, number of appeals to dismissals of amendment or trials for correction, number of oppositions, number of claims demanded for opposition, inventors of registered patent, number of inventors of registered patent, applicants of registered patent, references cited, number of registrations, number of claims registered, number of expired patents after registration, years spent from application to registration, patent registration rate, patent allowance rate, years spent from request for examination to registration, number of applications in which preferential examination is conducted, number of rejections issued, number of amendments filed, number of amendments filed for formalities, number of registrations for creating patent right, number of registrations for extending term of patent right, number of transferred patents, number of registrations in each country, years required for registration in each country, years spent on examination in each country, number of rejections issued in each country, number of amendments filed in each country, number of amendments filed for formalities in each country, number of oppositions filed in each country, number of applications in which preferential examination is conducted or number of rejections issued.

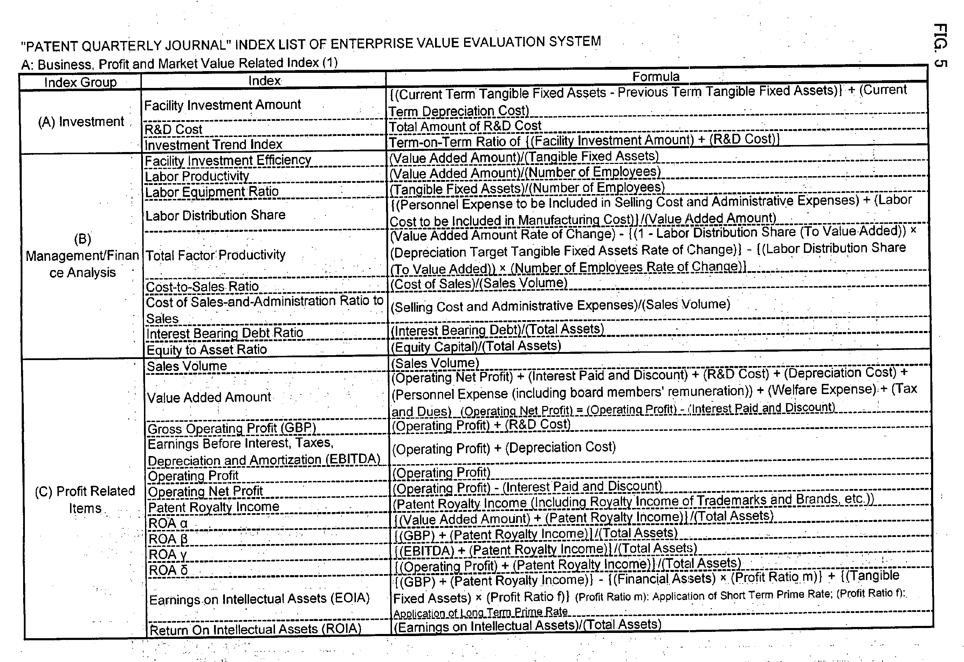

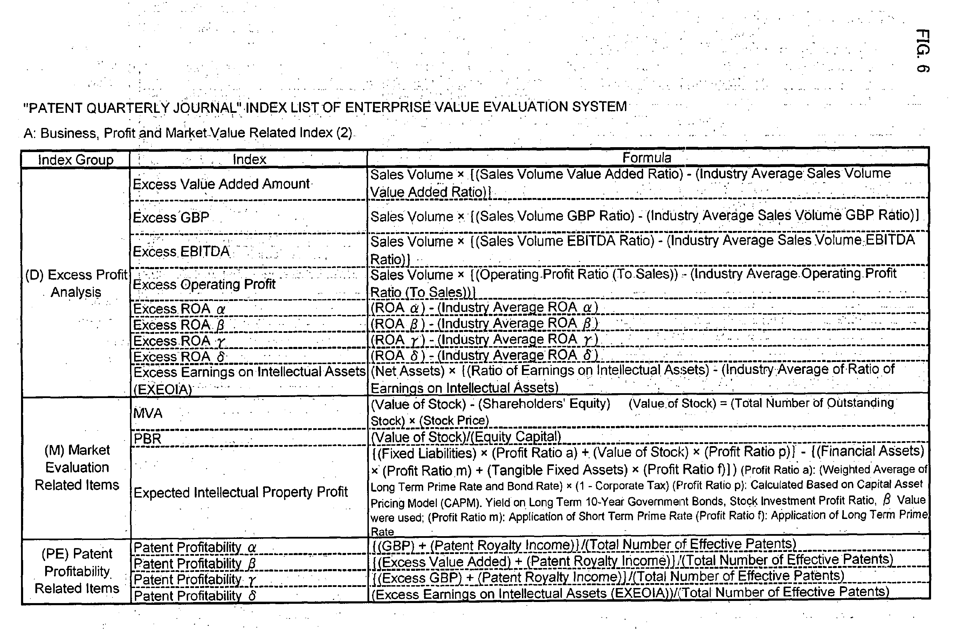

FIG. 5 and FIG. 6 are charts illustrating examples of the respective indexes of "business, profit, and market value" calculated by the enterprise evaluation device pertaining to the present invention and the calculating formula thereof.

As shown in FIG. 5 and FIG. 6, as the index groups, "(A) investment", "(B) management-finance analysis", "(C) profit related", "(D) excess profit analysis", "(M) market value related", and "(PE) patent profitability are provided, and the names and outline of the respective indexes and the calculating formula thereof are indicated in each of these groups.

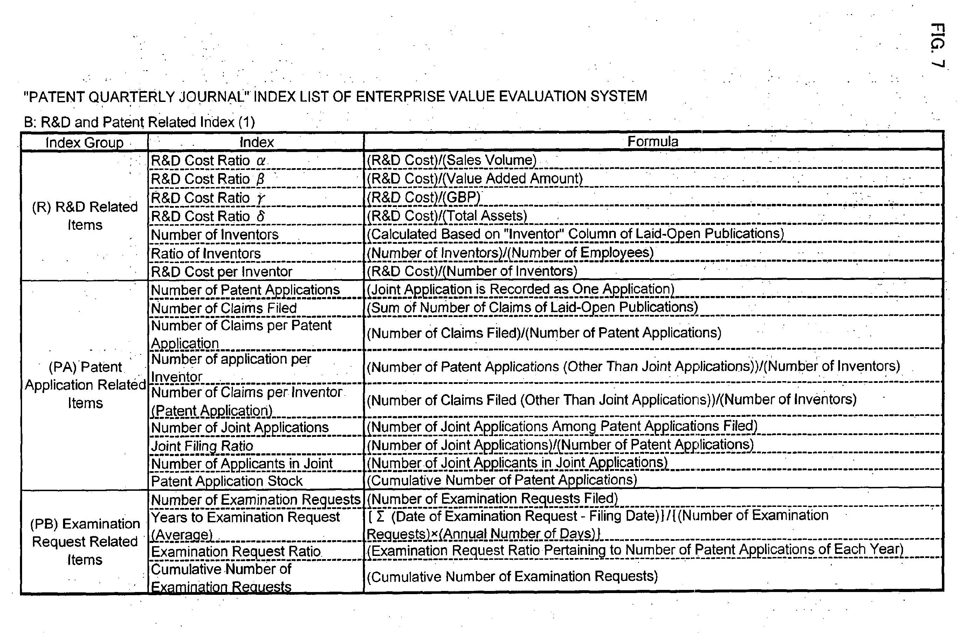

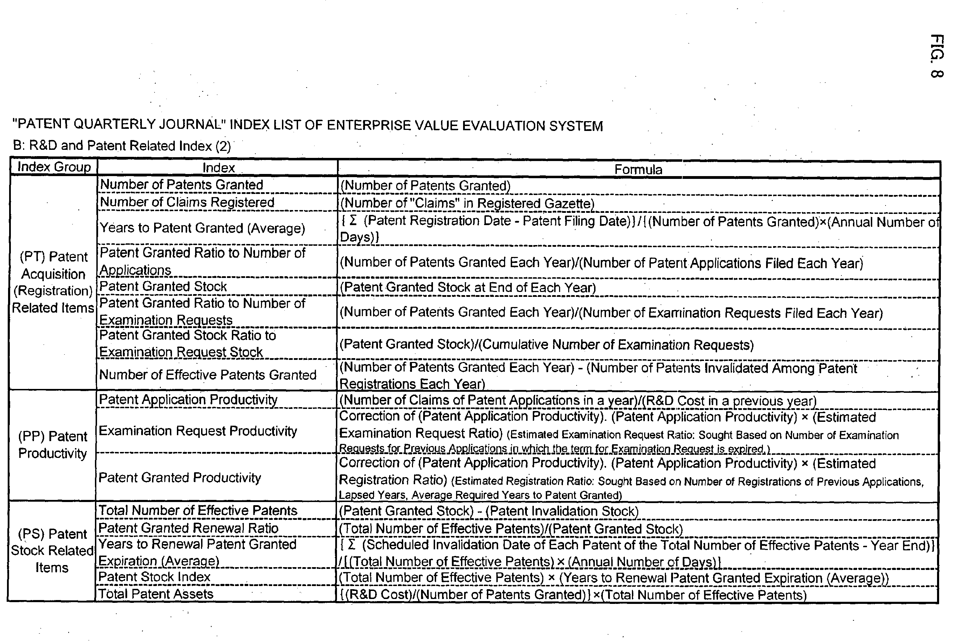

Further, FIG. 7 and FIG. 8 are charts illustrating examples of the index of "R&D, patent" calculated by the enterprise evaluation device pertaining to the present invention.

As shown in FIG. 7 and FIG. 8, as the index groups, "(R) research and development related", "(PA) patent application related", "(PB) examination request related", "(PT) patent acquisition (registration) related", "(PP) patent productivity" and "(PS) patent stock related" are provided, and the names and outline of the respective indexes and the calculating formula thereof are indicated in each of these groups.

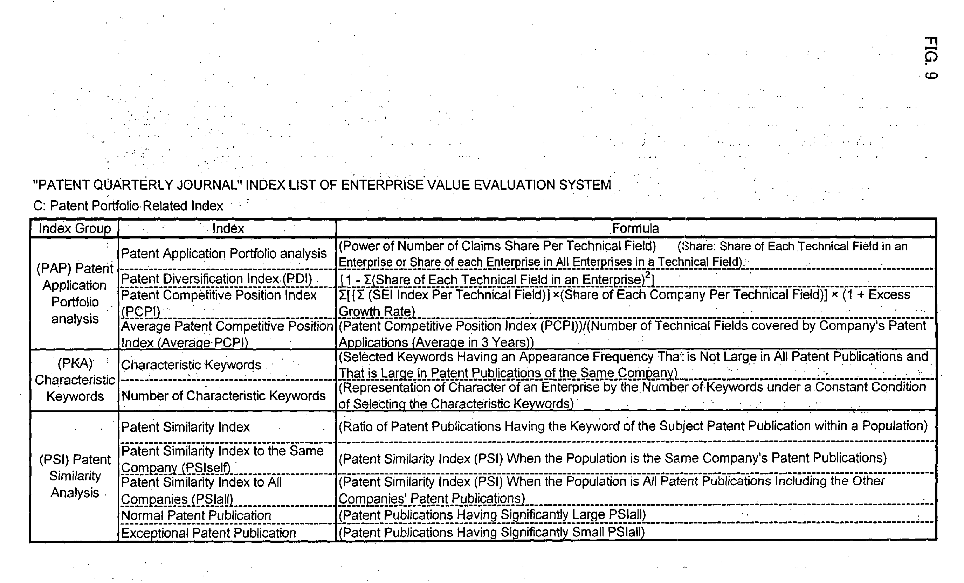

FIG. 9 is a chart illustrating an example of the "patent portfolio" index calculated by the enterprise evaluation device pertaining to the present invention.

As shown in FIG. 9, as the index groups, "(PAP) patent application portfolio analysis", "(PAK) characteristic keywords", and "(PSI) patent similarity ratio analysis" are provided, and the names and outline of the respective indexes and the calculating formula thereof are indicated in each of these groups.

Next, the respective indexes pertaining to the present invention are explained.

In the present invention, among the respective indexes shown in FIG. 5, the broad classifications below and the respective indexes included in the lower hierarchy are explained. Further, abbreviation of the respective indexes is defined as "investment index (A)" and so on.

Business, profit, and market value related index: Investment index (A)

    (1-1) Capital investment
    (1-2) R&D cost
    (1-3) Investment trend index

Business, profit, and market value related index: Management-finance analysis index (B)

    (2-1) Total factor productivity (TFP)

Business, profit, and market value related index: Profit related index (C)

    (3-1) Earnings on intellectual asset (EOIA)
    (3-2) Return on intellectual asset (ROIA)

Business, profit, and market value related index: Excess profit analysis index (D)

    (4-1) Excess earnings on intellectual asset (EXEOIA)
    (4-2) Excess return on intellectual asset

Business, profit, and market value related: Market value related index (M)

(5-1) Market value added (MVA)
(5-2) Price book value ratio (PBR)
(5-3) Expected intellectual property profit (EIPP)

Business, profit, and market value related: Patent profitability index (PE)

(6-1) Patent profitability $\alpha$
(6-2) Patent profitability $\beta$
(6-3) Patent profitability $\gamma$
(6-4) Patent profitability $\delta$

R&D patent related index: Research and development index (R)

(7-1) R&D cost ratio $\alpha$
(7-2) R&D cost ratio $\beta$
(7-3) R&D cost ratio $\gamma$
(7-4) R&D cost ratio $\delta$

R&D patent related index: Patent stock related index (PS)

(8-1) Total number of effective patents (PSTE)
(8-2) Total effective patent remaining ratio (patent granted renewal ratio; PSRR)
(8-3) Average remaining years of total effective patents (years to renewal patent granted expiration (average); PSAR)
(8-4) Patent stock index (PSIN)
(8-5) Total patent assets

The foregoing investment index (A) is an index representing the business attitude in the future from trend of anticipatory investment.
(1-1) Capital investment

Capital investment is an index contained in (A) investment index shown in FIG. 5, and is an index calculated by adding the "current depreciation cost" to a value obtained by subtracting the "previous term tangible fixed assets" from the "current tangible fixed assets". The calculating formula thereof is shown below (Formula 1).

```
Capital investment
= (current tangible fixed assets) - (previous term tangible
fixed assets) + (current depreciation cost) … (Formula 1)
```

Capital investment and its comparison with the previous term show the trend of anticipatory investment pertaining to business activities of enterprises, and the trend of this anticipatory investment is showing comparatively medium term investments. Incidentally, the foregoing tangible fixed assets may also be calculated using a value excluding assets such as land.
(1-2) R&D cost

R&D cost is an index contained in (A) investment index, and is an index showing the total amount of research and development invested by a specified enterprise in a specified period. The R&D cost and its comparison with the previous term may be considered to show the trend or attitude of anticipatory investment pertaining to comparatively mid-and-long term research and development activities of a specified enterprise.

(1-3) Investment trend index

Investment trend index is an index contained in (A) investment index, and is an index showing the change from the previous term of the sum of capital investment and R&D cost made by a specified enterprise in a specified period. The calculating formula thereof is shown below (Formula 2).

```
Investment trend index

= [{(capital investment in second specified period)

+ (R&D cost in second specified period)}

- {(capital investment in first specified period)

+ (R&D cost in first specified period)}]

/ {(capital investment in first specified period)

+ (R&D cost in first specified period)} … (Formula 2)
```

"First specified period" shows a period such as from April 1, 2001 to March 31, 2002; and
"Second specified period" shows a period such as from April 1, 2002 to March 31, 2003.

As a result of calculating the change from the previous term of the total amount of capital investment and R&D cost using (Formula 2) above and notifying this to the user, it is possible to speculate the comprehensive trend of anticipatory investment or the investment attitude regarding short-term and mid-and-long-term investments to be made by a specified enterprise.
The foregoing first specified period and second specified period may also be a period showing a specified period such as year, fiscal year or fiscal term.
Next, the total factor productivity (TFP) contained in the management-finance analysis index (B) is explained. The management-finance analysis index (B) is an index representing the degree of improvement in productivity resulting from technical innovation.
(2-1) Total factor productivity (TFP)

Total factor productivity is an index contained in (B) management-finance analysis, and is an index for measuring the "rate of technical progress" by deducting the rate of change of input in "equipment" and "work force" from the rate of change of the "value added amount" generated by a specified enterprise in a specified period. The calculating formula thereof is shown below (Formula 3).

```
Total factor productivity (TFP)

= (rate of change in value added amount) - [{1 - (labor

distribution rate)} × (rate of change in depreciation target tangible fixed assets)] - {(labor distribution rate) × (rate

of change in the number of employees)} … (Formula 3)
```

Total factor productivity (TFP) is an index showing the increased portion of production that cannot be explained from only the increase in input of productive factors such as equipment and work force. This increased portion of production is generally said to be based on technical innovation. Further, since this increased portion of production includes, in addition to significant technical innovations, improvement in technical proficiency of workers, improvement of management efficiency and realization of economic efficiency of the size of business, this can be considered to be the contribution of "intellectual assets" in a broad sense.

As with intellectual assets, off-balance intangible assets accounted in the enterprise value are increasing, and to calculate and compare the rate of change of the total factor productivity (TFP) of enterprises is extremely meaningful and important in terms of improving the enterprise value evaluation.

The significance of the calculating formulation of the total factor productivity (TFP) is in that while it is based on the premise of the production function of the constant returns to scale of the value added amount being doubled if the labor and equipment stock input is doubled, a distribution factor as the degree of contribution for improving the value added amount is respectively weighted on the rate of change of the equipment stock input and the rate of change of the labor input, and this index is calculated by subtracting these values from the rate of change in the value added amount.

Although "(number of employees) × (labor hours)" is generally used as the labor input, in light of the fact that may enterprises do not specify their labor hours, this has been represented with only the "number of employees" in the present embodiment. Nevertheless, when information concerning labor hours can be obtained, the labor input may be calculated upon adding the factor of labor hours.

Here, "value added amount" is the value added amount generated by a specified enterprise in a specified period and is used for measuring the value created by internal production factors (personnel, articles, money) among the sales volume. Since the value added amount distributed to the internal production factors is the same meaning as the total value generated before the distribution, this shows the total amount of value created by a specified enterprise in a specified period. Not only does the value added amount represent the results after distribution to the respective factors such as the operating profit and current profit, it is also able to capture the total value created before the distribution, and, therefore, this is useful in analyzing the profitability of a specified enterprise. The calculation example of a value added amount is shown below (Formula 4).

```
Value added amount

= (net operating profit) + (interest paid/discount) + (R&D cost) + (depreciation cost) + (personnel cost (including compensation for directors) + (welfare expense) + (tax and

public charges) … (Formula 4)
```

Since (net operating profit) = (operating profit) - (interest paid/discount), the above (net operating profit) + (interest paid/discount) is equal to an (operating profit).

For the calculation of the value added amount, there is an adding method of totaling the costs distributed to the respective input factors, and a deduction method of subtracting the external purchase price, and, logically, both methods roughly converge into the same value. Nevertheless, in reality, since there are differences in the disclosure status of accounting information of enterprises, it is likely that an error will arise from the difference in the data level used in the calculation with the deduction method. Thus, in order to enable the comparison with other enterprises with a certain degree of accuracy, the present invention is adopting the adding method so that there will be little error during the calculation of the value added amount.

Further, although R&D cost is often not added in a generally used value added amount, the R&D cost is added in the present invention. The reason for this is to accurately reflect the new values generated through production and sale before the enterprise input the R&D cost, and based on the fact that a large amount or ratio contained in the R&D cost is constituted from labor costs of researchers and others.

As shown in (Formula 3) above, upon calculating the total factor productivity (TFP), for instance, the management-finance information acquisition means acquires the rate of change in value added amount, labor distribution rate, rate of change in depreciation target tangible fixed assets, and rate of change in the number of employees of a specified enterprise from a management-finance database. Then, the total factor productivity calculation means of the information processing means 380 and the like calculates the total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount.

Next, the indexes contained in profit related index (C) are explained. Profit related index (C) is an index for comprehending the profit potential from multiple criteria.

(3-1) Earnings on intellectual asset (EOIA)

The earnings on intellectual asset is an index included in (C) profit related shown in FIG. 5, and is an index showing the amount of profit obtained by deducting the interest of financial assets and the interest of tangible assets that do not appear directly in the balance sheet from the so-called total business profit which is the sum of the gross operating profit (GBP) and the patent and other royalty income recorded as nonoperating profit. The calculating formula thereof is shown below (Formula 5).

Earnings on intellectual asset (EOIA)

= {(gross operating profit (GBP)) + (patent and other royalty income)} - {(financial assets) × (profit ratio m) + (tangible fixed assets) × (profit ratio f)} … (Formula 5)

Provided,

Gross operating profit (GBP)

= {(sales profit) + (R&D cost included in manufacturing cost)}

- {(administrative expenses) - (R&D cost included in administrative expenses)}

= (operating profit) + (R&D cost) … (Formula 6)


Operating profit = (sales profit) - (administrative expenses)

…(Formula 7)


R&D cost = (R&D cost included in manufacturing cost) + (R&D cost included in administrative expenses) … (Formula 8)

Financial assets: Term beginning and term end average of financial assets on the balance sheet (= (liquid assets) - (liquid liabilities))

Tangible fixed assets: Term beginning and term end average of tangible fixed assets on balance sheet

Profit ratio m: Return on financial assets (short-term prime rate may be applied)

Profit ratio f: Return on tangible fixed assets (long-term prime rate may be applied)

Since financial assets are acquired with relatively short-term loans', a short-term prime rate may be used in the profit ratio m. Further, since fixed assets are acquired with relatively long-term loans, a long-term prime rate value may be used in the profit ratio f. With respect to profit ratio m and profit ratio f, it is necessary to use a value according to the analytical purpose on a case-by-case basis. Moreover, the interest rate such as a long-term floating interest can also be freely selected for analysis.

As shown in (Formula 5) above, upon calculating the earnings on intellectual asset (EOIA), for instance, the management-finance information acquisition means acquires the gross operating profit, patent and other royalty income, financial assets, return on financial assets, tangible fixed assets, and return on tangible fixed assets of a specified enterprise from the management-finance database. Then, the earnings on intellectual asset calculation means of the information processing means 380 and the like calculates the earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income.

Further, as shown in (Formula 6) to (Formula 8), the earnings on intellectual asset may be calculated using the operating profit and R&D cost, and the earnings on intellectual asset may also be calculated using the sales profit, administrative expenses, R&D cost, operating profit, R&D cost included in the manufacturing cost, and R&D cost included in the administrative expenses. Administrative expenses may include other costs such as purchase costs and selling costs of products.

As shown in (Formula 5) above, the earnings on intellectual asset (EOIA) can be considered as the balance obtained by deducting the expected return to be obtained from the on-balance assets (assets on the balance sheet) from the total business profit. The earnings on intellectual asset (EOIA) is an index representing the amount of profit estimated to be generated based on off-balance intellectual assets (intangible assets not indicated in the balance sheet) under the assumption that there are profits that cannot be explained from on-balance assets.

Next, the gross operating profit (GBP) used in calculating the earnings on intellectual asset (EOIA) is explained briefly.

The gross operating profit (GBP) used in (Formula 5) above is the amount of profit shown in (Formula 6) above. (Formula 7) and (Formula 8) also represent the relationship of the profit index upon calculating the gross operating profit (GBP).

Pursuant to the revision of the accounting standards, as a general rule in Japan, R&D cost must be recorded entirely as expenses in the settlement of accounts after the term ending March 2000. Conventionally, there were numerous companies that did not disclose the breakdown of the R&D cost included in the manufacturing costs and general administrative expenses. Nevertheless, after the enforcement of these regulations, the amount of R&D cost pertaining to the calculation of profits and losses became clear. Thereupon, for the purpose of multilaterally analyzing the actual status of such R&D cost of the company, index referred to as the "gross operating profit (GBP)" has been developed.

This is an estimate of hypothetical profits (gross profit generated from the main business excluding research and development activities; that is, the manufacture and sale activities) sought by adding the R&D cost to the operating profit.

As a result of the R&D cost being entirely recorded as expenses, upon calculating profits and losses, the more research and development activities are positively engaged, the more operating profit will be compressed. Thus, while the importance of technology development (intellectual property) is being discussed, there is a problem in that it is difficult to grasp the actual condition of the profitability of the company only from the perspective of operating profit. The foregoing estimate is considered to provide a perspective to this problem.

This gross operating profit (GBP) is an index that is positioned roughly between the sales profit and operating profit. By using the gross operating profit simultaneously with the sales profit and operating profit, it will be possible to grasp the profitability of the enterprise from many angles. Incidentally, the sales profit is the gross margin sought by subtracting the manufacturing cost from the sales volume. Nevertheless, some R&D cost are included in manufacturing costs, whereas others are included in general administrative expenses. Thus, strictly speaking, the gross operating profit cannot be called a profit index positioned between the sales profit and operating profit.

(3-2) Return on intellectual asset (ROIA)

The return on intellectual asset is an index contained in (C) profit related shown in FIG. 5, and is an index showing ratio of the "earnings on intellectual asset (EOIA)" to "total assets". The calculating formula thereof is shown below (Formula 9).

```
Return on intellectual asset (ROIA)

= (earnings on intellectual asset (EOIA)) / (total assets)

...(Formula 9)
```

The earnings on intellectual asset (EOIA) may differ significantly depending on the size of the enterprise. Therefore, in order to enable the relative comparison of the profitability of the respective enterprises, the ratio of the earnings on intellectual asset (EOIA) to the size of total assets is calculated as the return on intellectual asset (ROIA). As a result of using this ROIA index, without regard to the size of the enterprise, the earnings on intellectual asset to the total assets can be compared under roughly the same conditions.

As shown in (Formula 9) above, upon calculating the return on intellectual asset (ROIA), for instance, the management-finance information acquisition means acquires the t total assets, gross operating profit, patent and other royalty income, financial assets, return on financial assets, tangible fixed assets, and return on tangible fixed assets of a specified enterprise from the management-finance database. Then, the earnings on intellectual asset calculation means of the information processing means 380 and the like calculates the earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income. Further, the return on intellectual asset calculation means of the information processing means 380 and the like calculates the return on intellectual asset through dividing the earnings on intellectual asset by the total assets.

Further, as shown in (Formula 6) to (Formula 8), the return on intellectual asset may be calculated using the operating profit and R&D cost, and the return on intellectual asset may be calculated using the sales profit, administrative expenses, R&D cost, operating profit, R&D cost included in the manufacturing cost, and R&D cost included in the administrative expenses.

By calculating and notifying the user of the return on intellectual asset, it is possible to relatively compare the profitability of the respective enterprises. Further, according to the present invention, it is possible to perform the comparative assessment of profitability of intellectual assets such as patents, know-how, brands and management efficiency of the respective enterprises under conditions that will not be influenced by the size of enterprises, or the size of value of the earnings on intellectual asset.

Next, the excess earnings on intellectual asset (EXEOIA) contained in the excess profit analysis index (D) is explained. The excess profit analysis index (D) is and index for comprehending the creation and utilization of intellectual assets based on the value of excess profit.

(4-1) Excess earnings on intellectual asset (EXEOIA)

The excess earnings on intellectual asset (Excess Earnings On Intellectual Asset) is an index contained in (D) excess profit analysis shown in FIG. 6, and is an index obtained by multiplying the total assets to the balance after subtracting the industry average amount of return on intellectual asset from the return on intellectual asset of a specified enterprise in a specified period. The calculating formula thereof is shown below (Formula 10.1).

```
Excess earnings on intellectual asset (EXEOIA)

= (total assets) × {(return on intellectual asset)

- (business category average return on intellectual asset)}

...(Formula 10.1)
```

As shown in (Formula 10.1) above, upon calculating the excess earnings on intellectual asset (EXEOIA), for instance, the management-finance information acquisition means acquires the total assets and return on intellectual asset of a specified enterprise in a specified period, and the average return on intellectual asset in a specified period from a management-finance database. Then, the excess earnings on intellectual asset calculation means of the information processing means 380 and the like calculates the excess earnings on intellectual asset by multiplying the total assets to a value obtained by subtracting the average return on intellectual asset from the return on intellectual asset of a specified enterprise.

The excess earnings on intellectual asset (EXEOIA) is an index indicating the portion exceeding the industry average among the amount of profit of a specified enterprise estimated to be generated based on off-balance intellectual assets (intangible assets not indicated in the balance sheet). Therefore, as a result of calculating the excess earnings on intellectual asset, it is possible to clarify the positioning of the earnings on intellectual asset of the enterprise to be researched in relation to competitors.

(4-2) Excess return on intellectual asset

The excess return on intellectual asset is an index obtained by multiplying the total assets to a balance obtained by subtracting the industry average amount from the earnings on intellectual asset of a specified enterprise in a specified period, and dividing the result by the sales volume. The calculating formula thereof is shown below (Formula 10.2).

```
Excess return on intellectual asset

= excess earnings on intellectual asset (EXEOIA) / (sales

volume)

= [(total assets) × {(return on intellectual asset) -

(business category average return on intellectual asset)}] /

(sales volume) ... (Formula 10.2)
```

As shown in (Formula 10.2) above, upon calculating the excess return on intellectual asset, for instance, the management-finance information acquisition means acquires the total assets and return on intellectual asset of a specified enterprise in a specified period, and the average return on intellectual asset in a specified period from a management-finance database. Further, the excess earnings on intellectual asset calculation means of the information processing means 380 and the like calculates the excess earnings on intellectual asset by multiplying the total assets to a value obtained by subtracting the average return on intellectual asset from the return on intellectual asset of a specified enterprise. Then, the excess return on intellectual asset calculation means calculates the excess return on intellectual asset through dividing the excess earnings on intellectual asset by the sales volume.

Further, as shown in (Formula 6) to (Formula 8) above, the excess earnings on intellectual asset and excess return on intellectual asset may be calculated using the operating profit and R&D cost, or the excess earnings on intellectual asset and excess return on intellectual asset may be calculated using the sales profit, administrative expenses, R&D cost, operating profit, R&D cost included in manufacturing costs, and R&D cost included in administrative expenses.

Next, indexes contained in the market related index (M) shown in FIG. 6 are explained. The market related index (M) is an index for comprehending the evaluation of intellectual assets in the market based on stock prices. The market related index (M) contains at least one or more among market value added (MVA), price book value ratio (PBR), and expected intellectual property profit (EIPP).

(5-1) Market value added (MVA)

The market value added is an off-balance enterprise value amount sought by deducting the stockholders' equity (amount of net assets) from the total market value. The calculating formula thereof is shown below (Formula 11).

```
Market value added (MVA)

= (total market value) - (stockholders' equity)

= {(total number of outstanding shares) × (stock price)} -

(stockholders' equity) ... (Formula 11)
```

Provided,

```
Total market value

= (total number of outstanding shares) × (stock price)

...(Formula 12)
```

As the stock price, the closing price or indicative price at the account end of each enterprise is used. In certain cases, a stock price at the time of analysis may also be used depending on the timing of analysis.

Since the market value added (MVA) is a value obtained by deducing the financial stockholders' equity amount from the enterprise value evaluation amount in the market (total market value), this can also be considered the evaluation of the off-balance assets of the enterprise in the market.

If the market value added (MVA) of an enterprise that possesses useful patents that will yield future profits without bad debts and deteriorated assets is 0 or less, it is possible that this enterprise is being underestimated in the market.

(5-2) Price book value ratio (PBR)

The price book value ratio is a value obtained through dividing the total market value by the equity capital. The calculating formula thereof is shown below (Formula 13).

```
Price book value ratio (PBR)

= (total market value) / (equity capital) … (Formula 13)
```

The price book value ratio (PBR) is an index showing the level of the stock price in relation to the stockholders' equity (amount of net assets) per share. Therefore, when this value is 1 or less, this means that the market is viewing this enterprise to be free of off-balance assets, or has latent loss (deterioration of on-balance assets or undisclosed debts) in excess of such asset value.
(5-3) Expected intellectual property profit (EIPP)

The expected intellectual property profit is the amount of expected return obtained by deducting theoretical expected return to be obtained from the financial assets and tangible fixed assets from the expected return to be obtained from the evaluation amount of the enterprise value in the market {(liabilities) + (total market value)}. The calculating formula thereof is shown below (Formula 14).

```
Expected intellectual property profit (EIPP)

= (expected enterprise value profit) – {(financial assets) ×

(profit ratio m) + (tangible fixed assets) × (profit ratio f)}

…(Formula 14)
```

Provided,
Profit ratio m = return on financial assets
Profit ratio f = return on tangible fixed assets
Here,

```
Expected enterprise value profit

= (fixed liabilities) × (profit ratio a) + (total market

value) × (profit ratio p) … (Formula 15)
```

Provided,
Profit ratio a = return on fixed liabilities
Profit ratio p = return on total market value
Then, the expected intellectual property profit (EIPP) can be represented as follows:

Expected intellectual property profit (EIPP)

= {(fixed liabilities) × (profit ratio a) + (total market

value) × (profit ratio p)} - {(financial assets) × (profit

ratio m) + (tangible fixed assets) × (profit ratio f)}

...(Formula 16)

Further, as shown in (Formula 14) above, upon calculating the expected intellectual property profit (EIPP), for instance, the management-finance information acquisition means acquires the expected enterprise value profit, financial assets, return on financial assets, tangible fixed assets, and return on tangible fixed assets of a specified enterprise from a management-finance database. Next, the expected intellectual property profit calculation means of the information processing means 380 and the like calculates the expected intellectual property profit by subtracting the sum of a value obtained by multiplying the return on financial assets to the acquired financial assets, and a value obtained by multiplying the return on tangible assets to the tangible fixed assets, from the expected enterprise value profit.

The "expected enterprise value profit" shown in (Formula 15) is an expected return based on the enterprise value, and shows the total of the interest rate of the long-term debt and corporate bond and the interest rate (dividends) to be paid to stockholders.

Moreover, as shown in (Formula 15) and (Formula 16) above, the expected intellectual property profit (EIPP) may also be calculated using management-finance information such as fixed liabilities, profit ratio a of fixed liabilities, total market value, profit ratio p of total market value, fixed liabilities, profit ratio a of fixed asset liabilities, total market value, profit ratio p of total market value, financial assets, profit ratio m of financial assets, tangible fixed assets, and profit ratio f of tangible fixed assets.

The expected intellectual property profit (EIPP) is the balance obtained by deducting the expected return sought from on-balance (on the balance sheet) assets from the expected return sought from the evaluation amount of the enterprise value in the market. This expected intellectual property profit can be considered to be the amount of profit expected by the market to be created by the respective enterprises with the off-balance intellectual assets (intangible assets not indicated in the balance sheet) as the source.

Therefore, in a market where this price is 0 or less, it is evident that the market is viewing an enterprise to have profitability less than the expected return to be obtained from the on-balance assets of such enterprise.

Further, when this amount is equal to or greater than the amount sought with the intellectual property profit (amount of profit obtained by deducting the interest of financial assets and interest of tangible fixed assets from the so-called total business profit in which royalty income of patents and so on is added to the gross operating profit (GBP)), it is evident that the market is evaluating such enterprise to have intellectual assets which are valued equivalent to or in excess of its amount of investment as the result of the R&D investment (recorded as expenses) and so on.

In a balance sheet, (assets) =(liabilities) + (capital).
Further, (Assets) = (liquid assets) + (tangible assets) + (intangible assets).
Thus, (intangible assets) = (assets) - {(liquid assets) + (tangible assets)}. Therefore, by substituting (assets), (intangible assets) = {(liabilities) + (capital)}-{(liquid assets) + (tangible assets)}.
The expected intellectual property profit (EIPP) is an index that applies the above to create intangible assets.

In the present embodiment, the (profit ratio m) of financial assets can be substituted with the short-term prime rate. Further, the (profit ratio f) of tangible fixed assets can be substituted with the long-term prime rate. Moreover, as described above, the short-term prime rate was used as the profit ratio m since financial assets are a relatively short-term repayment of debt. Further, the long-term prime rate was used as the profit ratio f since the repayment of such fixed assets will continue for a relatively long period of time.

Here, the "profit ratio a" of fixed liabilities is calculated from the weighted average of the after-tax interest rate of the long-term debt and corporate bond constituting the fixed liabilities. Specifically, the long-term prime rate is substituted as the interest rate of long-term debts, and the corporate bond rate is calculated by seeking the ratio of the corporate bond interest in relation to the corporate bond, and weighting them by the ratio of the long-term debt and corporate bond among the fixed liabilities to seek weighted average value. And {1 - (corporate tax rate)} is multiplied with the weighted average value sought above. The calculating formula thereof is shown below (Formula 17).

```
Profit ratio a

= [{(long-term prime rate) × (long-term debt) + (corporate bond rate of interest) × (corporate bond)} / {(long-term debt)

+ (corporate bond)}] × {(1-(corporate tax rate)) … (Formula

17)
```

The "profit ratio p" of the equity capital (= total market value) shown in (Formula 15) above is sought with the CAPM method.

CAPM is the abbreviation of (Capital Asset Pricing Model), also called as capital asset value model, and is one of the investment strategies to be used upon combining shares and safe assets (deposits and so on) upon conducting asset management. The calculating formula thereof is shown below (Formula 18).

```
Profit ratio p of equity capital

= (risk-free rate) + (β value) × {(market risk) - (risk-free

rate)} … (Formula 18)
```

A risk-free rate is the minimum interest rate to be guaranteed even when there is absolutely no risk, and a 10-year long-term government bond yield rate is used here. A market risk is a fluctuating risk (profit), and a 30-year simple average value of the return on stock (for instance, a value obtained by subtracting the average stock price of 30 years ago from the current average stock price).

The $\beta$ value is an index showing the difference upon comparison with the transition of the Nikkei Stock Average. The $\beta$ value is a numerical value representing the sensitivity of the enterprise in the stock market, and if this value exceeds 1, the price rise or price drop will become greater than the average transition of the stock market. Secure companies such as electrical power companies have a $\beta$ value that is close to 0, and high-risk, high-return enterprises such as IT venture companies have a high $\beta$ value.

As a general indication, when the stock price of a certain enterprise is compared with the transition of the Nikkei Stock Average, the value may be:

(1) 0.5 when there is no significant fluctuation;
(2) 1.0 if the fluctuation is roughly the same;
(3) 1.5 when there is significant fluctuation; or
(4) 2.0 when there is significant fluctuation and such fluctuation is fluid;

but there are cases where transition and fluctuation of stock prices of enterprises are sought and calculated extremely accurately.

Without limitation to the foregoing values, other values may be used as a risk-free rate or a market risk, and the $\beta$ value may be a free value that is not dependent on the foregoing calculation, and this may also be set forth with a value such as the rise and fall of interest rate or inflation rate.

Next, the indexes contained in the patent profitability index (PE) shown in FIG. 6 are explained. The patent profitability index (PE) is an index for estimating the profitability of a patent or utility model from the amount of profit per owned patent or utility model. The patent profitability index (PE) includes at least one of the indexes among patent profitability $\alpha$, $\beta$, $\gamma$ or $\delta$.

(6-1) Patent profitability $\alpha$

With patent profitability $\alpha$, since the "gross operating profit (GBP) + patent and other royalty income" is disposed as the numerator, and "number of effective patents" is disposed as the denominator, this can be considered as the "total business profit per effective patent". The calculating formula thereof is shown below (Formula 19).

```
Patent profitability α

= {(gross operating profit (GBP)) + (patent and other royalty income)} / (total number of effective patents (PSTE))

...(Formula 19)
```

Provided,

```
Gross operating profit (GBP)

= {(sales profit) + (R&D cost included in manufacturing cost)}

- {(administrative expenses) - (R&D cost included in administrative expenses)}

= (operating profit) + (R&D cost) ... (Formula 20)


Operating profit = (sales profit) - (administrative expenses)

...(Formula 21)


R&D cost = (R&D cost included in manufacturing costs) + (R&D cost included in administrative expenses) ... (Formula 22)


Total number of effective patents (PSTE)

= (total number of patent registrations among patents filed by a specified enterprise within a specified period) - (total

number of extinguished patents that extinguished by a predetermined time among the patent registrations filed by a

specified enterprise within a specified period) ... (Formula 23)
```

"Specified period" shows a period such as from January 1, 1994 to December 31, 1996
"Predetermined time" shows the time of tabulation such as at the last day of the year 1999, the last day of the year 2000 or the last day of the year 2001

As shown in (Formula 19 above, patent profitability α is sought through dividing the total amount of gross operating profit (GBP) and patent and other royalty income ("total business profit" generated by an enterprise each year) by the total number of effective patents. Therefore, the patent profitability $\alpha$ index shows the total business profit per effective patent.

In this embodiment, upon calculating patent profitability $\alpha$, the patent applications filed in 1994 onward up to a predetermined time when publications and registrations are available in the Japanese Patent Office's CD-ROM gazettes were counted regarding the patents subject to registration. If the data of patent publications and registrations can be obtained, these may be counted from an older year. Further, this is not limited to 1994 onward, and the respective indexes may be calculated by counting the data from a new year such as 2000 onward.

The total number of effective patents (PSTE) used in calculating patent profitability $\alpha$ is now explained briefly.

Total number of effective patents (PSTE), as shown in (Formula 23) above, is an index for showing the total number of patent registrations obtained by subtracting the total number of patents or utility model registrations that extinguished due to reasons such as term expiration from the total number of patents or utility models subjected to registration before a predetermined time (cumulative number of patent registrations (PTSP)) among the patent applications or utility model applications filed by a specified enterprise within a specified period. Therefore, the total number of effective patents (PSTE) represents the total number of registered patents or registered utility models based on patent applications or utility model applications filed within a specified period that are still existing at a predetermined time such as each year end.

The index of total number of effective patents (PSTE) may be considered to show the technical strength of an enterprise with respect to patents. Therefore, generally speaking, an enterprise having a large total number of effective patents (PSTE) value is considered to have superior competitive position.

Incidentally, in recent years, for the purpose of reducing patent administrative expenses, many enterprises are abandoning patents which are considered to be strategically insignificant, or rationalizing their strategy by carefully examining the subject matter of applications and thereby narrowing down the cased to be newly filed. Thus, it is necessary to keep in mind that the increase or decrease in the total number of effective patents (PSTE) does not necessarily directly represent the increase or decrease in the value of the overall patent stock index.

Since the gross operating profit (GBP) used upon calculating patent profitability $\alpha$ has been explained with reference to (Formula 6) to (Formula 8) above, the explanation thereof with reference to (Formula 20) to (Formula 22) is omitted.

(6-2) Patent profitability $\beta$

Patent profitability $\beta$ is an index sought through dividing the total amount of "excess value added amount", which represents the portions exceeding the industry average among the total amount of value created by the respective enterprises, and "patent and other royalty income" by the "total number of effective patents (PSTE)". Patent profitability $\beta$ represents the excess value added amount per effective patent. The calculating formula thereof is shown below (Formula 24).

```
Patent profitability β

= {(excess value added amount) + (patent and other royalty income)} / (total number of effective patents (PSTE))

...(Formula 24)
```

Provided,

Excess value added amount

= (sales volume) × {(ratio of value added amount to sales volume) – (business category average ratio of value added amount to sales volume)} … (Formula 25)

Ratio of value added amount to sales volume

= (value added amount) / (sales volume) … (Formula 26)

Whereas the index of foregoing patent profitability $\alpha$ is a "patent profitability" calculated by using the overall profits (total business profit), patent profitability $\beta$ is a "patent profitability" calculated by using only the portion exceeding the industry average among the generated added values (excess value added amount) and the patent and other royalty income. Therefore, this can be used to compare the patent profitability in the same business category.

Since the "value added amount" is an index that has been explained with reference to (Formula 4), the explanation thereof is omitted.

(6-3) Patent profitability $\gamma$

With patent profitability $\gamma$, the sum of "excess GBP" representing the portion exceeding the industry average among the business income obtained by the respective enterprises through manufacture/sale activities and "patent and other royalty income" is disposed as the numerator, and the "total number of effective patents" is disposed as the denominator. Thus, patent profitability $\gamma$ can be considered to show the excess total business profit amount per effective patent. The calculating formula thereof is shown below (Formula 27).

Patent profitability γ

= {(excess GBP) + (patent and other royalty income)} / (total number of effective patents) … (Formula 27)

Provided,

Excess GBP

= (sales volume) × {(ratio of GBP to sales volume) – (business category average ratio of GBP to sales volume)} … (Formula 28)

Ratio of GBP to sales volume

= (gross operating profit (GBP)) / (sales volume) … (Formula

29)

Whereas the index of foregoing patent profitability $\alpha$ is a "patent profitability" calculated by using the overall profits (total business profit), patent profitability $\gamma$ is a "patent profitability" calculated by using only the "excess GBP" which is the portion exceeding the industry average among
the gross operating profit (GBP) and the "patent and other royalty income". Therefore, patent profitability $\gamma$ can be used to compare the patent profitability in the same business category as with patent profitability $\beta$.
As a result of using the excess gross operating profit (excess GBP) shown in (Formula 27) above to calculate patent profitability $\gamma$, it will be possible to make an appropriate comparison with other companies in the same business category, and it will be easy to judge whether the enterprise to be researched is superior or inferior in comparison to the industry average.
(6-4) Patent profitability $\delta$

Patent profitability $\delta$ is an index sought through dividing the "excess earnings on intellectual asset (EXEOIA)" representing the portion exceeding the industry average among the amount of profit estimated to be generated by the respective enterprises based on off-balance intellectual assets (intangible assets not indicated in a balance sheet) by the total number of effective patents, and can be considered to be the amount of excess earnings on intellectual asset per effective patent. The calculating formula thereof is shown below (Formula 30).

```
Patent profitability δ

= (excess earnings on intellectual asset (EXEOIA)) / (total number of effective patents) … (Formula 30)
```

Based on (Formula 10.1),

```
Excess earnings on intellectual asset (EXEOIA)

= (total assets) × {(return on intellectual asset) - (business category average return on intellectual asset)}
```

Patent profitability $\delta$ is an index obtained through dividing the portion exceeding the industry average value of the "earnings on intellectual asset" which is the balance after deducting the expected return to be obtained from on-balance assets (assets indicated in the balance sheet) from the total business profit by the total number of effective patents. Using this patent profitability $\delta$ is an effective method for estimating the "quality" of patents based on a macro approach using accounting information.
Next, a part of the (R) research and development related index shown in FIG. 7 is now explained. The (R) research and development related index is an index for comprehending the research and development attitude from the size of investment made in research and development activities.
(7-1) R&D cost ratio $\alpha$ The R&D cost ratio $\alpha$ is an index showing the ratio of the "R&D cost" to "sales volume" of a specified enterprise in each specified period, and is a numerical value also referred to as the "R&D cost to sales volume ratio" or "R&D ratio". The calculating formula thereof is shown below (Formula 31).

```
R&D cost ratio α = (R&D cost) / (sales volume) …(Formula 31)
```

Provided,
R&D cost = R&D cost of a specified enterprise in a first specified period;
Sales volume = sales volume of a specified enterprise in a second specified period;

"First specified period" shows a period such as from April 1, 2001 to March 31, 2002; and
"Second specified period" shows a period such as from April 1, 2003 to March 31, 2004.

The first specified period and second specified period may be set as different periods as in the foregoing example, or may be set as the same period.

In the foregoing calculation example, on the premise that roughly 2 years are required until the results of research and development are reflected in the sales volume of products, a difference is provided between the investment period of the R&D cost (first specified period) and the period in which the investment was reflected in the sales volume (second specified period) upon calculating the R&D cost ratio $\alpha$. The technical results obtained from the research and development are likely to contribute to future business results, and not the business results of the current year. Nevertheless, as with a major corporation in which the annual R&D cost undergoes a relatively stable transition, the necessity to separately set a first specified period and a second specified period is small. Further, as with a venture company in which the R&D cost changes year by year, it is desirable to separately set the first specified period and the second specified period.

As shown in (Formula 31) above, upon calculating the R&D cost ratio $\alpha$, the R&D cost made by a specified enterprise in a specified period is divided by the sales volume of the specified enterprise in the specified enterprise.

With the volume of the sales volume which is one element used upon calculating the index of the R&D cost ratio $\alpha$, the production cost and manufacture cost in the sales volume will largely differ depending on the industrial structure of business categories and enterprises. Therefore, the large and small of the value of this R&D cost ratio $\alpha$ does not necessarily show the investment tendency in the research and development of a specified enterprise. Thus, it is desirable to simultaneously use the indexes of R&D cost ratios $\beta$, $\gamma$ or $\delta$ upon evaluating enterprises.

(7-2) R&D cost ratio $\beta$

The R&D cost ratio $\beta$ is an index showing the ratio of the "R&D cost" to "value added amount" of a specified enterprise in each specified period. The calculating formula thereof is shown below (Formula 32).

$$\text{R\&D cost ratio } \beta = (\text{R\&D cost}) / (\text{value added amount}) \dots (\text{Formula 32})$$

Provided,
R&D cost = R&D cost of a specified enterprise in a first specified period;
Value added amount = value added amount of a specified enterprise in a second specified period;
"First specified period" shows a period such as from April 1, 2001 to March 31, 2002; and
"Second specified period" shows a period such as from April 1, 2003 to March 31, 2004.

The first specified period and second specified period may be set as different periods as in the foregoing example, or may be set as the same period.

As shown in (Formula 32) above, upon calculating the R&D cost ratio $\beta$, the R&D cost made by a specified enterprise in a specified period is divided by the value added amount of the specified enterprise in the specified enterprise.

Since the R&D cost ratio $\beta$ is an index showing the degree of ratio distributed to the research and development activities among the total amount of value created by a specified enterprise in a specified period, this R&D cost ratio $\beta$ can be also referred to as the "research and development distribution ratio". Therefore, this R&D cost ratio $\beta$ can be considered to show a R&D cost ratio that is more essential than the index of the R&D cost ratio $\alpha$ showing the sales volume ratio shown in (Formula 31).

(7-3) R&D cost ratio $\gamma$

The R&D cost ratio $\gamma$ is an index showing the ratio of the "R&D cost" to "gross operating profit (GBP)" of a specified enterprise in each specified period. The calculating formula thereof is shown below (Formula 33).

```
R&D cost ratio γ = (R&D cost) / (gross operating profit (GBP))

...(Formula 33)
```

Provided,
R&D cost = R&D cost of a specified enterprise in a first specified period;
Gross operating profit = gross operating profit of a specified enterprise in a second specified period;
"First specified period" shows a period such as from April 1, 2001 to March 31, 2002; and "Second specified period" shows a period such as from April 1, 2003 to March 31, 2004.

The first specified period and second specified period may be set as different periods as in the foregoing example, or may be set as the same period. The gross operating profit (GBP) disposed as the denominator of (Formula 33) is the amount of profit shown in (Formula 6) above.

Upon calculating the R&D cost ratio γ, as shown in (Formula 33), the R&D cost ratio calculation means of the information processing means 380 and the like performs the calculation through dividing the R&D cost made by a specified enterprise in a first specified period by the gross operating profit of the specified enterprise in a second specified period.

The R&D cost ratio γ is an index showing the degree of ratio distributed to the research and development activities among the business profit obtained from the manufacture and sales activities of a specified enterprise in a specified period. Thus, an enterprise in which the value of the R&D cost ratio γ is calculated as a large value can be considered to have a high R&D investment tendency, and, an enterprise in which such value is calculated near 0 can be considered to have a tendency of securing profits of its current business rather than R&D investment.

From the nature of the index of the R&D cost ratio γ, there may be cases where this ratio is swollenly calculated since the operating profit significantly decreased due to one reason or another. In this case, since this does not mean that the R&D investment tendency is particularly high, care must be taken upon observing the index. Incidentally, in an enterprise in which the operating profit is 0 or less, the R&D cost ratio γ will be a meaningless value, and, therefore, the R&D cost ratio γ does not have to be calculated in this case.

(7-4) R&D cost ratio δ The R&D cost ratio δ is an index showing the ratio of the "R&D cost" to "total assets" of a specified enterprise-in each specified period. The calculating formula thereof is shown below (Formula 34).

```
R&D cost ratio δ = (R&D cost) / (total assets) ... (Formula 34)
```

Provided,
R&D cost = R&D cost of a specified enterprise in a first specified period;
Total assets = total assets of a specified enterprise in a second specified period;
"First specified period" shows a period such as from April 1, 2001 to March 31, 2002; and
"Second specified period" shows a period such as from April 1, 2003 to March 31, 2004.

The first specified period and second specified period may be set as different periods as in the foregoing example, or may be set as the same period.

As shown in (Formula 34) above, upon calculating the R&D cost ratio δ, for instance, the management-finance information acquisition means acquires the R&D cost and total assets of a specified enterprise from a management-finance database, and the R&D cost ratio calculation means of the information processing means 380 and the like calculates the R&D cost ratio δ through dividing the R&D cost by the gross operating profit.

Whereas the respective indexes of R&D cost ratio α, β and γ are for measuring the R&D cost ratio in relation to each size of profit (flow), the R&D cost ratio δ shown in (Formula 34) is for measuring the size of R&D cost viewed from the size of assets (stock).

Next, a part of the (PS) patent stock related indexes shown in FIG. 8 is explained. The patent stock related index (PS) is an index for speculating the stock of patents of utility models more accurately from existing patents or utility models.

(8-1) Total number of effective patents (PSTE)

Total number of effective patents (PSTE) is an index for showing the total number of patent registrations obtained by subtracting the total number of patents or utility model registrations that extinguished due to reasons such as term expiration from the total number of patents or utility models (cumulative number of patent registrations (PTSP)) subject to registration before a predetermined time among the patent applications or utility model applications filed by a specified enterprise within a specified period. Therefore, the total number of effective patents (PSTE) represents the total number of registered patents or registered utility models based on patent applications or utility model applications filed within a specified period that are still existing at a predetermined time such as each year end. The calculating formula thereof is shown below (Formula 35).

Total number of effective patents (PSTE)

= (total number of patent registrations among patents filed by a specified enterprise within a specified period) - (total number of extinguished patents that extinguished by a predetermined time among the patent registrations filed by a specified enterprise within a specified period)

= Cumulative number of patent registrations (PTSP) - (total number of extinguished patents that extinguished by a predetermined time among the patent registrations filed by a specified enterprise within a specified period) ... (Formula 35)

Provided,
"Specified period" shows a period such as from January 1, 1994 to December 31, 1996
"Predetermined time" shows the time of tabulation such as at the last day of the year 1999, the last day of the year 2000 or the last day of the year 2001.

Upon calculating the foregoing total number of effective patents (PSTE), for instance, the gazette acquisition means acquires the registration gazettes based on patent applications filed by a specified enterprise in a predetermined field within a specified period from a database. And, the number-of-inventions acquisition means acquires the number of patents subject to registration or number of claims of the patents as the number of inventions from the acquired registration gazettes within a predetermined period. Further, the number-of-extinguished-inventions acquisition means acquires the number of extinguished inventions from the acquired number of inventions of patents extinguished within a predetermined period. And, the total number-of-effective-patents calculation means calculates the total number of effective patents by subtracting the number of extinguished inventions from the acquired number of inventions.

Incidentally, upon calculating the total number of effective patents (PSTE), patent applications filed by a specified enterprise in a predetermined technical field within a specified period may be targeted. Further, in the case of a co-owned patent right, the number of patents may be divided by the number of co-owners. Here, the number of inventions per applicant acquisition means acquires the number of patents subject to registration or number of claims of the patents as the number of registered inventions, acquires the number of applicants described in each of the acquired gazettes, and acquires the number of registered inventions per unit of applicant through dividing the acquired number of registered inventions by the number of applicants. And, the number of registered inventions acquisition means integrates the acquired number of registered inventions per unit of applicant for the all acquired gazettes and acquiring the total number of registered inventions as the number of inventions.

Value of the total number of effective patents (PSTE) is increased by the number of patents newly subject to registration or newly registered utility models in each year, and is decreased by the number of patents or registered utility models that are extinguished in each year. Thus, when the number of extinguished registrations exceeds the number of new registrations, value of the total number of effective patents (PSTE) will decrease in comparison to the value of the previous year.

Value of the calculated total number of effective patents (PSTE) may be considered to show the technical strength of an enterprise in a monopolistic state. Therefore, generally speaking, an enterprise having a large total number of effective patents (PSTE) value is considered to have superior patent or technical strength. Incidentally, in recent years, for the purpose of reducing patent administrative expenses, many enterprises are abandoning patents which are considered to be strategically insignificant, or rationalizing their strategy by carefully examining the subject matter of applications and thereby narrowing down the cased to be newly filed. Thus, it is necessary to keep in mind that the increase or decrease in the total number of effective patents (PSTE) does not necessarily directly represent the increase or decrease in the value of the overall patent stock.

The foregoing registration gazettes may also include publications of patent registrations, publications of examined patent applications, publications of examined utility model applications or publications of utility model registrations. Further, when the registration gazettes are utility model gazettes, the patent application refers to a utility model application, and the patent subject to registration refers to a utility model subject to registration.

The index of cumulative number of patent registrations (PTSP) used in (Formula 35) above is now explained briefly.

Cumulative number of patent registrations (PTSP) is an index showing cumulative number of patent registrations (number of inventions) subject to registration by a predetermined time among the patent applications filed by a specified enterprise within a specified period. The calculating formula thereof is shown below (Formula 36).

```
Cumulative number of patent registrations (PTSP)

= cumulative number of patent registrations subject to registration by a predetermined time among the patent applications filed by a specified enterprise within a

specified period … (Formula 36)
```

Provided,

"Specified period" shows a period such as from January 1, 1994 to December 31, 1996

"Predetermined time" shows the time of tabulation such as at the last day of the year 1999, the last day of the year 2000 or the last day of the year 2001

Generally, cumulative number of patent registrations (PTSP) includes patents that lapsed due to the expiration of its term. However, patent rights may be subtracted based on those that were extinguished as a result of cancellation decision due to opposition or invalidation decision due to invalidation trial, or patent rights may be subtracted based on those that were extinguished due to abandonment, withdrawal or rejection. Further, the number of patent registrations could be increased when subject to registration as a patent as a result of filing an appeal against the decision of rejection, but this is omitted here. It will be possible to judge that enterprises having a large Value for the number of patent registrations (PTSP) are promptly making examination requests for patent applications and have acquired numerous patents.

In the embodiment of the present invention, upon counting the cumulative number of patent registrations (PTSP), the patent applications filed in 1994 onward up to a predetermined time when publications and registrations are available in the Japanese Patent Office's CD-ROM gazettes were counted regarding the patents subject to registration. If the data of patent publications and registrations can be obtained, these may be counted from an older year. Further, this is not

limited to 1994 onward, and the respective indexes may be calculated by counting the data from a new year such as 2000 onward.

(8-2) Total effective patent remaining ratio (patent granted renewal ratio; PSRR)

The total effective patent remaining ratio (PSRR) is an index obtained through dividing the calculated total number of effective patents (PSTE) by the cumulative number of patent registrations that were granted before a predetermined time among the patent applications filed by a specified enterprise within a specified period. The calculating formula thereof is shown below (Formula 37).

```
Total effective patent remaining ratio (PSRR)

= (total number of effective patents (PSTE)) / (cumulative number of patent registrations (PTSP)) … (Formula 37)
```

Provided,
"Specified period" shows a period such as from January 1, 1994 to December 31, 1996
"Predetermined time" shows the time of tabulation such as at the last day of the year 1999, the last day of the year 2000 or the last day of the year 2001

As shown in (Formula 37) above, upon calculating the total effective patent remaining ratio (PSRR), the total effective patent remaining ratio calculation means calculates the total effective patent remaining ratio through dividing the total number of effective patents (PSTE) by the number of inventions (cumulative number of patent registrations (PTSP)). Further, upon calculating the total effective patent remaining ratio (PSRR), patent applications filed by a specified enterprise in a predetermined technical field within a specified period may be targeted. Further, in the case of a co-owned patent right, the number of patents may be divided by the number of co-owners.
(8-3) Average remaining years of total effective patents (years to renewal patent granted expiration (average); PSAR)

Average remaining years of total effective patents (PSAR) is an index showing the average remaining period per patent right effectively remaining at a predetermined time. The calculating formula thereof is shown below (Formula 38).

```
Average remaining years of total effective patents (PSAR)

= [Σp=1P {(term expiration date of remaining patents) –

(predetermined time)}] / {(total number of effective patents

(PSTE)) × (average number of days in a year)} … (Formula 38)
```

Provided,
p: Respective effective patents of a specified enterprise subject to registration within a specified period and remaining up to a predetermined time
P: Total number of the effective patents of the specified enterprise subject to registration within the specified period and remaining up to the predetermined time
Predetermined time: time of tabulation such as at the last day of the year 1999, the last day of the year 2000 or the last day of the year 2001

Upon calculating the foregoing average remaining years of total effective patents (PSAR), for instance, the gazette acquisition means acquires registration gazettes based on patent applications filed by a specified enterprise in a predetermined technical field within a specified period from a database. And, the remaining period calculation means calculates a term expiration date of rights of each of rights of the acquired registration gazettes, and calculates the remaining period by subtracting the predetermined period from the term expiration date. Further, the patent stock index calculation means calculates a patent stock index by accumulating the calculated remaining period with all registration gazettes for patents surviving up to the predetermined period. And, the average remaining period of total effective patents calculation means calculates the average remaining period of total effective patents through dividing the patent stock index by the number of registration gazettes for patents surviving up to the predetermined period. Incidentally, upon calculating the remaining period, the number of claims described in the registration gazettes may be multiplied for calculating the remaining period. This is because the number of claims may also be considered to be the number of inventions. Moreover, as shown in Formula 38 above, the average remaining years of total effective patents may be calculated through dividing by the average number of days in a year, or the average remaining months of total effective patents may be calculated through dividing by the average number of days in a month.

Excluding some exceptions, the term of patent rights expires in 20 years from the filing date thereof. Thus, an enterprise or technical field having a large value of average remaining years of total effective patents (PSAR) shows that it has numerous patents that were filed recently, and

signifies that such enterprise or technical field will be in a monopolistic state for many years to come.

Contrarily, an enterprise or technical field having a small value of average remaining years of total effective patents (PSAR) shows that it has numerous patents with a short remaining period, and represents the decline of monopolistic technical strength of that enterprise or technical field.

(8-4) Patent stock index (PSIN) Patent stock index (PSIN) is an index showing the total period of the remaining period of patent rights surviving at a predetermined time such as at each year end. The calculating formula thereof is shown below (Formula 39).

$$\text{Patent stock index (PSIN)}$$

$$= [\Sigma_{p=i}^{P} \{(\text{term expiration date of remaining patents}) - (\text{predetermined time})\}] / (\text{average number of days in a year})$$

$$= (\text{total number of effective patents (PSTE)}) \times (\text{average remaining years of total effective patents (PSAR)}) \dots (\text{Formula 39})$$

Provided,

"Predetermined time" shows the time of tabulation such as at the last day of the year 1999, the last day of the year 2000 or the last day of the year 2001

Upon calculating the foregoing patent stock index (PSIN), for instance, the gazette acquisition means acquires registration gazettes for patents surviving up to a predetermined period among the patent applications filed by a specified enterprise in a predetermined technical field within a specified period from a database. And, the remaining period calculation means calculates a term expiration date of rights of each of rights of the acquired registration gazettes, and calculates the remaining period by subtracting the predetermined period from the term expiration date. Further, the patent stock index calculation means calculates a patent stock index by multiplying the calculated remaining period with all registration gazettes for patents surviving up to the predetermined period. Incidentally, upon calculating the remaining period, the number of claims described in the registration gazettes may be multiplied for calculating the remaining period.

As shown in (Formula 39) above, the patent stock index (PSIN) shows the total remaining period of patent effectively remaining. Assuming that the total number of effective patents (PSTE) calculated among target enterprises to be compared is the same, it should be considered that the patent stock is different depending on the individual length of the remaining period.

Therefore, the patent stock index (PSIN) is quantification of the overall value obtained by multiplying the average remaining years of total effective patents (PSAR) to the total number of effective patents (PSTE). As a result of using this patent stock index (PSIN), it is possible to compare the power of enterprises in retaining patents. An enterprise having a large patent stock index (PSIN) value has many effectively surviving patents and long remaining period, and has strong, exclusive technical strength based on inventions such as patents. Contrarily, an enterprise having a small patent stock index (PSIN) value has few effectively surviving patents and short remaining period, and has small, exclusive technical strength based on inventions.

(8-5) Total patent assets

Total patent assets is an index representing the total asset value of all effective patents owned by an enterprise by multiplying the total number of effective patents to a value obtained through dividing the R&D cost by the cumulative number of patent registrations (PTSP). The calculating formula thereof is shown below (Formula 40).

```
Total patent assets

= {(R&D cost) / (cumulative number of patent registrations

(PTSP))} × (total number of effective patents (PSTE))

...(Formula 40)
```

Provided,

R&D cost = R&D cost of a specified enterprise in a first specified period

"First specified period" shows a period such as from April 1, 2001 to March 31, 2002

Cumulative number of patent registrations (PTSP): refer to (Formula 36)

Total number of effective patents (PSTE): refer to (Formula 23)

As shown in (Formula 40) above, upon calculating the total patent assets, for instance, the management-finance information acquisition means acquires the R&D cost of a specified enterprise in a specified period. Then, the gazette acquisition means acquires the registration gazettes based on patent applications filed by a specified enterprise within a specified period from a database. Further, the number-of-inventions acquisition means acquires the number of patents subject to registration or the number of claims of the patents as the number of inventions up to a predetermined time from registration gazettes. Moreover, the number-of-extinguished-inventions acquisition means acquires the number of extinguished inventions up to a predetermined time from among the number of inventions. In addition, the total number-of-effective-patents calculation means calculates the total number of effective patents by subtracting the number of extinguished inventions from the number of inventions. And, the total patent assets calculation means calculates the total patent assets by multiplying the total number of effective patents to a value obtained through dividing the R&D cost by the number of inventions.

The reasons for using cumulative number of patent registrations (PTSP) as the index for dividing the R&D cost is to calculate based on patents that were actually patented and capable of functioning effectively, and to know the enthusiasm of the specified enterprise in patents based on the input of R&D cost per patent subject to registration.

Since the index of total patent assets is an index obtained by multiplying the total number of effective patents (PSTE) to the R&D cost input per patent subject to registration, this can be considered to be the total amount of intellectual assets owned by an enterprise. Therefore, an. enterprise having a large value for this index of total patent assets is acknowledged to have a high total asset value of patents, and it is thereby possible to determine how much intangible assets such enterprise owns.

With respect to the R&D cost value and cumulative number of patent registrations (PTSP) value upon calculating the total patent assets, a value of the same year or same fiscal year may be used, or the average value of several years or several fiscal years may be used, or a value of a year or

fiscal year considered to have mutual correlation in different years or different fiscal years may also be used for the calculation.

Further, in the calculating formula of the total patent assets shown in (Formula 40) above, although the R&D cost was divided by the cumulative number of patent registrations (PTSP), this may also be divided by the values of number of registered patent claims, number of patent applications, number of patent claims filed, number of examination requests, number of claims requested examination and so on. Moreover, in the calculating formula of the total patent assets shown in (Formula 40) above, although an example of multiplying the total number of effective patents (PSTE) was illustrated, the present invention is not limited to the total number of effective patents (PSTE), and the object of the present invention can also be achieved by multiplying the number of claims (number of inventions) of the total number of effective patents.

Further, in the calculating formula of the total patent assets shown in (Formula 40) above, although the R&D cost was disposed as the numerator, the present invention is not limited to the R&D cost, and, in addition to the R&D cost, other indexes of value added amount, earnings on intellectual asset (EOIA), gross operating profit (GBP), sales volume and so on may also be used to evaluate the enterprise value.

The display examples of the respective indexes are now explained below.

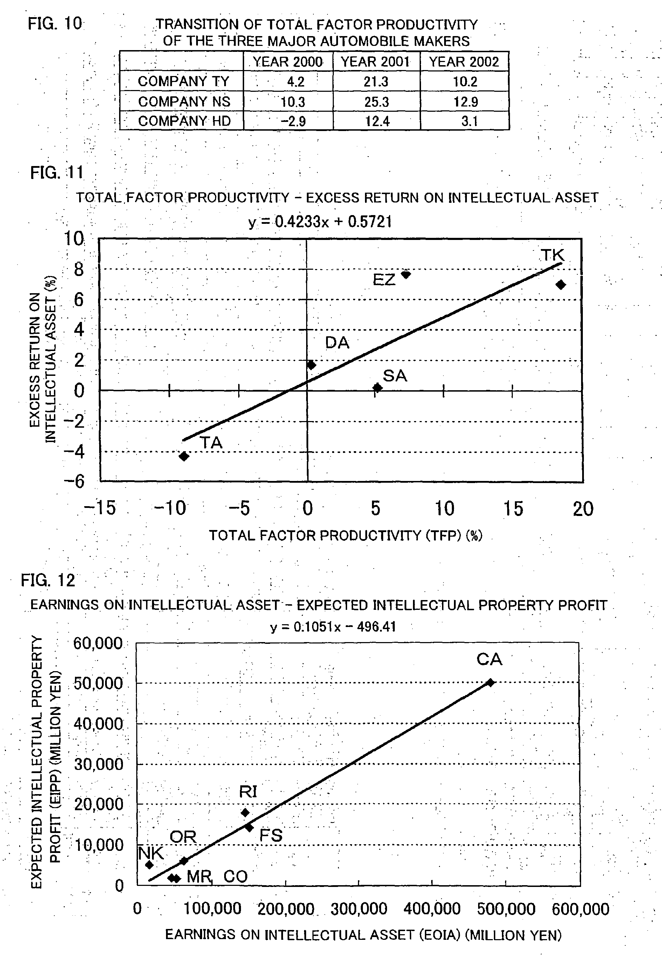

FIG. 10 is a chart showing the annual transition of the index of total factor productivity (TFP) calculated regarding 3 major automobile makers.

As shown in FIG. 10, the total factor productivity (TFP) of Company TY is making a transition at relatively high positive values, and it is acknowledged that there is contribution of broad intellectual assets. The total factor productivity (TFP) of Company NS is making a transition with the highest numerical value among the 3 companies, and is achieving double-digit growth in all years. The total factor productivity (TFP) of Company HD was a negative value in 2000, turned to a double-digit positive value in 2001, but then decreased to a single digit in 2002.

By observing FIG. 10, it is possible to read that Company NS has been engaged in the reconstruction of its business immediately after the enforcement of its revival plan, and sought the increase of the "value added amount" from the numerical value shown in FIG. 10. In other words, in addition to the increase of "operating profit", reduction of "labor costs", and compression of "fixed assets", the numerical values obtained in FIG. 10 are considered to be a result of exercising utmost efforts in improving the technical innovations and management efficiency of the company.

Like this, the index of total factor productivity (TFP) is an extremely useful index in knowing the trend of technical innovations or management efficiency of enterprises.

Upon displaying FIG. 10 on a display means or the like, foremost, the total factor productivity (TFP) is calculated with the total factor productivity calculation means of the information processing means 380 and the like. Then, display data for displaying the total factor productivity (TFP) is generated with the display data generation means of the information processing means 380 and the like, and this is output to the display means or the like. When displaying the total factor productivity (TFP) index, this may be represented in a three-dimensional graph as shown in FIG. 10, or a two-dimensional graph may be used, or this may be represented in a tabular form.

FIG. 11 is a diagram showing a display example of associating and displaying the total factor productivity (TFP) and excess return on intellectual asset calculated regarding the 5 pharmaceutical companies.

With the display example shown in FIG. 11, the total factor productivity (TFP) is plotted on the horizontal axis (x axis), and the excess return on intellectual asset is plotted on the vertical axis (y axis). Incidentally, in the vicinity of the plotted points, abbreviations such as TK and EZ are provided in order to identify the plotted companies. The straight line shown in the graph is a regression line showing the average value of the respective plotted points, and the calculating formula thereof is represented at the upper part of the graph.

Upon displaying FIG. 11, for instance, the total factor productivity (TFP) is calculated with the total factor productivity calculation means of the information processing means 380 and the like. Next, the excess earnings on intellectual asset is calculated with the excess earnings on intellectual asset calculation means of the information processing means 380 and the like, and the excess return on intellectual asset calculation means of the information processing means 380 and the like calculates the excess return on intellectual asset through dividing the excess earnings on intellectual asset by the sales volume. Then, display data for associating and displaying the total factor productivity (TFP) and excess return on intellectual asset is generated with the display data generation means of the information processing means 380 and the like, and this is output to the display means or the like. When associating and displaying the total factor productivity (TFP) index and excess return on intellectual asset, this may be represented in a three-dimensional graph as shown in FIG. 11, or a two-dimensional graph may be used, or this may be represented in a tabular form.

Since the excess return on intellectual asset on the vertical axis is a value obtained through dividing the portion exceeding the industry average value of the earnings on intellectual asset (EOIA) by the sales volume, it represents the excess profit strength of intellectual assets such as patents, know-how, brands and management efficiency in relation to competitors. The total factor productivity (TFP) on the horizontal axis is an index showing the contribution of intellectual assets in the increase of the value added amount of the respective enterprises.

By observing FIG. 11, the four companies of Company TK, Company EZ, Company SA and Company DA have positive total factor productivity (TFP) values, and Company TA is the only company that has a negative value. Among the above, Company EZ and Company DA are above the average regression line, and Company TK, Company SA and Company TA are below the average regression line. Moreover, when observing the inclination of the regression line, the higher the value of the total factor productivity (TFP) index is, the higher is the excess return on intellectual asset value. Therefore, it is possible to read that the total factor productivity (TFP) tends to secure excess profit.

Thus, even if an enterprise has a high total factor productivity (TFP) value, if the excess earnings on intellectual asset (EXEOIA) value is in the negative, it is highly likely that this enterprise has some kind of structural problem under management since this implies that the contribution of intellectual assets is being wiped out.

Further, even if an enterprise having a low total factor productivity (TFP) value is securing excess profit at present, since there are signs of weakness in the creation of intellectual assets, it is speculated that there are uncertainties on whether the enterprise is able to secure excess profit in the long run.

Company EZ is showing a high value of excess return on intellectual asset in spite of the total factor productivity (TFP) value. In the case of Company EZ, it is considered that this company is enthusiastic in creating intellectual property. Contrarily, Company TA shows a negative value for the total factor productivity (TFP) index and also a negative value for the excess return on intellectual asset index. Therefore, it

is speculated that this enterprise has some kind of administrative problem.

FIG. 12 is a diagram showing a display example of associating and displaying the earnings on intellectual asset (EOIA) and expected intellectual property profit (EIPP) calculated regarding 7 prominent companies in the precision machine industry.

With the display example shown in FIG. 12, the earnings on intellectual asset (EOIA) is plotted on the horizontal axis (x axis), and the expected intellectual property profit (EIPP) is plotted on the vertical axis (y axis). Incidentally, in the vicinity of the plotted points, abbreviations such as CA and RI are provided in order to identify the plotted companies. The straight line shown in the graph is a regression line showing the average value of the respective plotted points, and the calculating formula thereof is represented at the upper part of the graph.

Upon displaying FIG. 12, for instance, the earnings on intellectual asset (EOIA) are calculated with the earnings on intellectual asset calculation means of the information processing means 380 and the like. Next, the expected intellectual property profit (EIPP) is calculated with the expected intellectual property profit calculation means of the information processing means 380 and the like. Then, display data for associating and displaying the earnings on intellectual asset (EOIA) and expected intellectual property profit (EIPP) is generated with the display data generation means of the information processing means 380 and the like, and this is output to the display means or the like. When associating and displaying the earnings on intellectual asset (EOIA) and expected intellectual property profit (EIPP), this may be represented in a three-dimensional graph as shown in FIG. 12, or a two-dimensional graph may be used, or this may be represented in a tabular form.

As shown in FIG. 12, the relationship of the earnings on intellectual asset (EOIA) and expected intellectual property profit (EIPP) is distributed near the regression line for nearly all enterprises, and there seems to be strong correlation. In particular, Company CA has exceptionally high values for both the earnings on intellectual asset (EOIA) and expected intellectual property profit (EIPP), but is positioned near the regression line.

Contrarily, the remaining 6 companies are clustered at the lower left of FIG. 12. Company CA having a high value for the earnings on intellectual asset (EOIA) index means that the numerical value of {(gross operating profit (GBP)) + (patent and other royalty income)} is high; that is, this shows that the company has high sale profits, R&D cost, and patent and other royalty income.

Incidental to such sales profits, R&D cost, and patent and other royalty income, since the value of the expected intellectual property profit (EIPP) index is also high, it is evident that the market value is also high.

Meanwhile, Company MR and Company CO both show low values for the earnings on intellectual asset (EOIA) index, and it is speculated that this is why the expected intellectual property profit (EIPP) value is also low. According to FIG. 12, an enterprise with a high earnings on intellectual asset (EOIA) value also has a high market value, and also has a high expected intellectual property profit (EIPP) value. Therefore, in order to increase the expected intellectual property profit (EIPP), it is possible to speculate that the earnings on intellectual asset (EOIA) must be increased.

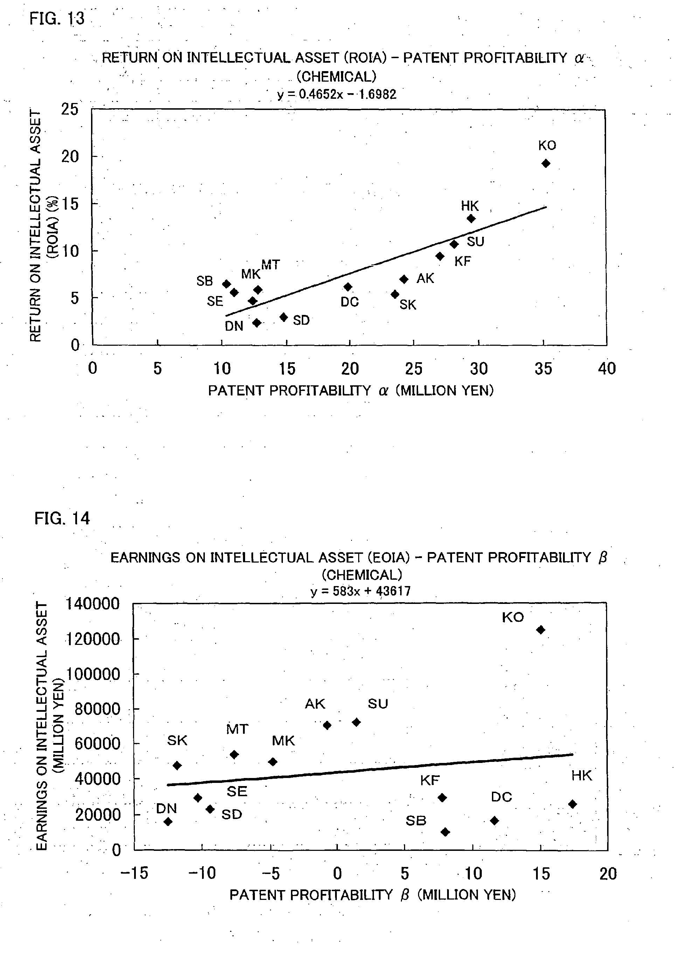

FIG. 13 is a diagram showing a display example of associating and displaying the patent profitability $\alpha$ and return on intellectual asset (ROIA).

With the display example shown in FIG. 13, the patent profitability $\alpha$ is plotted on the horizontal axis (x axis), and the return on intellectual asset (ROIA) is plotted on the vertical axis (y axis). Incidentally, in the vicinity of the plotted points, abbreviations such as KO and HK are provided in order to identify the plotted companies. The straight line shown in the graph is a regression line showing the average value of the respective plotted points, and the calculating formula thereof is represented at the upper part of the graph.

Upon displaying FIG. 13, for instance, the patent profitability $\alpha$ is calculated with the return on intellectual asset calculation means of the information processing means 380 and the like. Next, the return on intellectual asset (ROIA) is calculated with the expected intellectual property profit calculation means of the information processing means 380 and the like. Then, display data for associating and displaying the.patent profitability $\alpha$ and return on intellectual asset (ROIA) is generated with the display data generation means of the information processing means 380 and the like, and this is output to the display means or the like. When associating and displaying the patent profitability $\alpha$ and return on intellectual asset (ROIA), this may be represented in a three-dimensional graph as shown in FIG. 13, or a two-dimensional graph may be used, or this may be represented in a tabular form.

The return on intellectual asset (ROIA) is a value obtained through dividing the earnings on intellectual asset (EOIA) by the total assets. Since the earnings on intellectual asset (EOIA) is the amount of profit obtained by deducting the "financial assets" and "theoretical expected return to be obtained from "tangible fixed assets" from the sum of the "gross operating profit (GBP)" and "patent and other royalty income", it is an amount obtained through dividing the amount of profit estimated to be generated based on off-balance intellectual assets by the total assets. Therefore, by using this index in the evaluation, it is possible to compare profits based on intellectual property without being influenced by the size of enterprises.

Company KO and Company HK are positioned above the average regression line shown in FIG. 13 and show high values for the return on intellectual asset (ROIA). Four companies including Company MT, Company MK, Company SE and Company SB are positioned above the average regression line but show low values for the return on intellectual asset (ROIA). Seven companies; namely, Company SU, Company KF, Company AK, Company SK, Company DC, Company SD and Company DN are positioned below the average regression line.

Company KO shows high values for both patent profitability $\alpha$ and return on intellectual asset (ROIA). Contrarily, Company DN shows low values for both patent profitability $\alpha$ and return on intellectual asset (ROIA). As shown in FIG. 13, since the distribution of the respective enterprises is of an upward trend, it is considered that there is close correlation between patent profitability $\alpha$ and return on intellectual asset (ROIA).

By observing the chart represented by associating patent profitability $\alpha$ and return on intellectual asset (ROIA) shown in FIG. 13, it is possible to read that it is necessary to achieve a high patent profitability $\alpha$ value in order to improve the return on intellectual asset (ROIA). From this trend, Company KO can be viewed as an ideal enterprise, and, contrarily, Company DN can be judged as being an enterprise requiring corporate efforts.

FIG. 14 is a diagram showing a display example of associating and displaying the patent profitability $\beta$ and earnings on intellectual asset (EOIA).

With the display example shown in FIG. 14, the patent profitability $\beta$ is plotted on the horizontal axis (x axis), and the earnings on intellectual asset (EOIA) is plotted on the vertical axis (y axis). Incidentally, in the vicinity of the plotted points, abbreviations such as KO and SU are provided in order to identify the plotted companies. The straight line shown in the graph is a regression line showing the average value of the respective plotted points, and the calculating formula thereof is represented at the upper part of the graph.

Upon displaying FIG. 14, for instance, the patent profitability $\beta$ is calculated with the return on intellectual asset calculation means of the information processing means 380 and the like. Next, the earnings on intellectual asset (EOIA) are calculated with the earnings on intellectual asset calculation means of the information processing means 380 and the like. Then, display data for associating and displaying the patent profitability $\beta$ and earnings on intellectual asset (EOIA) is generated with the display data generation means of the information processing means 380 and the like, and this is output to the display means or the like.

When associating and displaying the patent profitability $\beta$ and earnings on intellectual asset (EOIA), this may be represented in a three-dimensional graph as shown in FIG. 14, or a two-dimensional graph may be used, or this may be represented in a tabular form.

As shown in FIG. 14, 6 companies; namely, Company KO, Company HK, Company DC, Company KF, Company SB and Company SU have positive patent profitability $\beta$ value; and 7 companies; namely, Company AK, Company MK, Company MT, Company SD, Company SE, Company SK and Company DN have negative patent profitability $\beta$ values.

Two companies; namely, Company KO and Company SU have positive patent profitability $\beta$ values and are positioned above the average regression line. Three companies; namely, Company SE, Company SD and Company DN have negative patent profitability $\beta$ values and are positioned below the average regression line.

Upon observing FIG. 14, it is possible to read that there is no particular correlation between the patent profitability $\beta$ value and the earnings on intellectual asset (EOIA). Nevertheless, since Company KO has a high patent profitability $\beta$ value and a high earnings on intellectual asset (EOIA) value, it is evident that Company KO has extremely superior earnings on intellectual asset per effective patent, and is a prominent enterprise.

Contrarily, Company DN has a low patent profitability $\beta$ value and a high earnings on intellectual asset (EOIA) value. Therefore, it is clear that this company is most likely not effectively utilizing patents. Like this, by associating the index of patent profitability $\beta$ and the index of earnings on intellectual asset (EOIA) and evaluating the enterprise thereby, it is possible to know the characteristics of the respective enterprises, and this will be useful in enterprise evaluation.

In FIG. 13 and FIG. 14, although the respective indexes were compared regarding the 13 companies in the chemical industry, enterprise evaluation can be conducted in other industries; for instance, electrical equipment industry, pharmaceutical industry, steel/non-steel/metal product industry, fiber/pulp/paper industry, ceramic industry, machinery/shipbuilding industry, automobile/transport equipment industry, information/telecommunication industry, electricity/gas industry and so on. Further, by comparing industries, it is possible to know the difference between industries and characteristics of each industry.

Further, with the display example shown in FIG. 13 and FIG. 14, although the relationship of certain patent profitability indexes and a representative index relating to earnings on intellectual asset was represented, the present invention is not limited to the display examples shown in FIG. 13 and FIG. 14, and the mutual relationship upon comparing other indexes may be also be observed.

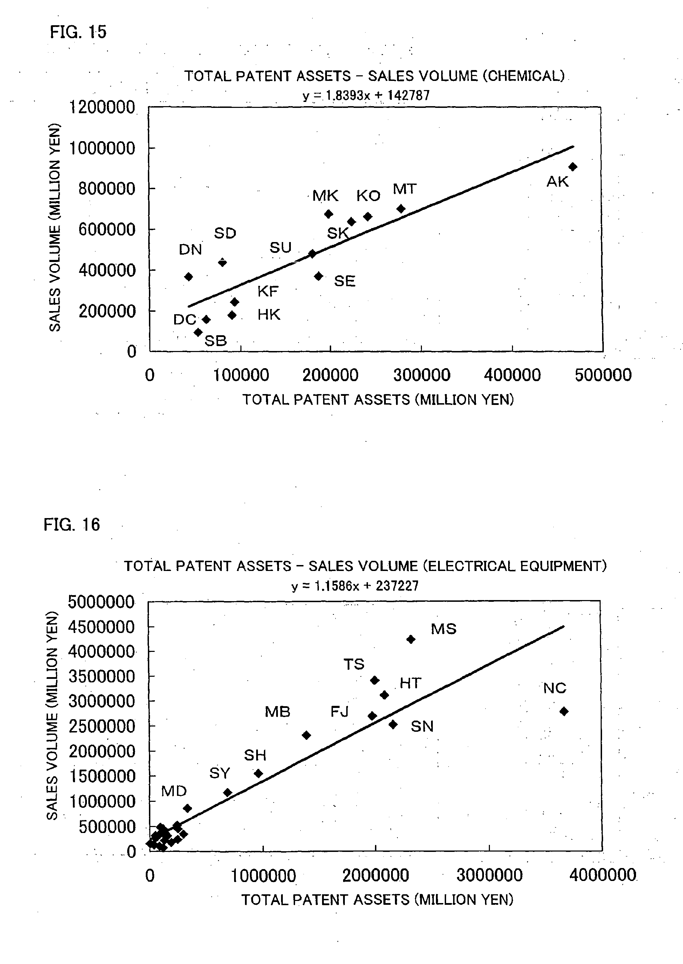

FIG. 15 is a display example of associating and displaying the total patent assets and sales volume regarding 13 companies in the chemical industry.

With the display example shown in FIG. 15, the total patent assets are plotted on the horizontal axis (x axis), and the sales volume is plotted on the vertical axis (y axis). Incidentally, in the vicinity of the plotted points, abbreviations such as AK and MT are provided in order to identify the plotted companies. The straight line shown in the graph is a regression line showing the average value of the respective plotted points, and the calculating formula thereof is represented at the upper part of the graph.

Upon displaying FIG. 15, for instance, the total patent assets is calculated with the total patent assets calculation means of the information processing means 380 and the like. Then, display data for associating and displaying the total patent assets and sales volume is generated with the display data generation means of the information processing means 380 and the like, and this is output to the display means or the like. When associating and displaying the total patent assets and sales volume, this may be represented in a three-dimensional graph as shown in FIG. 15, or a two-dimensional graph may be used, or this may be represented in a tabular form.

As shown in FIG. 15, Company AK has an exceptionally high value for the index of total patent assets, but is positioned slightly below the average regression line. Seven companies; namely, Company MT, Company KO, Company SK, Company MK, Company SU, Company SD and Company DN are positioned above the average regression line.

Meanwhile, 6 companies; namely, Company AK, Company SE, Company KF, Company HK, Company DC and Company SB are positioned below the average regression line.

By observing FIG. 15, since the plotted companies are of an upward trend, it could be said that there is significant correlation between the total patent assets and sales volume. Therefore, when an enterprises wishes to increase its sales volume, it is possible to deduce that it is necessary to increase the total patent assets.

As shown in FIG. 15, Company AK shows high values for both the total patent assets and sales volume. Although Company AK is positioned at a position slightly below the average regression line, the company is increasing its sales volume based on high total patent assets. Meanwhile, Company SB shows low values for both the total patent assets and sales volume. It is possible to see that this enterprise is not increasing its sales volume since it has low total patent assets.

FIG. 16 is a display example of associating and displaying the total patent assets and sales volume regarding 10 companies + 20 companies in the electrical equipment industry.

With the display example shown in FIG. 16, the total patent assets are plotted on the horizontal axis (x axis), and the sales volume is plotted on the vertical axis (y axis). Incidentally, in the vicinity of the plotted points, abbreviations such as NS and MS are provided in order to identify the plotted companies. The straight line shown in the graph is a regression line showing the average value of the plotted points for 10 companies, and the calculating formula thereof is represented at the upper part of the graph.

The 20 companies shown in FIG. 16 are clustered at the lower left part of the graph, and therefore company names are not indicated. Company NC shows a high total patent assets value, but is positioned slightly below the average regression line. Among the 10 companies, Company MS, Company HT, Company TS, Company FJ, Company MB, Company SH, Company SY and Company MD are the 8 companies positioned above the average regression line.

Among the 10 companies, Company NC and Company SN are the 2 companies positioned below the average regression line. Among the above, Company NC shows a high total patent assets value but the value of sales volume is not that high. In the case of this enterprise, it is considered that the sales
volume is not increasing since the company is not effectively utilizing the total patent assets.

Meanwhile, Company MS shows a relatively high total patent assets value, but has an even high sales volume. In the case of Company MS, it is possible to judge that this company is increasing its sales by effectively utilizing the total patent assets.

By observing FIG. 16, since the plotted companies are of an upward trend, it could be said that there is also significant correlation between the total patent assets and sales volume in the electrical equipment industry. Therefore, when an enterprises wishes to increase its sales volume, it is possible to deduce that it is necessary to increase the total patent assets.

Upon comparing FIG. 15 and FIG. 16, it is possible to read the differences in the trend of the industries. For example, values of the total patent assets and sales volume are greater by a digit in the electrical equipment industry in comparison to the chemical industry. Nevertheless, as described above, it is evident that there is correlation between the total patent assets and sales volume in both industries. Like this, it is possible to compare the relationship of the total patent assets and sales volume in the same industry, and it is also possible to know the difference between different industries.

In FIG. 15 and FIG. 16, although the respective indexes were compared in the chemical industry and electrical equipment industry, enterprise evaluation can be conducted in other industries; for instance, electrical equipment industry, pharmaceutical industry, steel/non-steel/metal product industry, fiber/pulp/paper industry, ceramic industry, machinery/shipbuilding industry, automobile/transport equipment industry, information/telecommunication industry, electricity/gas industry and so on. Further, by comparing industries, it is possible to know the difference between industries and characteristics of each industry.

Further, with the display example shown in FIG. 15 and FIG. 16, although the relationship of representative indexes such as the total patent assets and sales volume was represented, the present invention is not limited to the indexes of the two examples shown in FIG. 15 and FIG. 16, and the mutual relationship upon comparing other indexes may be also be observed.

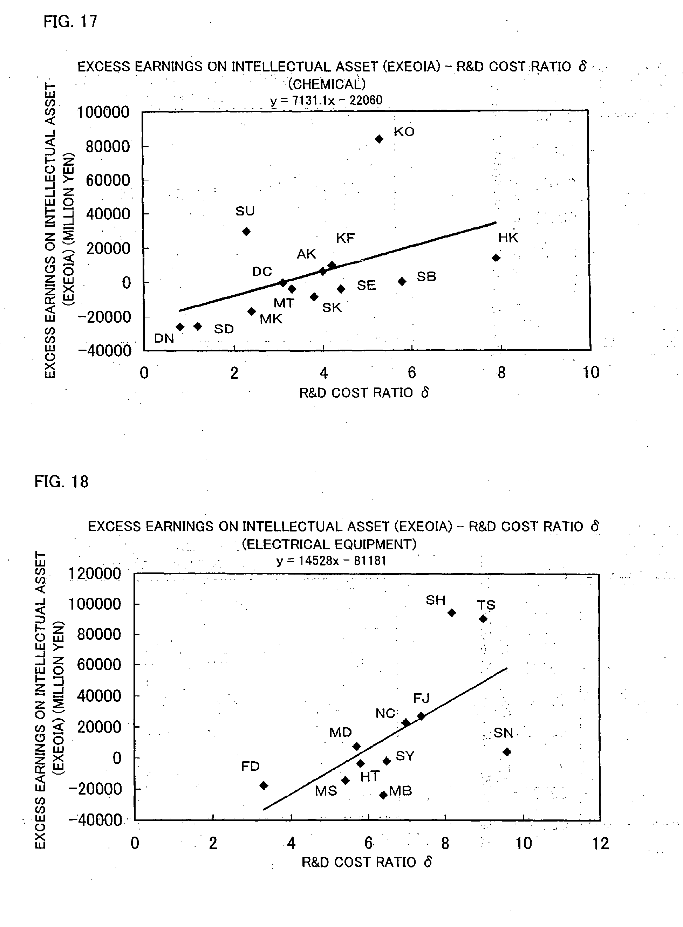

FIG. 17 is a diagram showing a display example of associating and displaying the R&D cost ratio 5 and excess earnings on intellectual asset (EXEOIA) regarding the 13 companies in the chemical industry.

With the display example shown in FIG. 17, the R&D cost ratio $\delta$ is plotted on the horizontal axis (x axis), and the excess earnings on intellectual asset (EXEOIA) is plotted on the vertical axis (y axis). Incidentally, in the vicinity of the plotted points, abbreviations such as KO and HK are provided in order to identify the plotted companies. The straight line shown in the graph is a regression line showing the average value-of the respective plotted points, and the calculating formula thereof is represented at the upper part of the graph.

Upon displaying FIG. 17, for instance, the R&D cost ratio $\delta$ is calculated with the R&D cost ratio calculation means of the information processing means 380 and the like. Next, the excess earnings on intellectual asset (EXEOIA) are calculated with the excess earnings on intellectual asset calculation means of the information processing means 380 and the like. Then, display data for associating and displaying the R&D cost ratio $\delta$ and excess earnings on intellectual asset (EXEOIA) is generated with the display data generation means of the information processing means 380 and the like, and this is output to the display means or the like.

When associating and displaying the R&D cost ratio $\delta$ and excess earnings on intellectual asset (EXEOIA), this may be represented in a three-dimensional graph as shown in FIG. 17, or a two-dimensional graph may be used, or this may be represented in a tabular form.

Since the index of R&D cost ratio $\delta$ is the ratio of R&D cost in relation to the total assets, it is possible to compare the R&D cost ratio without regard to the size of enterprises. Further, the index of excess earnings on intellectual asset (EXEOIA) is a value obtained by multiplying the total assets to the return on intellectual asset of.the portion exceeding the industry average (excess return on intellectual asset), it is calculated as a positive value for enterprises positioned above the industry average value, and is calculated as a negative number for enterprises positioned below the industry average value. Thus, this is a useful index upon judging the positioning of an enterprise in the industry.

As shown in FIG. 17, 5 companies; namely, Company KO, Company KF, Company AK, Company SU and Company DC are positioned above the average regression line. Enterprises positioned above the average regression line can be considered to be companies gaining large profits based on patents in relation to the R&D cost ratio.

Meanwhile, 8 companies; namely, Company HK, Company SB, Company SE, Company SK, Company MT, Company MK, Company SD and Company DN are positioned below the average regression line. Enterprises positioned below the average regression line can be considered to be companies that are not yielding profits based on profits in spite of the costs spent on research and development.

Enterprises showing a positive excess earnings on intellectual asset (EXEOIA) value; that is, enterprises positioned above the industry average are the 5 companies of Company HK, Company KO, Company KF, Company AK and Company SU. Meanwhile,' enterprises showing a negative excess earnings on intellectual asset (EXEOIA) value; that is, enterprises positioned below the industry average are the 8 companies of Company SB, Company SE, Company SK, Company MT, Company DC, Company MK, Company SD and Company DN.

In the case of Company KO, although the value of R&D cost ratio $\delta$ is calculated at roughly 5, the excess earnings on intellectual asset (EXEOIA) is showing an exceptionally high value. Further, in the case of Company SU, although the value of R&D cost ratio $\delta$ is not so high at roughly 2, the value of excess earnings on intellectual asset (EXEOIA) is 30000, and is showing a significantly high excess earnings on intellectual asset (EXEOIA) value in comparison to the R&D cost ratio $\delta$ value.

In the case of Company HK, although it is showing a high R&D cost ratio $\delta$, the value for the excess earnings on intellectual asset (EXEOIA) index is barely above the industry average, and is a low value in spite of the R&D cost ratio $\delta$ value.

Further, in the case of Company SB, although it is showing a relatively high R&D cost ratio $\delta$, the value of excess earnings on intellectual asset (EXEOIA) is positioned in the negative area.

Therefore, in the case of Company HK, it is possible to judge from FIG. 17 that the earnings on intellectual asset are poor in spite of the significant amount of R&D cost. In the case of Company HK, it is possible to consider that the enterprise is having some problems in the method of investing in research and development.

Further, according to FIG. 17, Company KO is gaining high intellectual assets in spite of the amount of R&D cost, and is considered to be an enterprise that can be evaluated highly. Contrarily, Company DN and Company SD show low values for the R&D cost ratio $\delta$ index, and value of excess earnings on intellectual asset (EXEOIA) is also significantly in the negative since these companies are not making much investment in research and development. Thus, these enterprises can be evaluated as companies with poor attitude toward research and development.

FIG. 18 is a diagram showing a display example of associating and displaying the R&D cost ratio $\delta$ and excess earnings on intellectual asset (EXEOIA) regarding the 11 companies in the electrical equipment industry.

With the display example shown in FIG. 18, the R&D cost ratio $\delta$ is plotted on the horizontal axis (x axis), and the excess earnings on intellectual asset (EXEOIA) is plotted on the vertical axis (y axis). Incidentally, in the vicinity of the plotted points, abbreviations such as TS and SH are provided in order to identify the plotted companies. The straight line shown in the graph is a regression line showing the average value of the respective plotted points, and the calculating formula thereof is represented at the upper part of the graph.

According to FIG. 18, 6 companies; namely, Company TS, Company SH, Company FJ, Company NC, Company MD and Company FD are positioned above the average regression line. Enterprises positioned above the average regression line can be considered to be companies gaining large profits based on patents in relation to the R&D cost ratio.

Meanwhile, 5 companies; namely, Company SN, Company SY, Company MB, Company HT and Company MS are positioned below the average regression line. Enterprises positioned below the average regression line can be considered to be companies that are not yielding profits based on profits in spite of the costs spent on research and development.

Enterprises showing a positive excess earnings on intellectual asset (EXEOIA) value; that is, enterprises positioned above the industry average are the 6 companies of Company TS, Company SH, Company FJ, Company NC, Company SN and Company MD. Meanwhile, enterprises showing a negative excess earnings on intellectual asset (EXEOIA) value; that is, enterprises positioned below the industry average are the 5 companies of Company SY, Company MB, Company HT, Company MS and Company FD.

As shown in FIG. 18, Company TS and Company SH are showing high values for the R&D cost ratio δ, and are also showing high values for the excess earnings on intellectual asset (EXEOIA) index.

In the case of Company SN, although it is showing a high R&D cost ratio δ value, the index of excess earnings on intellectual asset (EXEOIA) is calculated to be roughly zero, and is a slightly negative value.

In the case of Company MB, although it is showing a high R&D cost ratio δ value, the excess earnings on intellectual asset (EXEOIA) value is calculated significantly in the negative.

In the case of Company FD, the R&D cost ratio δ value is calculated to be the lowest, and the excess earnings on intellectual asset (EXEOIA) index is also calculated in the negative.

As shown in FIG. 18, Company TS and Company SH are making considerable investment in research and development, and the index of return on intellectual asset (ROIA) is also considerably higher than the industry average. Therefore, it is possible to evaluate these enterprises as companies that are skillful at investing in research and development. Contrarily, it is possible to judge Company MB as an enterprise having problems in making investments in research and development.

As described above, by associating and displaying various indexes of R&D cost and other related indexes, the user will be able to clearly comprehend the attitude of an enterprise in relation to research and development.

In FIG. 17 and FIG. 18, although the respective indexes were compared in the 13 companies of the chemical industry and 11 companies of the electrical equipment industry, enterprise evaluation can be conducted in other industries; for instance, electrical equipment industry, pharmaceutical industry, steel/non-steel/metal product industry, fiber/pulp/paper industry, ceramic industry, machinery/shipbuilding industry, automobile/transport equipment industry, information/telecommunication industry, electricity/gas industry and so on. Further, by comparing industries, it is possible to know the difference between industries and characteristics of each industry.

Further, with the display example shown in FIG. 17 and FIG. 18, although the relationship of representative indexes such as the R&D cost ratio δ value and the excess earnings on intellectual asset (EXEOIA) were represented, the present invention is not limited to the display examples shown in FIG. 17 and FIG. 18, and the mutual relationship upon comparing other indexes may be also be observed.

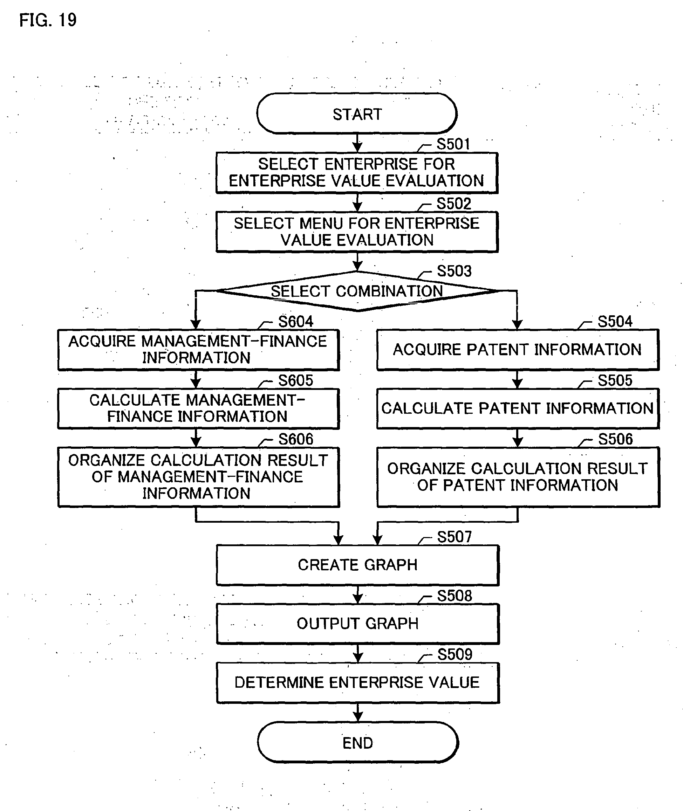

FIG. 19 shows a flowchart of calculating and outputting the respective indexes of earnings on intellectual asset, return on intellectual asset, excess earnings on intellectual asset, total patent assets, and so on.

At S501 "select enterprise for enterprise value evaluation", the information processing means 380 receives the input of a display command of a screen for selecting an enterprise from a user via the input means 370 such as a keyboard and the bus 399. The information processing means 380 reads the display data upon selecting the enterprise from the recording means 384 based on such command, converts this into a display image data, and outputs such data to the display interface 373.

The display interface 373 that acquired the display data from the information processing means 380 converts the display data to an image signal corresponding to the display means 372 and outputs the signal. The display means 372 displays a screen based on the display image signal input from the display interface 373 and notifies the user.

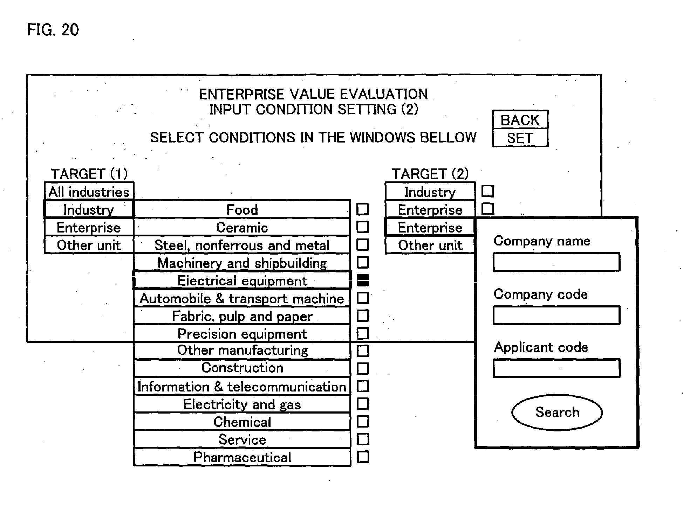

FIG. 20 is a diagram showing a display example of the enterprise value evaluation input condition setting screen for selecting the conditions of the target industry or target enterprise upon calculating the index for judging the enterprise value.

The user, while viewing the enterprise selection screen displayed on the display means 372, selects one or a plurality of evaluation target enterprises. In the example shown in FIG. 20, the user is selecting the "electrical equipment" industry among the "industries" as the broad classification among the evaluation target enterprises.

Further, the user selects "enterprises" as the detailed classification of the individual enterprises among the evaluation enterprise targets, and is able to designate input conditions such as the "enterprise name", "enterprise code", or "applicant code". When the user is to designate individual enterprises, the user selects "enterprise" on the right side of FIG. 20 and inputs the enterprise name, enterprise code or applicant code.

When the user selects the "set" button and the input condition setting of the enterprise value evaluation is ended, the input information is conveyed to the information processing means 380. The information processing means 380 sets a flag of the enterprise as the "target" input by the user, displays a selection mark at the portion of the index selected by the user, displays information such as company names, codes for companies and applicants which have been set on the display means 372, and notifies the user of the set information.

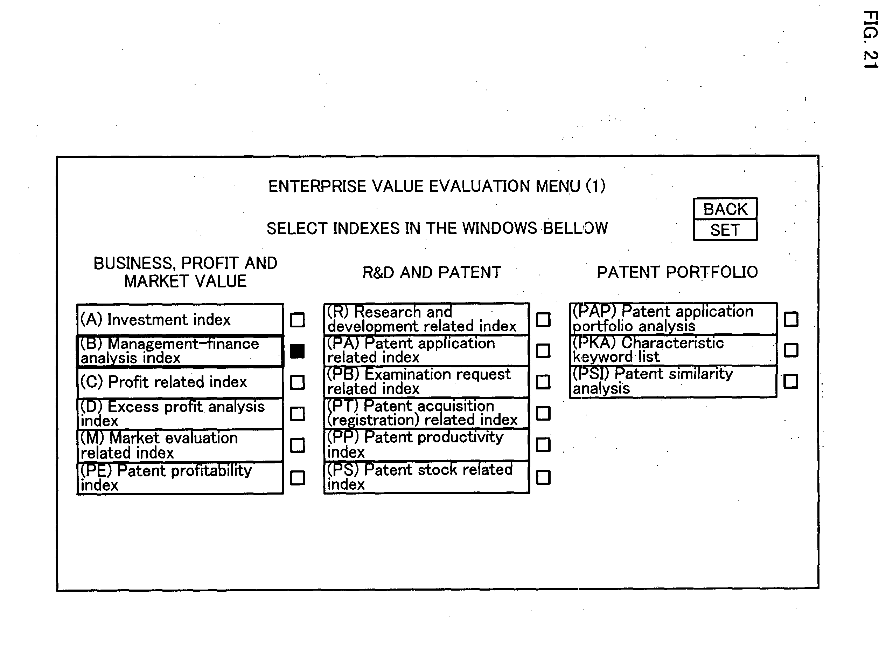

When the user selects the "set" button and the input condition setting of the enterprise value evaluation is ended, the information processing means 380 subsequently reads the display data of the display menu for selecting the type of index to evaluate the enterprise value from the recording means 384, and, for example, displays the enterprise value evaluation menu as shown in FIG. 21 on the display means 372.

Next, at S502 "select menu for enterprise value evaluation", the user, while viewing the enterprise value evaluation menu displayed on the display means 372, selects the desired index for evaluating the enterprise value and inputs such index.

When selecting an index from the enterprise value evaluation menu shown in FIG. 21, the user selects a desired index from the selection menu of "business, profit, and market value" or "R&D, patent", or "patent portfolio". In the example shown in FIG. 21, the user is selecting the item of "(B) management-finance index" belonging to the field of "business, profit, and market value".

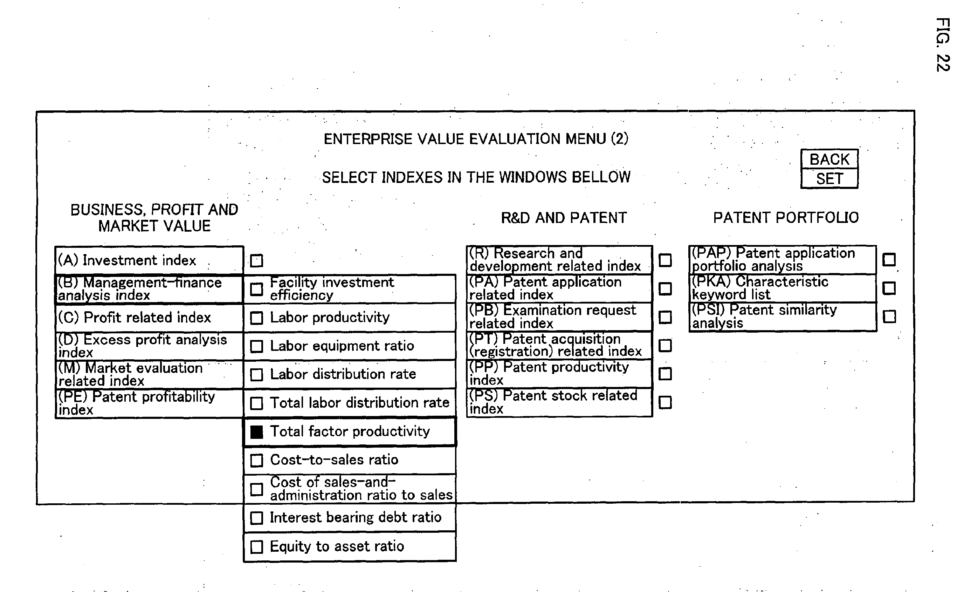

When the user inputs information for selecting the index of "(B) management-finance index", such input information is conveyed to the information processing means 380. The information processing means 380 outputs the command for displaying a selection mark at the portion of the index selected by the user to the display interface 373, and outputs information for displaying the respective indexes existing at a lower level in the form of a pulldown menu to the display interface 373. Then, the display means 372 displays a selection screen of the respective indexes belonging to the lower lever of the "(B) management-finance index" as shown in FIG. 22.

When the user selects the index of "total factor productivity" from the pulldown menu shown in FIG. 22, the input information is transmitted to the information processing means 380. The information processing means 380 sets a flag for setting forth the calculating formula of the index, displays a selection mark at the portion of the index selected by the user, and notifies the user of the set information. Incidentally, in the example shown in FIG. 22, the mark of the selected item is changed from a white square to a black square.

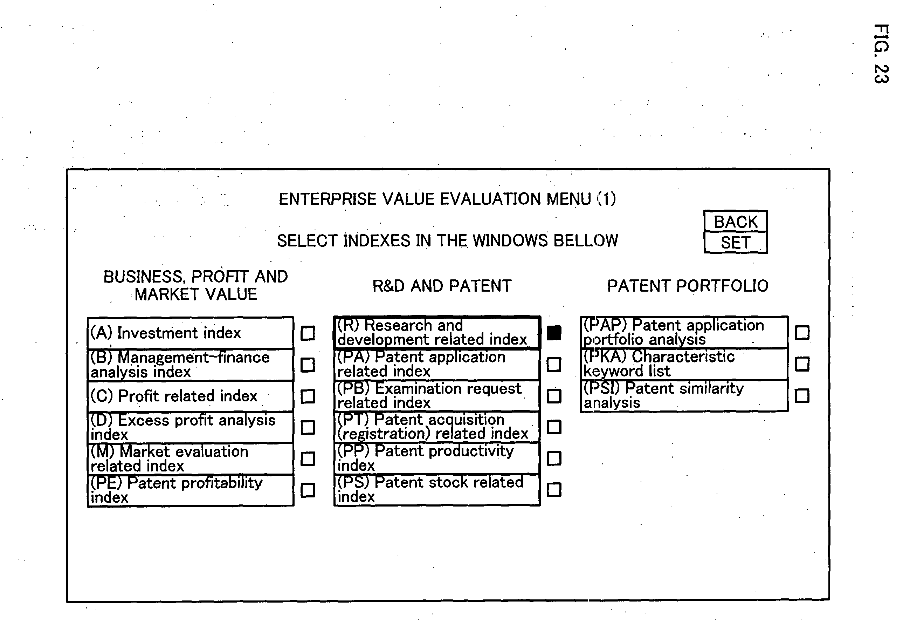

Further, when the user wishes to conduct a search by mutually associating the "R&D patent related index" and "business, profit, and market value related index", the user additionally selects "(R) research and development index" or the like shown in FIG. 23.

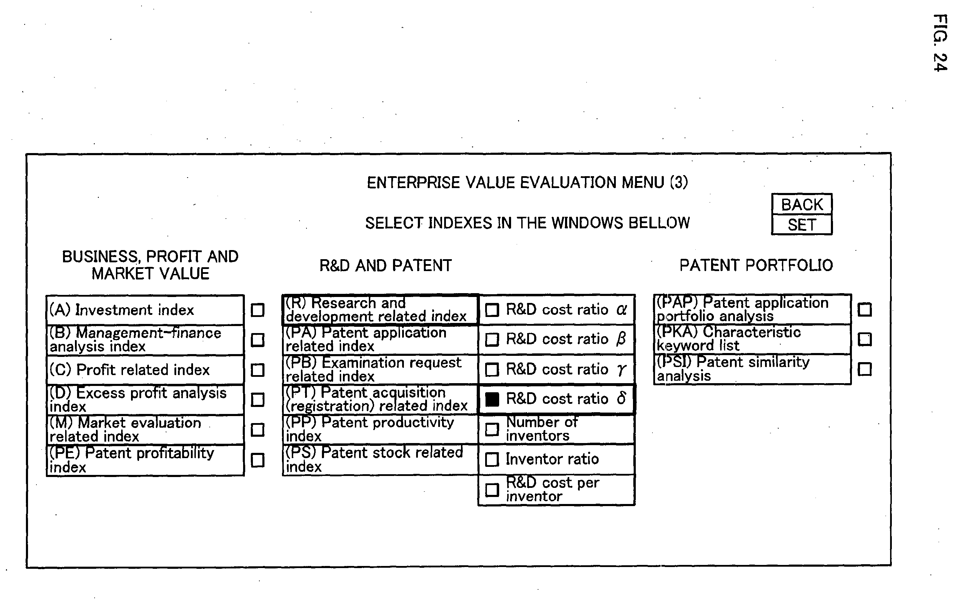

When the user inputs information for selecting the "(R) research and development index", the information processing means 380 that acquired such input information outputs a command to the display interface 373 for displaying a selection mark at the portion of the index selected by the user, and outputs information to the display interface 373 for displaying the respective indexes belonging to the lower level of the "(R) research and development index" in the form of a pulldown menu as shown in FIG. 24.

When the user selects the "R&D cost ratio 5" index from the pulldown menu shown in FIG. 24, the input information is conveyed to the information processing means 380. The information processing means 380 sets a flag for setting forth the calculating formula of the index, displays a selection mark at the portion of the index selected by the user, and notifies the user of the set information. When associating and displaying a plurality of indexes, a plurality of indexes are selected as described above.

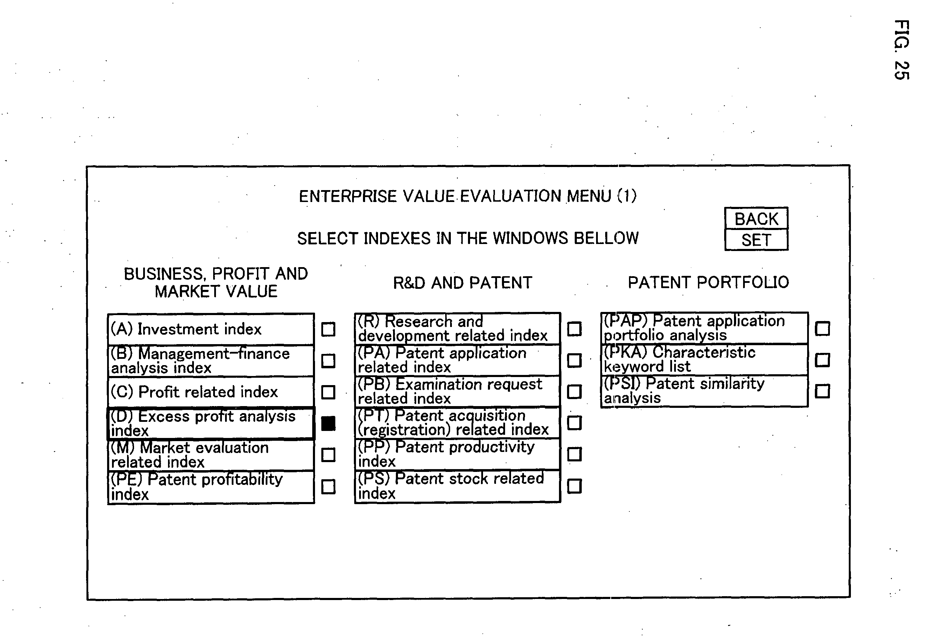

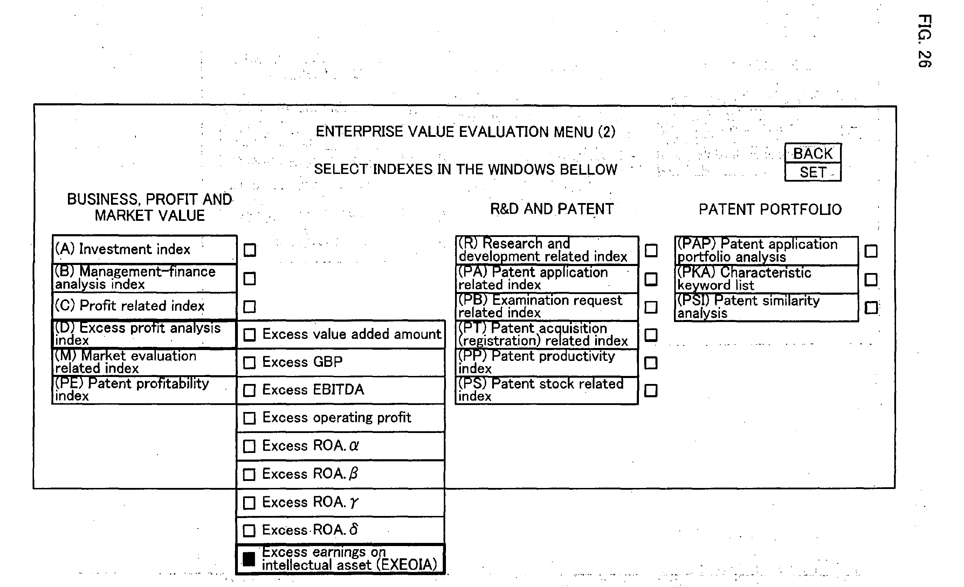

Further, when the user is to select another index belong to a lower level of the "(D) excess profit analytical index", as shown in FIG. 25, the user selects "(D) excess profit analytical index" from the selection menu. Then, the input information is conveyed to the information processing means 380, and the information processing means 380 outputs a command to the display interface 373 for displaying a selection mark at the portion of the index selected by the user, and outputs information to the display interface 373 for displaying the respective indexes belonging to the lower level. A display example thereof is shown in FIG. 26.

When the user selects the index of "excess earnings on intellectual asset (EXEOIA)" from the pulldown menu shown in FIG. 26, the input information is conveyed to the information processing means 380. The information processing means 380 sets a flag setting forth the calculating formula of the index, and displays a selection mark at the portion of the index selected by the user.

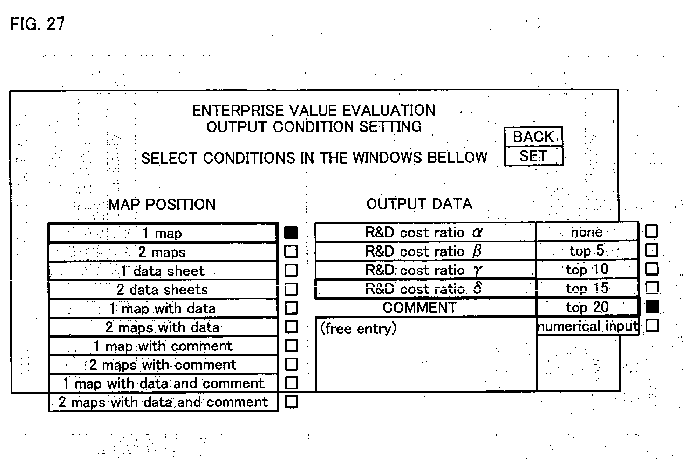

When the user selects the "set" button and the selection processing of the type of index for evaluating the enterprise value is ended, the information processing means 380 outputs a command for displaying the enterprise value evaluation output condition setting screen shown in FIG. 27 on the display means 372.

The user, while viewing the enterprise value evaluation output condition setting screen displayed on the display means 372, selects a desired display mode. In the example shown in FIG. 27, "single map" is selected as the information relating to the "map position", the "R&D cost ratio δ" is selected as the "output data", and "upper 20" is selected as the volume of information to be output and displayed.

When the user selects the "set" button and the setting of the enterprise value evaluation output conditions is ended, processing to be performed by the information processing means 380 proceeds to the processing of S503 "select combination" shown in FIG. 19.

When the user designates the implementation of operation relating to management-finance information and patent information such as the "(PE) patent profitability index", the processing to be performed by the information processing means 380 proceeds to the processing of S604 "acquire management-finance information" and S504 "acquire patent information". Incidentally, when the user only designates an independent operation of the "R&D cost ratio" or the like, the information processing means 380 does not select the combination processing and implements only the processing of S604 onward.

For example, when the user designates the operation of "total patent assets" from the selection menu of "(PE) patent stock", at S604 and S504, the information processing means 380 performs processing for acquiring information required for calculating the indexes such as the R&D cost, and registration gazettes such as patent gazettes and utility model registration gazettes of the respective enterprises from the database 20 based on the operation processing of the "total patent assets" and information relating to the designated enterprise. After the acquisition processing of management-finance information and patent information is ended, the processing to be performed by the information processing means 380 proceeds to the processing of subsequent S605 "calculate management-finance information" and S505 "calculate patent information".

At S605 and S505, the information processing means 380 performs processing for calculating the desired index of the user based on the management-finance information and patent information acquired at S604 and S504, and the calculating formula designated by the user.

When the operation processing of the index relating to management-finance information and patent information is ended at S605 and S505, the processing to be subsequently performed by the information processing means 380 proceeds to the processing of S606 "organize calculation result of management-finance information" and S506 "organize calculation result of patent information".

At S606 and S506, the information processing means 380 classifies the specified enterprise into a predetermined category based on the operation result of the index, and further performs operation processing for predetermined ranking or discrimination, and then organizes the various operation results. Incidentally, depending on the type of index to be calculated, there are certain indexes that do not require classification or ranking.

When the organization of the various operation results at S606 and S506 is ended, the processing to be subsequently performed by the information processing means 380 proceeds to the processing of S507 "create graph".

At S507, the information processing means 380 creates a chart or graph by applying the operation result of the patent information calculated at S505, various operation results organized at S506, operation result of the management-finance information operated at S605, or operation result of the various types of management-finance information organized at S606 into a display format according to the index or the operation result thereof, and coverts this into display data.

Next, at S508 "output graph", the information processing means 380 outputs the display data of the chart or graph created at S507 to the display interface 373, and displays this on the display means 372.

By the user perusing the chart or graph displayed at S508, the user will be able to easily evaluate the enterprise by referring to an index representing the amount of profit estimated to be generated based on off-balance intellectuals assets, index representing patent assets, index relating to the market value of the R&D cost made by the respective enterprises and diversification of inventions, index representing the competitive position based on inventions, index representing the validity of enterprises, index representing patent profitability, index representing R&D cost ratio, or index representing market value added and the like.

Depending on the items of enterprise evaluation designated by the user, there may be cases where the information processing means 380 performs a more detailed ranking in order to judge the enterprise value. In such a case, the information processing means 380 will read the predetermined threshold or the like at S509 "determine enterprise value" to judge the enterprise value, thereafter output the numerical value or graph thereof, and then end the calculation processing of the various indexes.

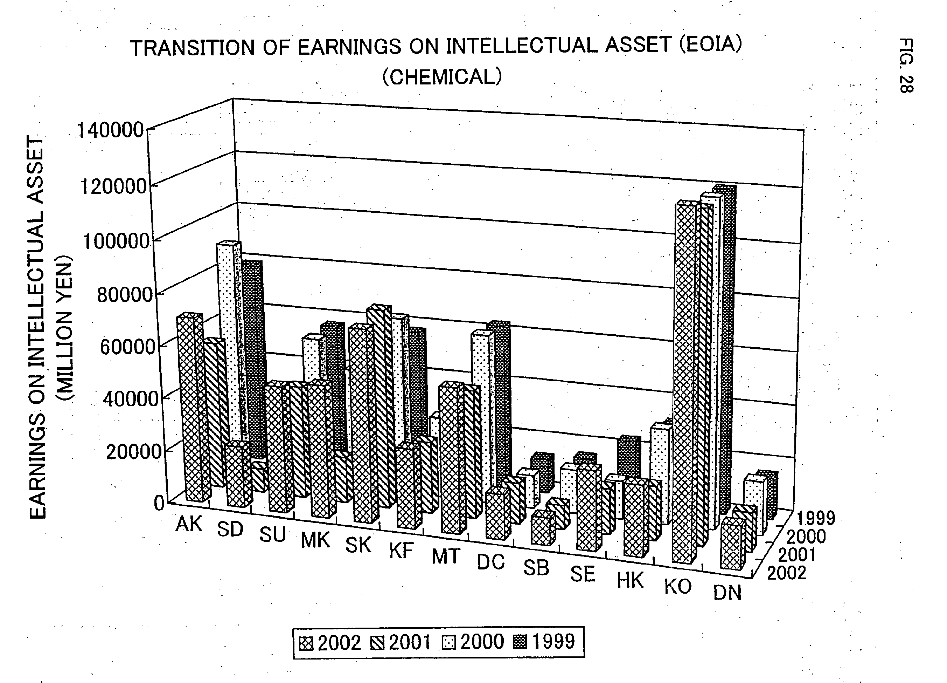

FIG. 28 shows the transition of the earnings on intellectual asset (EOIA) calculated regarding the 13 companies in the chemical industry from 1999 to 2002.

In the display example shown in FIG. 28, the annual earnings on intellectual asset (EOIA) is disposed in.the y axis in order from 1999 to 2000 from the rear side of FIG. 28. The name of each enterprise in which the earnings on intellectual asset (EOIA) index was calculated is disposed on the x axis as abbreviations such as DN, KO and so on. The z axis is bar graph that is three-dimensionally displaying the values (¥1,000,000JPY) of the earnings on intellectual asset (EOIA).

When displaying FIG. 28, for instance, the management-finance information acquisition means acquires the gross operating profit (GBP), patent and other royalty income, financial assets, return on financial assets, tangible fixed assets, and return on tangible fixed assets of a specified enterprise from a management-finance database. Then, the earnings on intellectual asset calculation means of the information processing means 380 and the like calculates the earnings on intellectual asset (EOIA) by subtracting the sum of a value obtained by multiplying the return on financial assets to the financial assets and a value obtained by multiplying the return on tangible assets to the tangible fixed assets, from the sum of the acquired gross operating profit (GBP) and patent and other royalty income.

Further, as shown in (Formula 20) to (Formula 22) above, the excess earnings on intellectual asset may be calculated upon calculating the gross operating profit (GBP) with the operating profit and R&D cost, or the excess earnings on intellectual asset may be calculated based on the sales profit, administrative expenses, R&D cost, operating profit, R&D cost included in manufacturing costs, R&D cost includes in administrative expenses, and so on.

The earnings on intellectual asset (EOIA) is calculated for each year and each enterprise, the display data generation means of the information processing means 380 and the like generates display data for displaying the index per year and per enterprise and outputs this to the display means or the like. When displaying the earnings on intellectual asset (EOIA) per year or per enterprise, this may be represented in a three-dimensional graph as shown in FIG. 28, or a two-dimensional graph may be used, or this may be represented in a tabular form.

As described above, the earnings on intellectual asset (EOIA) is the amount of profit obtained by deducting a theoretical expected return to be obtained from the financial assets and tangible fixed assets, from the total business profit obtained by adding the gross operating profit (GBP) and the patent and other royalty income recorded as non-operating profits. As shown in FIG. 28, when reviewing the trend of earnings on intellectual asset (EOIA) of the respective enterprises in the chemical industry, it is evident that, based on 1999, the year 2000 showed an increase, 2001 showed a decrease, and 2002 showed an increase once again.

Among the above, Company KO is showing the highest earnings on intellectual asset (EOIA) value. The earnings on intellectual asset (EOIA) of Company KO are calculated at a value that is one digit larger than the other enterprises, and the annual values are hardly showing any change and are maintaining high values. This means that Company KO is an enterprise that has considerably large profits based on off-balance (intangible assets not indicated on the balance sheet) intellectual property. An enterprise such as Company KO showing a high earnings on intellectual asset (EOIA) value has significant strength that does not appear in the balance sheet or the like, and can be evaluated as an extremely prominent enterprise from the perspective of intellectual property.

When viewing 2002, Company SK and Company AK are showing high value following Company KO. These enterprises can be evaluated as prominent companies with strong intellectual property that does not appear in tables such as a balance sheet. Contrarily, Company SB, Company DN, Company DC and other have gained small profit from intellectual property, and can be positioned as enterprises with weak intellectual property.

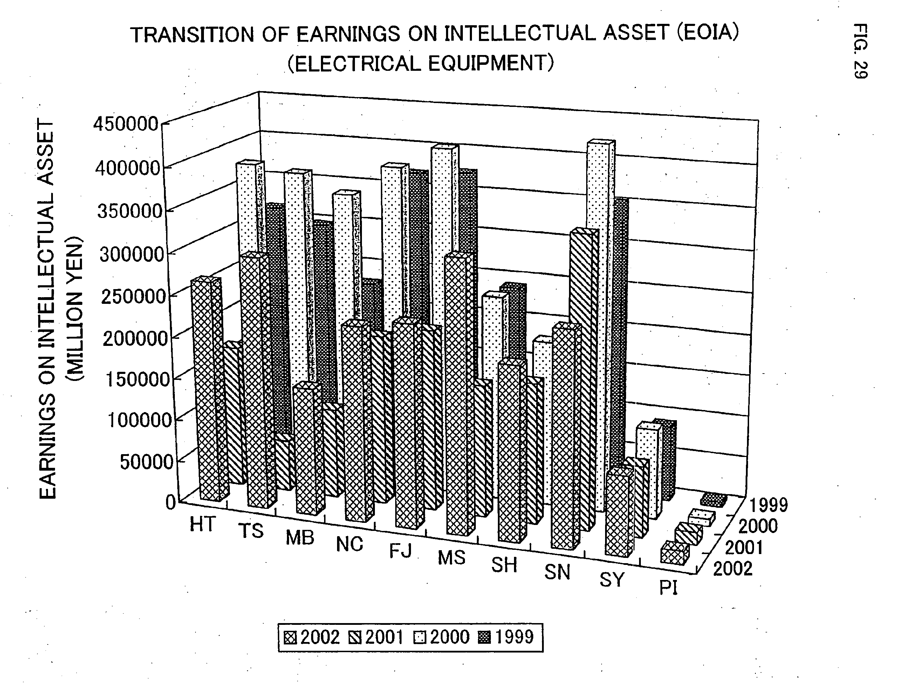

FIG. 29 shows the transition of the earnings on intellectual asset (EOIA) calculated regarding the respective companies in the electrical equipment industry from 1999 to 2002.

In the display example shown in FIG. 29, the annual earnings on intellectual asset (EOIA) is disposed in the y axis in order from 1999 to 2000 from the rear side of FIG. 29. The name of each enterprise in which the earnings on intellectual asset (EOIA) index was calculated is disposed on the x axis as abbreviations such as PI, SY and so on. The z axis is bar graph that is three-dimensionally displaying the values (¥1,000,000JPY) of the earnings on intellectual asset (EOIA).

When reviewing the trend of earnings on intellectual asset (EOIA) of the respective enterprises in the electrical equipment industry, it is evident that, based on 1999, the year 2000 showed an increase, 2001 showed a decrease, and 2002 showed an increase once again. Company TS is showing a considerable fall from 2000 to 2001. It can be speculated that Company TS some kind of abnormality regarding intellectual property in that year. In the electrical equipment industry, although there is no one enterprise that has prominent values of earnings on intellectual asset (EOIA), there are companies like Company PI that show low values for the index of earnings on intellectual asset (EOIA), but are steadily increasing year by year. Company PI can be evaluated as an enterprise that is making some kind of effort with respect to intellectual property.

When observing FIG. 28 and FIG. 29, with the chemical industry and electrical equipment industry, it is evident that the earnings on intellectual asset (EOIA) value of the electrical equipment industry is calculated roughly one digit greater. For instance, although Company SY is an enterprise positioned at the bottom in the electrical equipment industry, the amount of earnings on intellectual asset (EOIA) itself is above average or ranked high in the chemical industry. Like this, the index of earnings on intellectual asset (EOIA) can be simply compared among enterprises in the same industry to compare the profits based on intangible assets, or compared with other industries to determine the difference in trends of other industries.

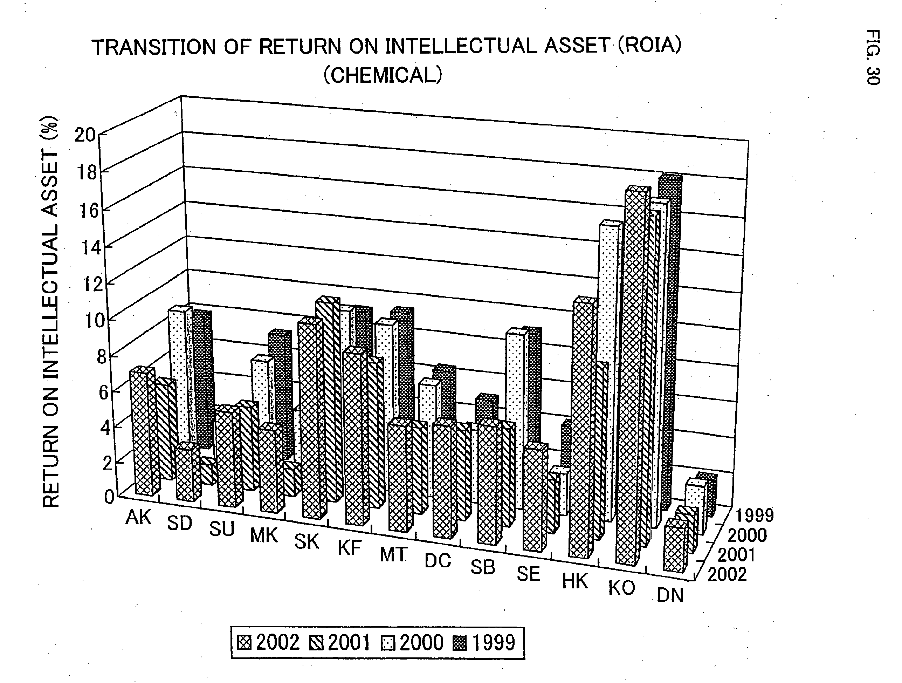

In this embodiment, although the annual transition of several enterprises is shown, the transition of only a single enterprise may be viewed, or a graph comparing one enterprise with other enterprises in each year may be displayed for comparison. The same can be said for FIG. 30 to FIG. 35 described below.

FIG. 30 shows the transition of the return on intellectual asset (ROIA) calculated regarding the 13 companies in the chemical industry from 1999 to 2002.

In the display example shown in FIG. 30, the annual return on intellectual asset (ROIA) is disposed in the y axis in order from 1999 to 2000 from the rear side of FIG. 30. The name of each enterprise in which the return on intellectual asset (ROIA) index was calculated is disposed on the x axis as abbreviations such as DN, KO and so on. The z axis is bar graph that is three-dimensionally displaying the values (%) of the return on intellectual asset (ROIA).

When displaying FIG. 30, for instance, the management-finance information acquisition means acquires the gross operating profit.(GBP), patent and other royalty income, financial assets, return on financial assets, tangible fixed assets, total assets, and return on tangible fixed assets of a specified enterprise from a management-finance database. Then, the earnings on intellectual asset calculation means of the information processing means 380 and the like calculates the earnings on intellectual asset (EOIA) by subtracting the sum of a value obtained by multiplying the return on financial assets to the financial assets and a value obtained by multiplying the return on tangible assets to the tangible fixed assets, from the sum of the acquired gross operating profit (GBP) and patent and other royalty income. Thereafter, the return on intellectual asset calculation means of the information processing means 380 and the like calculates the return on intellectual asset (ROIA) through dividing the earnings on intellectual asset by the total assets.

The return on intellectual asset (ROIA) is calculated for each year and each enterprise, the display data generation means of the information processing means 380 and the like generates display data for displaying the index per year and per enterprise and outputs this to the display means or the like. When displaying the return on intellectual asset (ROIA) per year or per enterprise, this may be represented in a three-dimensional graph as shown in FIG. 30, or a two-dimensional graph may be used, or this may be represented -in a tabular form.

The return on intellectual asset (ROIA) is an index obtained through dividing the earnings on intellectual asset (EOIA) by the total assets, and this can be considered to be the ratio of the earnings on intellectual asset (EOIA) to total assets. Since it is a value obtained through dividing by the total assets, the size of earnings on intellectual asset can be compared without being influenced by the size of enterprises.

As shown in FIG. 30, Company KO is showing an extremely high return on intellectual asset (ROIA) value. This is partly because Company KO also had a high earnings on intellectual asset (EOIA) value, but is an enterprise having total assets comparable to such values, and can be evaluated as an extremely prominent enterprise from the perspective that it is gaining high profits based on intellectual assets.

In the case of Company HK, although the earnings on intellectual asset (EOIA) shown in FIG. 28 did now show a particularly high value, the index of return on intellectual asset (ROIA) is showing a relatively high value. This means that Company HK does not have significant total assets, but has considerable profit of earnings on intellectual asset (EOIA) in spite of its total assets, and can be evaluated as being a prominent enterprise.

Contrarily, in the case of Company MT that showed a high value for the index of earnings on intellectual asset (EOIA) shown in FIG. 28, the index of return on intellectual asset (ROIA) shown i n FIG. 30 is showing a relatively low value in comparison to the other enterprises. In the case of Company MT, it is possible to know that this enterprise is gaining small profits from intellectual assets in spite of its total assets.

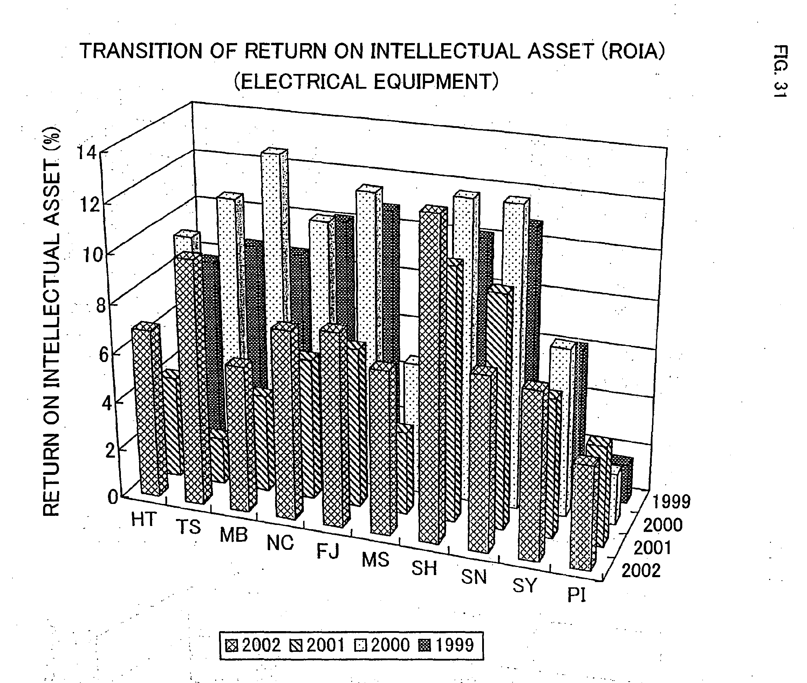

FIG. 31 shows the transition of the return on intellectual asset (ROIA) calculated regarding the respective companies in the electrical equipment industry from 1999 to 2002.

In the display example shown in FIG. 31, the annual return on intellectual asset (ROIA) is disposed in the y axis in order from 1999 to 2000 from the rear side of FIG. 31. The name of each enterprise in which the return on intellectual asset (ROIA) index was calculated is disposed on the x axis as abbreviations such as PI, SY and so on. The z axis is bar graph that is three-dimensionally displaying the values (%) of the return on intellectual asset (ROIA).

With the electrical equipment industry shown in FIG. 31, a relatively large number of enterprises is showing a high return on intellectual asset (ROIA) value. And, the trend of annual transition of the return on intellectual asset (ROIA) is showing roughly the same trend of increase/decrease as the values of earnings on intellectual asset (EOIA) shown in FIG. 29.

Since the respective enterprises in the electrical equipment industry showed relatively high values of the earnings on intellectual asset (EOIA) as shown in FIG. 29, it is possible to know that many enterprises also have total assets in an amount comparable to its value of earnings on intellectual asset (EOIA). And, from the perspective of gaining large profits based on intellectual assets, it is possible to read that there are many prominent enterprises.

Contrarily, in the case of Company PI, although it did not show such a high value for the index of earnings on intellectual asset (EOIA) shown in FIG. 29, it showed a considerably high value in the return on intellectual asset (ROIA) shown in FIG. 31. Therefore, it is possible to know that Company PI does not have significant total assets, but has considerable profit of earnings on intellectual asset (EOIA) in spite of its total assets, and is an enterprise that can be given favorable evaluation.

Meanwhile, Company MS that showed a high value in the index of earnings on intellectual asset (EOIA) shown in FIG. 29 is showing a relatively low value in comparison to the other enterprises in the return on intellectual asset (ROIA) shown in FIG. 31. In the case of Company MS, it is possible to determine that profits from intellectual assets are small in spite of its total assets.

Here, although an example is illustrated where the a value obtained through dividing the earnings on intellectual asset (EOIA) by the total assets is the return on intellectual asset (ROIA), instead of dividing the earnings on intellectual asset (EOIA) by the total assets, the return on intellectual asset (ROIA) may also be calculated and displayed using an index in the management-finance information such as the amount of capital, total market value, sales volume and so on as necessary.

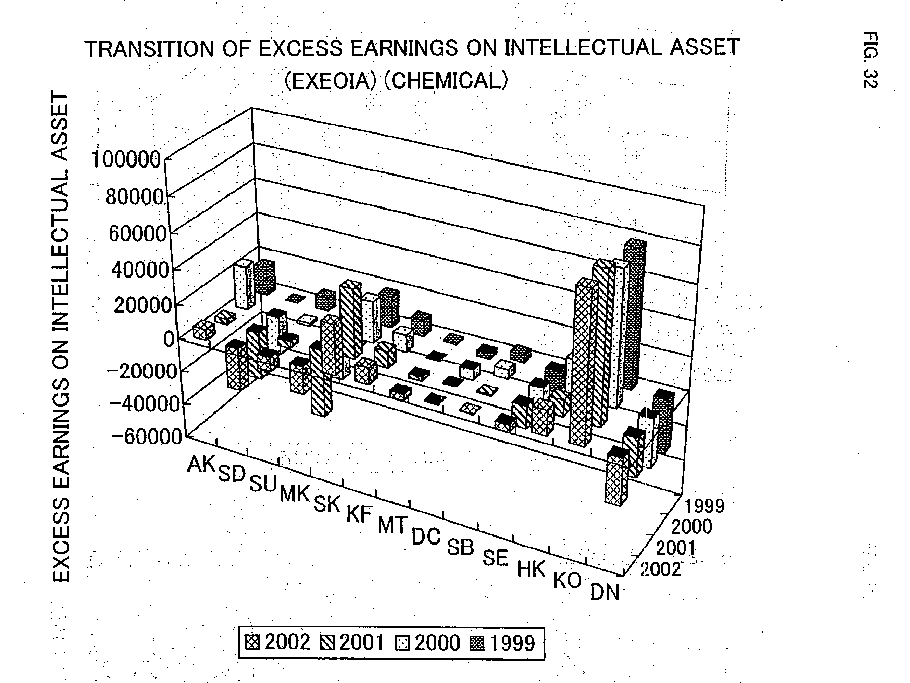

FIG. 32 shows the transition of the excess earnings on intellectual asset (EXEOIA) calculated regarding the respective companies in the chemical industry from 1999 to 2002.

In the display example shown in FIG. 32, the annual excess earnings on intellectual asset (EXEOIA) is disposed in the y axis in order from 1999 to 2000 from the rear side of FIG. 32. The name of each enterprise in which the excess earnings on intellectual asset (EXEOIA) index was calculated is disposed on the x axis as abbreviations such as DN, KO and so on. The z axis is bar graph that is three-dimensionally displaying the values (¥1,000,000JPY) of the excess earnings on intellectual asset (EXEOIA). The three-dimensional bar graph of enterprises in which the excess earnings on intellectual asset (EXEOIA) value is calculated in the negative, the top is displayed in black and, with 0(yen) as the base, displayed lengthwise downward (minus direction).

When displaying FIG. 32, for instance, the management-finance information acquisition means acquires the total assets and return on intellectual asset of a specified enterprise in a specified period, and the average return on intellectual asset in a specified period from a management-finance database. Then, the excess earnings on intellectual asset calculation means of the information processing means 380 and the like calculates the excess earnings on intellectual asset (EXEOIA) by multiplying the total assets to a value obtained by subtracting the average return on intellectual asset from the return on intellectual asset of a specified enterprise.

And, the excess earnings on intellectual asset (EXEOIA) is calculated for a plurality of fiscal years for a plurality of enterprises, and the display data generation means of the information processing means 380 and the like generates display data for displaying the index per year and per enterprise and outputs this to the display means or the like. When displaying the excess earnings on intellectual asset (EXEOIA) per year or per enterprise, this may be represented in a three-dimensional graph as shown in FIG. 32, or a two-dimensional graph may be used, or this may be represented in a tabular form.

The index of excess earnings on intellectual asset (EXEOIA) is a value obtained by multiplying the total assets to a value obtained by subtracting the industry average return on intellectual asset (ROIA) from the return on intellectual asset (ROIA), and is a value showing the portions exceeding the industry average of profits estimated to be generated based on off-balance (intangible assets not indicated on the balance sheet) intellectual asset. Therefore, enterprises having a positive value are companies exceeding the average value of return on intellectual asset, and can be evaluated as being prominent enterprises.

In the chemical industry, Company KO is showing high values leaving the other enterprises far behind each year. Company KO can be evaluated as an extremely prominent enterprise in terms of gaining profits based on intellectual assets. In addition to Company KO, enterprises that are showing positive values for the index of excess earnings on intellectual asset (EXEOIA) in the chemical industry are Company SK, Company HK, Company KF, Company AK and Company SB, and these companies can be evaluated as being prominent enterprises in terms of gaining profits based on intellectual assess.

Nevertheless, since Company SB is an enterprise that showed a decrease from 1999 and barely turned positive in 2002, this enterprise can be considered as being an average company or a company with slight problems in terms of gaining profits based on intellectual assets.

Contrarily, Company DN, Company MK, Company SD and Company SE are the enterprises in which the values for the index of excess earnings on intellectual asset (EXEOIA) are in the negative, and it is possible to acknowledge that these companies have some kind of problem in the utilization of intellectual assets.

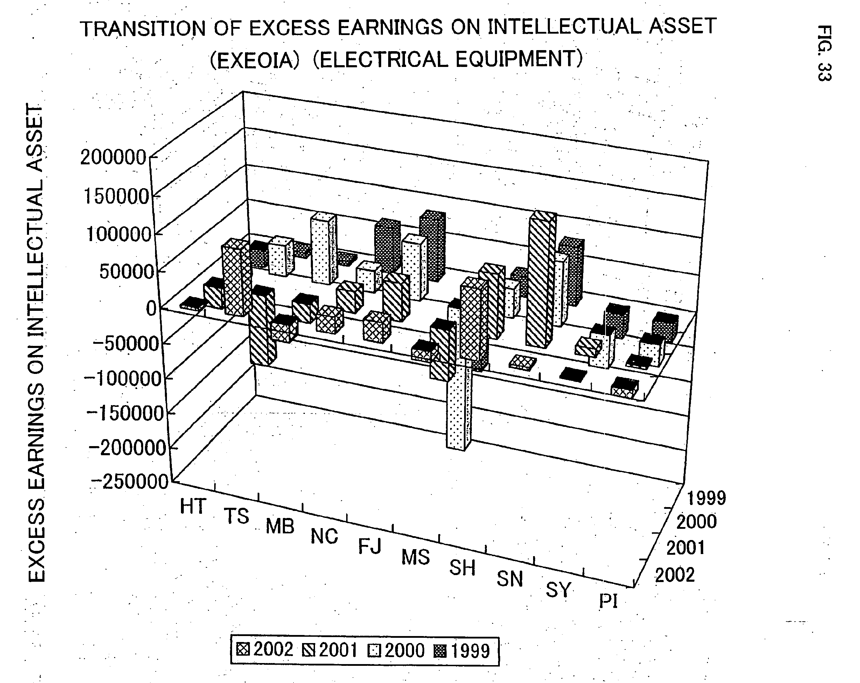

FIG. 33 shows the transition of the excess earnings on intellectual asset (EXEOIA) calculated regarding the respective companies in the electrical equipment industry from 1999 to 2002.

In the display example shown in FIG. 33, the annual excess earnings on intellectual asset (EXEOIA) is disposed on the y axis in order from 1999 to 2000 from the rear side of FIG. 33. The name of each enterprise in which the excess earnings on intellectual asset (EXEOIA) index was calculated is disposed on the x axis as abbreviations such as PI, SY and so on. The z axis is bar graph that is three-dimensionally displaying the values (¥,1000,000JPY) of the excess earnings on intellectual asset (EXEOIA). With companies in which the return on intellectual asset value is calculated to be below the industry average, the three-dimensional bar graph of enterprises in which the excess earnings on intellectual asset (EXEOIA) value is calculated in the negative, the top is displayed in black and, with 0 (yen) as the base, displayed lengthwise downward (minus direction).

As shown in FIG. 33, in the electrical equipment industry, Company SH and Company TS are showing high values of excess earnings on intellectual asset (EXEOIA) in 2002. Nevertheless, since Company TS is showing a negative value in 2001, it is possible to judge that the company had some kind of problem in that year regarding intellectual assets.

Company SH, Company NC, Company FJ and Company SN have positive values for the excess earnings on intellectual asset (EXEOIA) during all periods from 1999 to 2002. Among the above, enterprises other than Company SH are of a decreasing trend since 1999, and it is possible to know that their profits based on intellectual assets are becoming weak. In particular, in the case of Company SN, since the drop in 2002 is significant, it can be considered that some kind of abnormality occurred regarding intellectual assets in that year.

Company MS, Company HT and Company PI have negative values for the excess earnings on intellectual asset (EXEOIA) during all years. Since these enterprises are companies below the industry average with respect to profits based on intellectual assets, it is possible to acknowledge problems regarding the potential of these companies. Nevertheless, since these companies are also showing a slight increase in the excess earnings on intellectual asset (EXEOIA) despite being the negative values, it is also possible to know that the companies are showing some improvement.

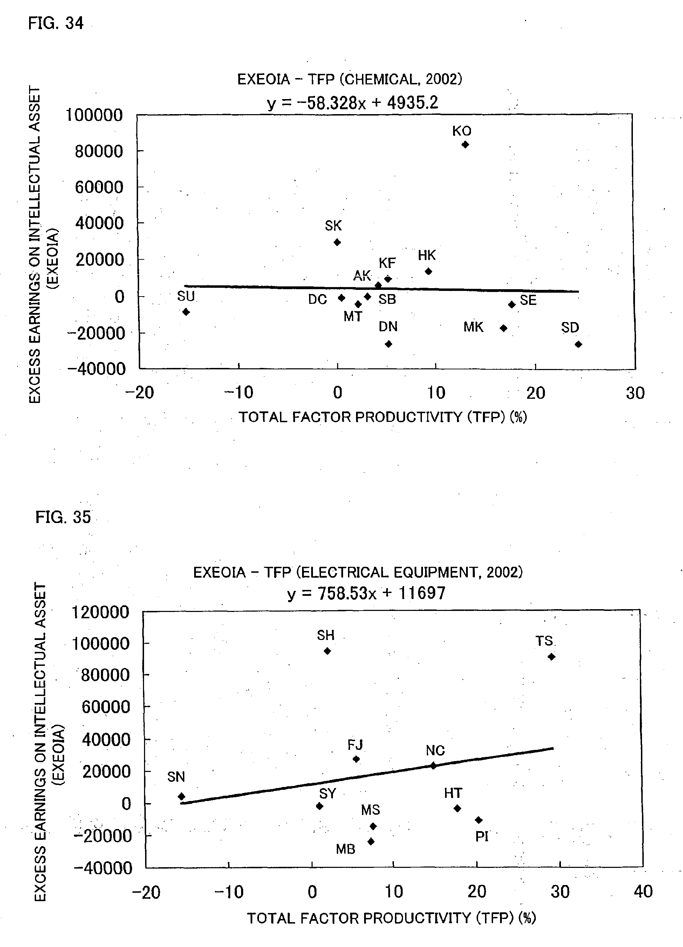

FIG. 34 is a diagram showing a display example of associating and displaying the total factor productivity (TFP) and excess earnings on intellectual asset (EXEOIA) calculated regarding the chemical industry.

With the display example shown in FIG. 34, the total factor productivity (TFP) is plotted on the horizontal axis (x axis), and the excess earnings on intellectual asset (EXEOIA) is plotted on the vertical axis (y axis). Incidentally, in the vicinity of the plotted points, abbreviations such as KO and SK are provided in order to identify the plotted companies. The straight line shown in the graph is a regression line showing the average value of the respective plotted points, and the calculating formula thereof is represented at the upper part of the graph.

Upon displaying FIG. 34, for instance, the total factor productivity calculation means of the information processing means 380 and the like calculates the total factor productivity (TFP). Next, the excess earnings on intellectual asset calculation means of the information processing means 380 and the like calculates the excess earnings on intellectual asset (EXEOIA). Then, the information processing means 380 of the information processing means 380 and the like generates display data for associating and displaying the total factor productivity (TFP) and excess earnings on intellectual asset (EXEOIA), and outputs this to the display means or the like. When associating and displaying the total factor productivity (TFP) and excess earnings on intellectual asset (EXEOIA), this may be represented in a two-dimensional graph as shown in FIG. 34, or a three-dimensional graph may be used, or this may be represented in a tabular form.

Since the excess earnings on intellectual asset (EXEOIA) on the vertical axis is the portion exceeding the industry average value of the earnings on intellectual asset (EOIA), this represents the excess profit strength of intellectual assets such as patents, know-how, brands and management efficiency in comparison to competitors. The total factor productivity (TFP) on the horizontal axis is an index showing the contribution of the intellectual assets in the increase of the value added amount of the respective enterprises.

Total factor productivity (TFP) is an index showing the increased portion of production that cannot be explained from only the increase in input of productive factors such as equipment and work force. Further, since this increased portion of production includes, in addition to significant technical innovations, improvement in technical proficiency of workers, improvement of management efficiency and realization of economic efficiency of the scale of business, this can be considered to be the contribution of intellectual assets in a broad sense. Therefore, by examining how the total factor productivity (TFP) is related to the excess earnings on intellectual asset (EXEOIA), it is possible to know in a broad sense of how the profits based on intellectual assets are influencing the excess earnings on intellectual asset (EXEOIA), and it is possible to know the orientation of profits based on intellectual assets of enterprises.

Among the enterprises shown in FIG. 34, enterprises that show positive values for both the total factor productivity (TFP) and excess earnings on intellectual asset (EXEOIA) are companies that are showing steady profits based on intellectual assets, and can be evaluated as being prominent companies from the perspective of intellectual assets. Company KO, Company HK, Company KF, Company AK and Company SK fall under this prominent group. In particular, although Company SK has a near zero value for the total factor productivity (TFP), the excess earnings on intellectual asset (EXEOIA) is showing a high value at roughly 30000. Therefore, it is speculated that this enterprise is gaining earnings on intellectual asset (EOIA) based on influences other than the total factor productivity (TFP), which shows the intellectual asset in a broad sense.

Meanwhile, enterprises having a positive total factor productivity (TFP) value and a negative excess earnings on intellectual asset (EXEOIA) value are companies gaining profits based on intellectual assets below the industry average even though they have intellectual assets in a broad sense. In the case of these enterprises, it is possible to speculate that they are not utilizing their intellectual assets effectively. Company SD, Company SE, Company MK and Company DN fall under this group.

Enterprises having a negative total factor productivity (TFP) value and a negative excess earnings on intellectual asset (EXEOIA) value have weak intellectual assets in a broad sense, and therefore are gaining only small profits based on intellectual assets, and are companies that can be evaluated low from the perspective of intellectual assets. Company SU falls under this group, and it can be considered that this company has problems regarding its intellectual assets.

FIG. 35 is a diagram showing a display example of associating and displaying the total factor productivity (TFP) and excess earnings on intellectual asset (EXEOIA) calculated regarding the electrical equipment industry.

With the display example shown in FIG. 35, the total factor productivity (TFP) is plotted on the horizontal axis (x axis), and the excess earnings on intellectual asset (EXEOIA) is plotted on the vertical axis (y axis). Incidentally, in the vicinity of the plotted points, abbreviations such as TS and SH are provided in order to identify the plotted companies. The straight line shown in the graph is a regression line showing the average value of the respective plotted points, and the calculating formula thereof is represented at the upper part of the graph.

Among the enterprises shown in FIG. 35, enterprises that show positive values for both the total factor productivity (TFP) and excess earnings on intellectual asset (EXEOIA) are companies that are showing steady profits based on intellectual assets, and can be evaluated as being prominent companies from the perspective of intellectual assets. Company TS, Company NC, Company FJ and Company SH fall under this prominent group. In particular, although Company SH has a near zero value for the total factor productivity (TFP), the excess earnings on intellectual asset (EXEOIA) is showing a high value at roughly 10000. Therefore, it is speculated that this enterprise is gaining significant earnings on intellectual asset (EOIA) based on influences other than the total factor productivity (TFP), which shows the intellectual asset in a broad sense.

Meanwhile, enterprises having a positive total factor productivity (TFP) value and a negative excess earnings on intellectual asset (EXEOIA) value are companies gaining profits based on intellectual assets below the industry average even though they have intellectual assets in a broad sense. In the case of these enterprises, it is possible to speculate that they are not utilizing their intellectual assets effectively. Company PI, Company HT, Company MS and Company MB fall under this group.

Enterprises having a negative total factor productivity (TFP) value and a negative excess earnings on intellectual asset (EXEOIA) value have weak intellectual assets in a broad sense, and therefore are gaining only small profits based on intellectual assets, and are companies that can be evaluated low from the perspective of intellectual assets. Company SN falls under this group, and there is no choice but to say that this company has problems regarding its intellectual assets.

INDUSTRIAL APPLICABILITY

The present invention comprises:

management-finance information acquisition means for acquiring the gross operating profit, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income; and

output means for outputting the calculated earnings on intellectual'asset to display means or the like.

According to the present invention, it is possible to calculate an index showing the balance obtained by deducting the expected return to be obtained from on-balance assets (assets on the balance sheet) from the total business profit. Further, according to the present invention, it is possible to calculate and notify the user of an index representing the amount of profit estimated to be generated based on off-balance (intangible assets indicated on the balance sheet) intellectual assets; that is, an index that cannot be explained from on-balance assets.

Moreover, according to the present invention, it is possible to calculate the earnings on intellectual asset with the operating profit and R&D cost.

Further, according to the present invention, it is possible to calculate the earnings on intellectual asset with the sales profit, administrative expenses and R&D cost.

Moreover, according to the present invention, it is possible to calculate the earnings on intellectual asset with the operating profit, R&D cost included in manufacturing costs, and R&D cost included in administrative expenses.

Further, the present invention comprises:

management-finance information acquisition means for acquiring the total assets, gross operating profit, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income;

return on intellectual asset calculation means for calculating return on intellectual asset through dividing the calculated earnings on intellectual asset by the total assets; and

output means for outputting the calculated return on intellectual asset to display means or the like.

Therefore, according to the present invention, it is possible to calculate and notify the user of the ratio of the earnings on intellectual asset to total assets. By notifying the return on intellectual asset to the user, it is possible to relative compare the profitabilities of the respective enterprises. In addition, according to the present invention, it is possible to perform comparative assessment of profitability of intellectual assets such as patents, know-how, brands and management efficiency of the respective enterprises under conditions that will not be influenced by the size of enterprises, or the size of value of the earnings on intellectual asset.

Moreover, according to the present invention, it is possible to calculate the return on intellectual asset with the operating profit and R&D cost.

Further, according to the present invention, it is possible to calculate the return on intellectual asset with the sales profit, administrative expenses and R&D cost.

Moreover, according to the present invention, it is possible to calculate the return on intellectual asset with the operating profit, R&D cost included in manufacturing costs, and R&D cost included in administrative expenses.

Further, the present invention comprises:

management-finance information acquisition means for acquiring the total assets and return on intellectual asset of a specified enterprise in a specified period and average return on intellectual asset in a specified period from a management-finance database containing management-finance information of enterprises;

excess earnings on intellectual asset calculation means for calculating excess earnings on intellectual asset by multiplying the total assets to a value obtained by subtracting the average return on intellectual assets from the return on intellectual assets of the specified enterprise; and

output means for outputting the calculated excess earnings on intellectual asset to display means or the like.

Therefore, according to the present invention, it is possible to notify the user of the balance regarding the portion exceeding the industry average among the profits estimated to be generated based on off-balance intellectual assets (intangible intellectual assets not indicated on the balance sheet, and which show the profitability based on intellectual assets such as patents, know-how, brands and management efficiency) of the respective enterprises. Therefore, by calculating the excess earnings on intellectual asset pertaining to the present invention, it is possible to clarify the positioning of the earnings on intellectual asset of the enterprise to be researched in relation to competitors.

Moreover, according to the present invention, it is possible to calculate the excess earnings on intellectual asset with the operating profit and R&D cost.

Further, according to the present invention, it is possible to calculate the excess earnings on intellectual asset with the sales profit, administrative expenses and R&D cost.

Moreover, according to the present invention, it is possible to calculate the excess earnings on intellectual asset with the operating profit, R&D cost included in manufacturing costs, and R&D cost included in administrative expenses.

Further, the present invention comprises:

management-finance information acquisition means for acquiring the rate of change in value added amount, labor distribution rate, rate of change in depreciation target tangible fixed assets, rate of change in the number of employees, total assets and return on intellectual asset of a specified enterprise, average return on intellectual asset and sales volume from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means or the like.

Therefore, according to the present invention, it is possible to calculate and display the relationship of the excess profit strength (excess return on intellectual asset) of intellectual assets such as patents, know-how, brands and management efficiency in relation to other enterprises, and the contribution of intellectual assets (total factor productivity (TFP)) in the increase of the value added amount of the respective enterprises.

Moreover, according to the present invention, it is possible to determine that an enterprise showing a high value of excess return on intellectual asset in spite of its total factor productivity (TFP) is enthusiastic in creating intellectual property. In addition, it is possible to determine that an enterprise having a low value for both the total factor productivity (TFP) and excess return on intellectual asset has some kind of problem in terms of management.

Further, the present invention comprises:

management-finance information acquisition means for acquiring the expected enterprise value profit, gross operating profit, patent and other royalty income, financial assets, return on financial assets, tangible fixed assets and return on tangible fixed assets of a specified enterprise from a management-finance database containing management-finance information of enterprises;

expected intellectual property profit calculation means for calculating expected intellectual property profit by subtracting the sum of a value obtained by multiplying the return on financial assets to the acquired financial assets and a value obtained by multiplying the return on tangible assets to the tangible fixed assets from the expected enterprise value profit;

earnings on intellectual asset calculation means for calculating earnings on intellectual asset by subtracting a value obtained by multiplyng the return on financial assets to the financial assets and a value obtained by multiplying the return on tangible assets to the tangible fixed assets from the sum of the acquired gross operating profit and patent and other royalty income;

display data generation means for generating display data for associating the calculated expected intellectual property profit and earnings on intellectual asset for display; and

output means for outputting the display data to display means or the like.

Therefore, according to the present invention, it is possible to display the relationship of the earnings on intellectual asset (EOIA) based on the sales profit, R&D cost and patent and other royalty income, and the expected intellectual property profit (EIPP) based on the enterprise value in the market. According to the present invention, an enterprise having a large earnings on intellectual asset (EOIA) value is anticipated to receive high market value. In addition, an enterprise having a low earnings on intellectual asset (EOIA) value is anticipated to have a large expected intellectual property profit (EIPP).

Moreover, the present invention comprises:

management-finance information acquisition means for acquiring R&D cost in a first specified period of a specified enterprise from a management-finance database containing management-finance information of enterprises;

gazette acquisition means for acquiring registration gazettes based on patent applications filed by a specified enterprise within a second specified period from a database;

number-of-inventions acquisition means for acquiring the number of patents subjected to, before a predetermined time, registration or number of claims of the patents as the number of inventions from the acquired registration gazettes;

number-of-extinguished-inventions acquisition means for acquiring the number of extinguished inventions of patents extinguished before the predetermined time among the acquired number of inventions;

total number-of-effective-patents calculation means for calculating the total number of effective patents by subtracting the number of extinguished inventions from the acquired number of inventions;

total patent assets calculation means for calculating the total patent assets by multiplying the total number of effective patents to a value obtained through dividing the acquired R&D cost by the number of inventions; and

output means for outputting the calculated total patent assets to display means or the like.

Therefore, according to the present invention, it is possible to calculate an index corresponding to the total asset value of all effective patents owned by an enterprise.

Further, according to the present invention, since the total patent assets have been calculated with the patent or utility model subject to registration, it is possible to calculate an index corresponding to the amount of intellectual assets owned by an enterprise based on the R&D cost input per patent that was actually patented and became effective. Since this index of total patent assets shows the total asset value of patents owned by an enterprise, an enterprise showing a large value has a large total asset value based on patents, and it is possible to know how much intangible assets the enterprise to be researched is possessing.

Moreover, according to the present invention, since the total patent assets is calculated by calculating the number of registered inventions per unit of applicant by acquiring the number of applicants listed in patent gazettes, and acquiring the number of inventions of the enterprise to be researched based on such number of registered inventions per unit of applicant, it is possible to calculate the accurate patent assets even if the patent inventions or registered utility models are co-owned applications.

Further, the present invention comprises:

management-finance information acquisition means for acquiring R&D cost in a first specified period and sales volume in a second specified period of a specified enterprise from a management-finance database containing management-finance information of enterprises;

gazette acquisition means for acquiring registration gazettes based on patent applications filed by a specified enterprise within a third specified period from a database;

number-of-inventions acquisition means for acquiring the number of patents subjected to, before a predetermined time, registration or number of claims of the patents as the number of inventions from the acquired registration gazettes;

number-of-extinguished-inventions acquisition means for acquiring the number of extinguished inventions of patents extinguished before the predetermined time among the acquired number of inventions;

total number-of-effective-patents calculation means for calculating the total number of effective patents by subtracting the number of extinguished inventions from the acquired number of inventions;

total patent assets calculation means for calculating the total patent assets by multiplying the total number of effective patents to a value obtained through dividing the acquired R&D cost by the number of inventions;

display data generation means for generating display data for associating the calculated total patent assets and the acquired sales volume for display; and

output means for outputting the display data to display means, printing means, recording medium, or another telecommunications device via a communication line.

Therefore, according to the present invention, it is possible to display the correlation of the total patent assets and sales volume and notify this to the user.

Moreover, according to the present invention, when an enterprise wishes to increase its sales volume, it is possible to know how much the total patent assets need to be increased. In addition, according to the present invention, when the total patent assets of the enterprise to be researched show a high value and the sales volume also shows a high value, it is possible to determine that such enterprise is increasing its sales volume based on its large total patent assets. Contrarily, when the total patent assets of the enterprise to be researched shows a low value and the sales volume also shows a low value, it is possible to determine that such enterprise is not improving its sales volume since it has small total patent assets.

## Claims

1. An enterprise evaluation device, comprising:

    management-finance information acquisition means for acquiring a gross operating profit, patent and other royalty income, financial assets, return on financial assets, tangible fixed assets and return on tangible fixed assets of a specified enterprise from a management-finance database containing management-finance information of enterprises;

    earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income; and

    output means for outputting the calculated earnings on intellectual asset to display means, printing means, recording medium, or another telecommunications device via a communication line.

2. An enterprise evaluation device, comprising:

    management-finance information acquisition means for acquiring an operating profit, R&D cost, patent and other royalty income, financial assets, return on financial assets, tangible fixed assets and return on tangible fixed assets of a specified enterprise from a management-finance database containing management-finance information of enterprises;

    earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income; and

    output means for outputting the calculated earnings on intellectual asset to display means, printing means, recording medium, or another telecommunications device via a communication line.

3. An enterprise evaluation device, comprising:

management-finance information acquisition means for acquiring a sales profit, administrative expenses, R&D cost, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income; and

output means for outputting the calculated earnings on intellectual asset to display means, printing means, recording medium, or another telecommunications device via a communication line.

4. An enterprise evaluation device, comprising:

management-finance information acquisition means for acquiring an operating profit, R&D cost included in manufacturing costs, R&D cost included in administrative expenses, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income; and

output means for outputting the calculated earnings on intellectual asset to display means, printing means, recording medium, or another telecommunications device via a communication line.

5. An enterprise evaluation device, comprising:

management-finance information acquisition means for acquiring a sales profit, R&D cost included in manufacturing costs, administrative expenses, R&D cost included in administrative expenses, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets, from the sum of the acquired sales profit, R&D cost included in manufacturing costs, R&D cost included in administrative expenses and patent and other royalty income; and

output means for outputting the calculated earnings on intellectual asset to display means, printing means, recording medium, or another telecommunications device via a communication line.

6. An enterprise evaluation device, comprising:

management-finance information acquisition means for acquiring total assets, gross operating profit, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income;

return on intellectual asset calculation means for calculating return on intellectual asset through dividing the calculated earnings on intellectual asset by the total assets; and

output means for outputting the calculated return on intellectual asset to display means, printing means, recording medium, or another telecommunications device via a communication line.

7. An enterprise evaluation device, comprising:

management-finance information acquisition means for acquiring total assets, operating profit, R&D cost, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;

return on intellectual asset calculation means for calculating return on intellectual asset through dividing the calculated earnings on intellectual asset by the total assets; and

output means for outputting the calculated return on intellectual asset to display means, printing means, recording medium, or another telecommunications device via a communication line.

8. An enterprise evaluation device, comprising:

management-finance information acquisition means for acquiring total assets, sales profit, administrative expenses, R&D cost, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income;

return on intellectual asset calculation means for calculating return on intellectual asset through dividing the calculated earnings on intellectual asset by the total assets; and

output means for outputting the calculated return on intellectual asset to display means, printing means, recording medium, or another telecommunications device via a communication line.

9. An enterprise evaluation device, comprising:

management-finance information acquisition means for acquiring total assets, operating profit, R&D cost included in manufacturing costs, R&D cost included in administrative expenses, patent and other royalty income, financial assets, return on financial assets, tangible fixed assets and return on tangible fixed assets of a specified enterprise from a management-finance database containing management-finance information of enterprises;

earnings on intellectual asset calculation means for calculating the earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income;

return on intellectual asset calculation means for calculating return on intellectual asset through dividing the calculated earnings on intellectual asset by the total assets; and

output means for outputting the calculated return on intellectual asset to display means, printing means, recording medium, or another telecommunications device via a communication line.

10. An enterprise evaluation device, comprising:

management-finance information acquisition means for acquiring total-assets, sales profit, R&D cost-included in manufacturing costs, administrative expenses, R&D cost included in administrative expenses, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost included in manufacturing costs, R&D cost included in administrative expenses and patent and other royalty income;

return on intellectual asset calculation means for calculating return on intellectual asset through dividing the calculated earnings on intellectual asset by the total assets; and

output means for outputting the calculated return on intellectual asset to display means, printing means, recording medium, or another telecommunications device via a communication line.

**11.** An enterprise evaluation device, comprising:

management-finance information acquisition means for acquiring total assets and return on intellectual asset of a specified enterprise in a specified period and average return on intellectual asset in a specified period from a management-finance database containing management-finance information of enterprises;

excess earnings on intellectual asset calculation means for calculating excess earnings on intellectual asset by multiplying the total assets to a value obtained by subtracting the average return on intellectual assets from the return on intellectual assets of the specified enterprise; and

output means for outputting the calculated excess earnings on intellectual asset to display means, printing means, recording medium, or another telecommunications device via a communication line.

**12.** An enterprise evaluation device, comprising:

management-finance information acquisition means for acquiring total assets, gross operating profit, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset of a specified enterprise by subtracting a value obtained by multiplying the return on financial assets to the financial assets and a value obtained by multiplying the return on tangible assets to the tangible fixed assets from the sum of the acquired gross operating profit and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise; and

output means for outputting the calculated excess earnings on intellectual asset to display means, printing means, recording medium, or another telecommunications device via a communication line.

**13.** An enterprise evaluation device, comprising:

management-finance information acquisition means for acquiring total assets, operating profit, R&D cost, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise; and

output means for outputting the calculated excess earnings on intellectual asset to display means, printing means, recording medium, or another telecommunications device via a communication line.

**14.** An enterprise evaluation device, comprising:

management-finance information acquisition means for acquiring total assets, sales profit, administrative expenses, R&D cost, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise; and

output means for outputting the calculated excess earnings on intellectual asset to display means, printing means, recording medium, or another telecommunications device via a communication line.

15. An enterprise evaluation device, comprising:

management-finance information acquisition means for acquiring total assets, operating profit, R&D cost included in manufacturing costs, R&D cost included in administrative expenses, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise; and

output means for outputting the calculated excess earnings on intellectual asset to display means, printing means, recording medium, or another telecommunications device via a communication line.

16. An enterprise evaluation device, comprising:

management-finance information acquisition means for acquiring total assets, sales profit, R&D cost included in manufacturing costs, administrative expenses, R&D cost included in administrative expenses, patent and other royalty income, financial assets, return on financial assets, tangible fixed assets and return on tangible fixed assets of a specified enterprise from a management-finance database containing management-finance information of enterprises;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost included in manufacturing costs, R&D cost included in administrative expenses and patent and other royalty income;

return on intellectual asset calculation means for calculating a return on intellectual asset of a specified enterprise through dividing the calculated earnings on intellectual as set of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise; and

output means for outputting the calculated excess earnings on intellectual asset to display means, printing means, recording medium, or another telecommunications device via a communication line.

17. An enterprise evaluation device, comprising:

management-finance information acquisition means for acquiring total assets, sales volume and return on intellectual asset of a specified enterprise in a specified period and average return on intellectual asset in a specified period from a management-finance database containing management-finance information of enterprises;

excess earnings on intellectual asset calculation means for calculating excess earnings on intellectual asset by multiplying the total assets to a value obtained by subtracting the average return on intellectual assets from the return on intellectual assets of the specified enterprise;

excess return on intellectual asset calculation means for calculating excess return on intellectual asset through dividing the calculated excess earnings on intellectual asset by the acquired sales volume; and

output means for outputting the calculated excess return on intellectual asset to display means, printing means, recording medium, or another telecommunications device via a communication line.

**18.** An enterprise evaluation device, comprising:

management-finance information acquisition means for acquiring total assets, gross operating profit, patent and other royalty income, financial assets, return on financial assets, tangible fixed assets, sales volume and return on tangible fixed assets of a specified enterprise from a management-finance database containing management-finance information of enterprises;

earnings on intellectual asset calculation means for calculating earnings on intellectual asset of a specified enterprise by subtracting a value obtained by multiplying the return on financial assets to the financial assets and a value obtained by multiplying the return on tangible assets to the tangible fixed assets from the sum of the acquired gross operating profit and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume; and

output means for outputting the calculated excess return on intellectual asset to display means, printing means, recording medium, or another telecommunications device via a communication line.

**19.** An enterprise evaluation device, comprising:

management-finance information acquisition means for acquiring a rate of change in value added amount, labor distribution rate, rate of change in depreciation target tangible fixed assets, rate of change in the number of employees, total assets and return on intellectual asset of a specified enterprise, average return on intellectual asset and sales volume from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means, printing means, recording medium, or another telecommunications device via a communication line.

**20.** An enterprise evaluation device, comprising:

management-finance information acquisition means for acquiring a rate of change in value added amount, labor distribution rate, rate of change in depreciation target tangible fixed assets, rate of change in the number of employees, total assets, gross operating profit, patent: and other royalty income, financial assets, return on financial assets, tangible fixed assets, sales volume and return on tangible fixed assets of a specified enterprise from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

earnings on intellectual asset calculation means for calculating earnings on intellectual asset of a specified enterprise by subtracting a value obtained by multiplying the return on financial assets to the financial assets and a value obtained by multiplying the return on tangible assets to the tangible fixed assets from the sum of the acquired gross operating profit and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means, printing means, recording medium, or another telecommunications device via a communication line.

21. An enterprise evaluation device, comprising:

management-finance information acquisition means for acquiring a rate of change in value added amount, labor distribution rate, rate of change in depreciation target tangible fixed assets, rate of change in the number of employees, total assets, operating profit, R&D cost, patent and other royalty income, financial assets, return on financial assets, tangible fixed assets, sales volume and return on tangible fixed assets of a specified enterprise, from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a..value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means, printing means, recording medium, or another telecommunications device via.a communication line.

22. An enterprise evaluation device, comprising:

management-finance information acquisition means for acquiring a rate of change in value added amount, labor distribution rate, rate of change in depreciation target tangible fixed assets, rate of change in the number of employees, total assets, sales profit, administrative expenses, R&D cost, patent and other royalty income, financial assets, return on financial assets, tangible fixed assets, sales volume and return on tangible fixed assets of a specified enterprise from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means, printing means, recording medium, or another telecommunications device via a communication line.

23. An enterprise evaluation device, comprising:

management-finance information acquisition means for acquiring a rate of change in value added amount, labor distribution rate, rate of change in depreciation target tangible fixed assets, rate of change in the number of employees, total assets, operating profit, R&D cost included in manufacturing costs, R&D cost included in administrative expenses, patent and other royalty income, financial assets, return on financial assets, tangible fixed assets, sales volume and return on tangible fixed assets of a specified enterprise from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income;

return on intellectual asset calculation means for calculating a return on intellectual asset of a specified enterprise through dividing the calculated earnings on intellectual asset of a specified enterprise by the total assets; and calculating an average return on intellectual asset of a plurality of enterprises;

excess earnings on intellectual asset calculation means for calculating excess earnings on intellectual asset by multiplying the total assets to a value obtained by subtracting the average return: on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means, printing means, recording medium, or another telecommunications device via a communication line.

24. An enterprise evaluation device, comprising:

management-finance information acquisition means for acquiring a rate of change in value added amount, labor distribution rate, rate of change in depreciation target tangible fixed assets, rate of change in the number of employees, total assets, sales profit, R&D cost included in manufacturing costs, administrative expenses, R&D cost included in administrative expenses, patent and other royalty income, financial assets, return on financial assets, tangible fixed assets, sales volume and return on tangible fixed assets of a specified enterprise from a management-finance database containing management-finance information of enterprises;

total factor productivity calculation means for calculating total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

earnings on intellectual asset calculation means for calculating earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost included in manufacturing costs, R&D cost included in administrative expenses and patent and other royalty income;

return on intellectual asset calculation means for calculating a return on intellectual asset of a specified enterprise through dividing the calculated earnings on intellectual asset of a specified enterprise by the total assets, and calculating an average return on intellectual asset of a plurality of enterprises;

excess earnings on intellectual asset calculation means for calculating excess earnings on intellectual asset by multiplying the total assets to a value obtained by subtracting the average return on intellectual asset from the return on intellectual asset of a specified enterprise;

excess return on intellectual asset calculation means for calculating excess return on intellectual asset through dividing the calculated excess earnings on intellectual asset by the acquired sales volume;

display data generation means for generating display data for associating the calculated total factor productivity and excess return on intellectual asset for display; and

output means for outputting the display data to display means, printing means, recording medium, or another telecommunications device via a communication line.

25. An enterprise evaluation device, comprising:

management-finance information acquisition means for acquiring an expected enterprise value profit, gross operating profit, patent and other royalty income, financial assets, return, on financial assets, tangible fixed assets and return on tangible fixed assets of a specified enterprise from a management-finance database containing management-finance information of enterprises;

expected intellectual property profit calculation means for calculating expected intellectual property profit by subtracting the sum of a value obtained by multiplying the return on financial assets to the acquired financial assets and a value obtained by multiplying the return on tangible assets to the tangible fixed assets from the expected enterprise value profit;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income;

display data generation means for generating display data for associating the calculated expected intellectual property profit and earnings on intellectual asset for display; and

output means for outputting the display data to display means, printing means, recording medium, or another telecommunications device via a communication line.

26. An enterprise evaluation device, comprising:

management-finance information-acquisition means for acquiring an expected enterprise value profit, operating profit, R&D cost, patent and other royalty income, financial assets, return on financial assets, tangible fixed assets and return on tangible fixed assets of a specified enterprise from a management-finance database containing management-finance information of enterprises;

expected intellectual property profit calculation means for calculating expected intellectual property profit by subtracting the sum of a value obtained by multiplying the return on financial assets to the acquired financial assets and a value obtained by multiplying the return on tangible assets to the tangible fixed assets from the expected enterprise value profit;

earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;

display data generation means for generating display data for associating the calculated expected intellectual property profit and earnings on intellectual asset for display; and

output means for outputting the display data to display means, printing means, recording medium, or another telecommunications device via a communication line.

27. An enterprise evaluation device, comprising:

management-finance information acquisition means for acquiring fixed liabilities, return on fixed liabilities, total market value, return on total market value, gross operating profit, patent and other royalty income, financial assets, return on financial assets, tangible fixed assets and return on tangible fixed assets of a specified enterprise from a management-finance database containing management-finance information of enterprises;
expected intellectual property profit calculation means for calculating expected intellectual property profit by subtracting a value obtained by multiplying the return on financial assets to the financial assets and a value obtained by multiplying the return on tangible assets to the tangible fixed assets from the sum of a value obtained by multiplying the return on fixed liabilities to the acquired fixed liabilities and a value obtained by multiplying the return on total market value to the total market value;
earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income;
display data generation means for generating display data for associating the calculated expected intellectual property profit and earnings on intellectual asset for display; and
output means for outputting the display data to display means, printing means, recording medium, or another telecommunications, device via a communication line.

28. An enterprise evaluation device, comprising:

management-finance information acquisition means for acquiring fixed liabilities, return on fixed liabilities, total market value, return on total market value, operating profit, R&D cost, patent and other royalty income, financial assets, return on financial assets, tangible fixed assets and return on tangible fixed assets of a specified enterprise from a management-finance database containing management-finance information of enterprises;
expected intellectual property profit calculation means for calculating expected intellectual property profit by subtracting a value obtained by multiplying the return on financial assets to the acquired financial assets and a value obtained by multiplying the return on tangible assets to the tangible fixed assets from the sum of a value obtained by multiplying the return on fixed liabilities to the acquired fixed liabilities and a value obtained by multiplying the return on total market value to the total market value;
earnings on intellectual asset calculation means for calculating earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;
display data generation means for generating display data for associating the calculated expected intellectual property profit and earnings on intellectual asset for display; and
output means for outputting the display data to display means, printing means, recording medium, or another telecommunications device via a communication line.

29. An enterprise evaluation device, comprising:

management-finance information acquisition means for acquiring R&D cost in a first specified period of a specified enterprise from a management-finance database containing management-finance information of enterprises;
gazette acquisition means for acquiring registration gazettes based on patent applications filed by a specified enterprise within a second specified period from a database;
number-of-inventions acquisition means for acquiring the number of patents subjected to, before a predetermined time, registration or number of claims of the patents as the number of inventions from the acquired registration gazettes;
number-of-extinguished-inventions acquisition means for acquiring the number of extinguished inventions of patents extinguished before the predetermined time among the acquired number of inventions;
total number-of-effective-patents calculation means for calculating the total number of effective patents by subtracting the number of extinguished inventions from the acquired number of inventions;
total patent assets calculation means for calculating the total patent assets by multiplying the total number of effective patents to a value obtained through dividing the acquired R&D cost by the number of inventions; and

output means for outputting the calculated total patent assets to display means, printing means, recording medium, or another telecommunications device via a communication line.

**30.** An enterprise evaluation device, comprising:

management-finance information acquisition means for acquiring R&D cost in a first specified period of a specified enterprise from a management-finance database containing management-finance information of enterprises;

gazette acquisition means for acquiring registration gazettes based on patent applications filed by a specified enterprise within a second specified period from a database;

number of inventions per applicant acquisition means for acquiring the number of patents subjected to, before a predetermined time, registration or number of claims of the patents as the number of registered inventions from each of the acquired registration gazettes, acquiring the number of applicants listed in each of the acquired gazettes, and acquiring the number of registered inventions per unit of applicant through dividing the acquired number of registered inventions by the number of applicants;

number of registered inventions acquisition means for acquiring the total number of registered inventions as the number of inventions by integrating the acquired number of registered inventions per unit of applicant for the all acquired gazettes;

number-of-extinguished-inventions acquisition means for acquiring the number of extinguished inventions of patents extinguished before the predetermined time among the acquired number of inventions;

total number-of-effective-patents calculation means for calculating the total number of effective patents by subtracting the number of extinguished inventions from the acquired number of inventions;

total effective patent remaining ratio calculation means for calculating the total effective patent remaining ratio through dividing the calculated total number of effective patents by the number of inventions;

total patent assets calculation means for calculating the total patent assets by multiplying the total number of effective patents to a value obtained through dividing the acquired R&D cost by the number of registered inventions; and

output means for outputting the calculated total patent assets to display means, printing means, recording medium, or another telecommunications device via a communication line.

**31.** An enterprise evaluation device, comprising:

management-finance information acquisition means for acquiring R&D cost in a first specified period and sales volume in a second specified period of a specified enterprise from a management-finance database containing management-finance information of enterprises;

gazette acquisition means.for acquiring registration gazettes based on patent applications filed by a specified enterprise within a third specified period from a database;

number-of-inventions acquisition means for acquiring the number of patents subjected to, before a predetermined time, registration or number of claims of the patents as the number of inventions from the acquired registration gazettes;

number-of-extinguished-inventions acquisition means for acquiring the number of extinguished inventions of patents extinguished before the predetermined time among the acquired number of inventions;

total number-of-effective-patents calculation means for calculating the total number of effective patents by subtracting the number of extinguished inventions from the acquired number of inventions;

total patent assets calculation means for calculating the total patent assets by multiplying the total number of effective patents to a value obtained through dividing the acquired R&D cost by the number of inventions;

display data generation means for generating display data for associating the calculated total patent assets and the acquired sales volume for display; and

output means for outputting the display data to display means, printing means, recording medium, or another telecommunications device via a communication line.

**32.** An enterprise evaluation device, comprising:

management-finance information acquisition means for acquiring R&D cost in a first specified period and sales volume in a second specified period of a specified enterprise from a management-finance database containing management-finance information of enterprises;

gazette acquisition means for acquiring registration gazettes based on patent applications filed by a specified enterprise within a third specified period from a database;

number of inventions per applicant acquisition means for acquiring the number of patents subjected to, before a predetermined time, registration or number of claims of the patents as the number of registered inventions from each of the acquired registration gazettes, acquiring the number of applicants listed in each of the acquired gazettes, and acquiring the number of registered inventions per unit of applicant through dividing the acquired number of registered inventions by the number of applicants;

number of registered inventions acquisition means for acquiring the total number of registered inventions as the number of inventions by integrating the acquired number of registered inventions per unit of applicant for the all acquired gazettes;

number-of-extinguished-inventions acquisition means for acquiring the number of extinguished inventions of patents extinguished before the predetermined time among the acquired number of inventions;

total number-of-effective-patents calculation means for calculating the total number of effective patents by subtracting the number of extinguished inventions from the acquired number of inventions;

total effective patent remaining ratio calculation means for calculating the total effective patent remaining ratio through dividing the calculated total number of effective patents by the number of inventions;

total patent assets calculation means for calculating the total patent assets by multiplying the total number of effective patents to a value obtained through dividing the acquired R&D cost by the number of registered inventions;

display data generation means for generating display data for associating the calculated total patent assets and the acquired sales volume for display; and

output means for outputting the display data to display means, printing means, recording medium, or another telecommunications device via a communication line.

33. An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, output means for outputting the earnings on intellectual asset, and information processing means capable of controlling the management-finance information acquisition means, earnings on intellectual asset calculation means and output means,

wherein the information processing means realizes:

a function for causing the management-finance information acquisition means to acquire the gross operating profit, patent and other royalty income, financial assets, return on financial assets, tangible fixed assets and return on tangible fixed assets of a specified enterprise from the management-finance database containing management-finance information of enterprises;

a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income; and

a function for causing the output means to output the calculated earnings on intellectual asset to display means, printing means, recording medium, or another telecommunications device via a communication line.

34. An enterprise evaluation program to be executed in an enterprise evaluation device.comprising management-finance information acquisition means for acquiring management-finance information from a management-finance database, earnings on intellectual asset calculation means for calculating the earnings on intellectual asset from the management-finance information, output means for outputting the earnings on intellectual asset, and information processing means capable of controlling the management-finance information acquisition means, earnings on intellectual asset calculation means and output means,

wherein the information processing means realizes:

a function for causing the management-finance information acquisition means to acquire the operating profit, R&D cost, patent and others royalty income, financial assets, return on financial assets, tangible fixed assets and return on tangible fixed assets of a specified enterprise from the management-finance database containing management-finance information of enterprises;

a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income; and

a function for causing the output means to output the calculated earnings on intellectual asset to display means, printing means, recording medium, or another telecommunications device via a communication line.

35. An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, output means for outputting the earnings on intellectual asset, and information processing means capable of controlling the management-finance information acquisition means, earnings on intellectual asset calculation means and output means,
wherein the information processing means realizes:

a function for causing the management-finance information acquisition means to acquire the sales profit, administrative expenses, R&D cost, patent and other royalty income, financial assets, return on financial assets, tangible fixed assets and return on tangible fixed assets of a specified enterprise from the management-finance database containing management-finance information of enterprises;
a function for causing the earnings on intellectual asset calculation means to calculate the earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income; and
a function for causing the output means to output the calculated earnings on intellectual asset to display means, printing means, recording medium, or another telecommunications device via a communication line.

36. An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, output means for outputting the earnings on intellectual asset, and information processing means capable of controlling the management-finance information acquisition means, earnings on intellectual asset calculation means and output means,
wherein the information processing means realizes:

a function for causing the management-finance information acquisition means to acquire the operating profit, R&D cost included in manufacturing costs, R&D cost included in administrative expenses, patent and other royalty income, financial assets, return on financial assets, tangible fixed assets and return on tangible fixed assets of a specified enterprise from the management-finance database containing management-finance information of enterprises;
a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income; and
a function for causing the output means to output the calculated earnings on intellectual asset to display means, printing means, recording medium, or another telecommunications device via a communication line.

37. An eriterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, output means for outputting the earnings on intellectual asset, and information processing means capable of controlling the management-finance information acquisition means, earnings on intellectual asset calculation means and output means,
wherein the information processing means realizes:

a function for causing the management-finance information acquisition means to acquire the sales profit, R&D cost included in manufacturing costs, administrative expenses, R&D cost included in administrative expenses, patent and other royalty income, financial assets, return on financial assets, tangible fixed assets and return on tangible fixed assets of a specified enterprise from the management-finance database containing management-finance information of enterprises;
a function for causing the earnings on intellectual asset calculation means to calculate the earnings on intellectual asset by subtracting the administrative expenses, a value obtained by multiplying the return on financial assets to the financial assets and a value obtained by multiplying the, return on tangible assets to the tangible fixed assets, from the sum of the acquired sales profit, R&D cost included in manufacturing costs, R&D cost included in administrative expenses and patent and other royalty income; and
a function for causing the output means to output the calculated earnings on intellectual asset to display means, printing means, recording medium, or another telecommunications device via a communication line.

**38.** An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, return on intellectual asset calculation means for calculating return on intellectual asset from the earnings on intellectual asset, output means for outputting the return on intellectual asset, and information processing means capable of controlling the management-finance information acquisition means, earnings on intellectual asset calculation means, return on intellectual asset calculation means and output means, wherein the information processing means realizes:

a function for causing the management-finance information acquisition means to acquire the total assets, gross operating profit, patent and other royalty income, financial assets, return on financial assets, tangible fixed assets and return on tangible fixed assets of a specified enterprise from the management-finance database containing management-finance information of enterprises;
a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income;
a function for causing the return on intellectual asset calculation means to calculate the return on intellectual asset through dividing the calculated earnings on intellectual asset by the total assets; and
a function for causing the output means to output the calculated return on intellectual asset to display means, printing means, recording medium, or another telecommunications device via a communication line.

**39.** An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, return on intellectual asset calculation means for calculating return on intellectual asset from the earnings on intellectual asset, output means for outputting the return on intellectual asset, and information processing means capable of controlling the management-finance information acquisition means, earnings on intellectual asset calculation means, return on intellectual asset calculation means and output means, wherein the information processing means realizes:

a function for causing the management-finance information acquisition means to acquire the total assets, operating profit, R&D cost, patent and other royalty inconte, financial assets, return on financial assets, tangible fixed assets and return on tangible fixed assets of a specified enterprise from the management-finance database containing management-finance information of enterprises;
a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;
a function for causing the return on intellectual asset calculation means to calculate the return on intellectual asset through dividing the calculated earnings on intellectual asset by the total assets; and
a function for causing the output means to output the calculated return on intellectual asset to display means, printing means, recording medium, or another telecommunications device via a communication line.

**40.** An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, return on intellectual asset calculation means for calculating return on intellectual asset from the earnings on intellectual asset, output means for outputting the return on intellectual asset, and information processing means capable of controlling the management-finance information acquisition means, earnings on intellectual asset calculation means, return on intellectual asset calculation means and output means, wherein the information processing means realizes:

a function for causing the management-finance information acquisition means to acquire the total assets, sales profit, administrative expenses, R&D cost, patent and other royalty income, financial assets, return on financial assets, tangible fixed assets and return on tarigible fixed assets of a specified enterprise from the management-finance database containing management-finance information of enterprises;

a function for causing the earnings on intellectual asset calculation means to calculate the earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income;

a function for causing the return on intellectual asset calculation means to calculate the return on intellectual asset through dividing the calculated earnings on intellectual asset by the total assets; and

a function for causing the output means to output the calculated return on intellectual asset to display means, printing means, recording medium, or another telecommunications device via a communication line.

41. An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, return on intellectual asset calculation means for calculating return on intellectual asset from the earnings on intellectual asset, output means for outputting the return on intellectual asset, and information processing means capable of controlling the management-finance information acquisition means, earnings on intellectual asset calculation means, return on intellectual asset calculation means and output means,
wherein the information processing means realizes:

a function for causing the management-finance information acquisition means to acquire the total assets, operating profit, R&D cost included in manufacturing costs, R&D cost included in administrative expenses, patent and other royalty income, financial assets, return on financial assets, tangible fixed assets and return on tangible fixed assets of a specified enterprise from the management-finance database containing management-finance information of enterprises;

a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income;

a function for causing the return on intellectual asset calculation means to calculate the return on intellectual asset through dividing the calculated earnings on intellectual asset by the total assets; and

a function for causing the output means to output the calculated return on intellectual asset to display means, printing means, recording medium, of another telecommunications device via a communication line.

42. An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, return on intellectual asset calculation means for calculating return on intellectual asset from the earnings on intellectual asset, output means for outputting the return on intellectual asset, and information processing means capable of controlling the management-finance information acquisition means, earnings on intellectual asset calculation means, return on intellectual asset calculation means and output means,
wherein the information processing means realizes:

a function for causing the management-finance information acquisition means to acquire the total assets, sales profit, R&D cost included in manufacturing costs, administrative expenses, R&D cost included in administrative expenses, patent and other royalty income, financial assets, return on financial assets, tangible fixed assets and return on tangible fixed assets of a specified enterprise from the management-finance database containing management-finance information of enterprises;

a function for causing the earnings on intellectual asset calculation means to calculate the earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost included in manufacturing costs, R&D cost included in administrative expenses and patent and other royalty income;

a function for causing the return on intellectual asset calculation means to calculate the return on intellectual asset through dividing the calculated earnings on intellectual asset by the total assets; and

a function for causing the output means to output the calculated return on intellectual asset to display means, printing means, recording medium, or another telecommunications device via a communication line.

**43.** An enterprise evaluation program to be executed in an enterprise evaluation device comprising management-finance information acquisition means for acquiring management-finance information from a management-finance database, excess earnings on intellectual asset calculation means for calculating the excess earnings on intellectual asset from the management-finance information, output means for outputting the excess earnings on intellectual asset, and information processing means capable of controlling the management-finance information acquisition means, excess earnings on intellectual asset calculation means and output means, wherein the information processing means realizes:

a function for causing the management-finance information acquisition means to acquire the total assets and return on intellectual asset of a specified enterprise in a specified period and average return on intellectual asset in a specified period from the management-finance database containing management-finance information of enterprises;
a function for causing the excess earnings on intellectual asset calculation means to calculate the excess earnings on intellectual asset by multiplying the total assets to a value obtained by subtracting the average return on intellectual assets from the return on intellectual assets of the specified enterprise; and
a function for causing the output means to output the calculated excess earnings on intellectual asset to display means, printing means, recording medium, or another telecommunications device via a communication line.

**44.** An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, return on intellectual asset calculation means for calculating return on intellectual asset from the earnings on intellectual asset, excess earnings on intellectual asset calculation means for calculating the excess earnings on intellectual asset from the return on intellectual asset, output means for outputting the excess earnings on intellectual asset, and information processing means capable of controlling the management-finance information acquisition means, earnings on intellectual asset calculation means, return on intellectual asset calculation means, excess earnings on intellectual asset calculation means and output means, wherein the information processing means realizes:

a function for causing the management-finance information acquisition means to acquire the total assets, gross operating profit, patent and other royalty income, financial assets, return on financial assets, tangible fixed assets and return on tangible fixed assets of a specified enterprise from the management-finance database containing management-finance information of enterprises;
a function for causing the earnings on intellectual asset calculation means to calculate earnings on intellectual asset of a specified enterprise by subtracting a value obtained-by multiplying the return on financial assets to the financial assets and a value obtained by multiplying the return on tangible assets to the tangible fixed assets from the sum of the acquired gross operating profit and patent and other royalty income;
a function for causing the return on intellectual asset calculation means to calculate a return on intellectual asset of a specified enterprise through dividing the calculated earnings on intellectual asset of a specified enterprise by the total assets, and calculate an average return on intellectual asset of a plurality of enterprises;
a function for causing the excess earnings on intellectual asset calculation means to calculate excess earnings on intellectual asset by multiplying the total assets to a value obtained by subtracting the average return on intellectual asset from the return on intellectual asset of a specified enterprise; and
a function for causing the output means to output the calculated excess earnings on intellectual asset to display means, printing means, recording medium, or another telecommunications device via a communication line.

**45.** An: enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, return on intellectual asset calculation means for calculating return on intellectual asset from the earnings on intellectual asset, excess earnings on intellectual asset calculation means for-calculating the excess earnings on intellectual asset from the return on intellectual asset, output means for outputting the excess earnings on intellectual asset, and information processing means capable of controlling the management-finance information acquisition means, earnings on intellectual asset calculation means, return on intellectual asset calculation means, excess earnings on intellectual asset calculation means and output means,

wherein the information processing means realizes:

a function for causing the management-finance information acquisition means to acquire the total assets, operating profit, R&D cost, patent and other royalty income, financial assets, return on financial assets, tangible fixed assets and return on tangible fixed assets of a specified enterprise from the management-finance database containing management-finance information of enterprises;

a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;

a function for causing the return on intellectual asset calculation means to calculate the return on intellectual asset of a specified enterprise through dividing the calculated earnings on intellectual asset of a specified enterprise by the total assets, and calculate an average return on intellectual asset of a plurality of enterprises;

a function for causing the excess earnings on intellectual asset calculation means to calculate the excess earnings on intellectual asset by multiplying the total assets to a value obtained by subtracting the average return on intellectual asset from the return on intellectual asset of a specified enterprise; and

a function for causing the output means to output the calculated excess earnings on intellectual asset to display means, printing means, recording medium, or another telecommunications device via a communication line.

46. An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, return on intellectual asset calculation means for calculating return on intellectual asset from the earnings on intellectual asset, excess earnings on intellectual asset calculation means for calculating the excess earnings on intellectual asset from the return on intellectual asset, output means for outputting the excess earnings on intellectual asset, and information processing means capable of controlling the management-finance information acquisition means, earnings on intellectual asset calculation means, return on intellectual asset calculation means, excess earnings on intellectual asset calculation means and output means,
wherein the information processing means realizes:

a function for causing the management-finance information acquisition means to acquire the total assets, sales profit, administrative expenses, R&D cost, patent and other royalty income, financial assets, return on financial assets, tangible fixed assets and return on tangible fixed assets of a specified enterprise from the management-finance database containing management-finance information of enterprises;

a function for causing the earnings on intellectual asset calculation means to calculate the earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income;

a function for causing the return on intellectual asset calculation means to calculate the return on intellectual asset of a specified enterprise through dividing the calculated earnings on intellectual asset of a specified enterprise by the total assets, and calculate an average return on intellectual asset of a plurality of enterprises;

a function for causing the excess earnings on intellectual asset calculation means to calculate the excess earnings on intellectual asset by multiplying the total assets to a value obtained by subtracting the average return on intellectual asset' from the return on intellectual asset of a specified enterprise; and

a function for causing the output means to output the calculated excess earnings on intellectual asset to display means, printing means, recording medium, or another telecommunications device via a communication line.

47. An enterprise evaluation program to be executed in an enterprise evaluation device comprising management-finance information acquisition means for acquiring management-finance information from a management-finance database earnings on intellectual asset calculation means for calculating the earnings on intellectual asset from the management-finance information, return on intellectual asset calculation means for calculating return on intellectual asset from the earnings on intellectual asset, excess earnings on intellectual asset calculation means for calculating the excess earnings on intellectual asset from the return on intellectual asset, output means for outputting the excess earnings on intellectual asset, and information processing means capable of controlling the management-finance information acquisition means, earnings on intellectual asset calculation means, return on intellectual asset calculation means, excess earnings on intellectual asset calculation means and output means,
wherein-the information processing means realizes:

a function for causing the management-finance information acquisition means to acquire the total assets, operating profit, R&D cost included in manufacturing costs, R&D cost included in administrative expenses, patent and other royalty income, financial assets, return on financial assets, tangible fixed assets and return on tangible fixed assets of a specified enterprise from the management-finance database containing management-finance information of enterprises;

a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income;

a function for causing the return on intellectual asset calculation means to calculate the return on intellectual asset of a specified enterprise through dividing the calculated earnings on intellectual asset of a specified enterprise by the total assets, and calculate all average return on intellectual asset of a plurality of enterprises;

a function for causing the excess earnings on intellectual asset calculation means to calculate the excess earnings on intellectual asset by multiplying the total assets to a value obtained by subtracting the average return on intellectual asset from the return on intellectual asset of a specified enterprise; and

a function for causing the output means to output the calculated excess earnings on intellectual asset to display means, printing means, recording medium, or another telecommunications device via a communication line.

48. An enterprise evaluation program to be executed in an enterprise evaluation device comprising management-finance information acquisition means for acquiring management-finance information from a management-finance database, earnings on intellectual asset calculation means for calculating the earnings on intellectual asset from the management-finance information, return on intellectual asset calculation means for calculating return on intellectual asset from the earnings on intellectual asset, excess earnings on intellectual asset calculation means for calculating the excess earnings on intellectual asset from the return on intellectual asset, output means for outputting the excess earnings on intellectual asset, and information processing means capable of controlling the management-finance information acquisition means, earnings on intellectual asset calculation means, return on intellectual asset calculation means, excess earnings on intellectual asset calculation means and output means, wherein the information processing means realizes:

a function for causing the management-finance information acquisition means to acquire the total assets, sales profit, R&D cost included in manufacturing costs, administrative expenses, R&D cost included in administrative expenses, patent and other royalty income, financial assets, return on financial assets, tangible fixed assets and return on tangible fixed assets of a specified enterprise from the management-finance database containing management-finance information of enterprises;

a function for causing the earnings on intellectual asset calculation means to calculate the earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost included in manufacturing costs, R&D cost included in administrative expenses and patent and other royalty income;

a function for causing the return on intellectual asset calculation means to calculate the return on intellectual asset of a specified enterprise through dividing the calculated earnings on intellectual asset of a specified enterprise by the total assets, and calculate an average return on intellectual asset of a plurality of enterprises;

a function for causing the excess earnings on intellectual asset calculation means to calculate the excess earnings on intellectual asset by multiplying the total assets to a value obtained by subtracting the average return on intellectual asset from the return on intellectual asset of a specified enterprise; and

a function for causing the output means to output the calculated excess earnings on intellectual asset to display means, printing means, recording medium, or another telecommunications device via a communication line.

49. An enterprise evaluation program to be executed in an enterprise evaluation device comprising management-finance information acquisition means for acquiring management-finance information from a management-finance database, excess earnings on intellectual asset calculation means for calculating the excess earnings on intellectual asset from the management-finance information, excess return on intellectual asset calculation means for calculating excess return on intellectual asset, output means for outputting the excess return on intellectual asset, and information processing means capable of controlling the management-finance information acquisition means, excess earnings, on intellectual asset calculation means, excess return on intellectual asset calculation means and output means, wherein the information processing means realizes:

a function for causing the management-finance information acquisition means to acquire the total assets, sales volume and return on intellectual asset of a specified enterprise in a specified period and average return on intellectual asset in a specified period from the management-finance database containing management-finance information of enterprises;

a function for causing the excess earnings on intellectual asset calculation means to calculate the excess earnings on intellectual asset by multiplying the total assets to a value obtained by subtracting the average return on intellectual assets from the return on intellectual assets of the specified enterprise;

a function for causing the excess return on intellectual asset calculation means to calculate the excess return on intellectual asset through dividing the calculated excess earnings on intellectual asset by the acquired sales volume; and

a function for causing the output means to output the calculated excess return on intellectual asset to display means, printing means, recording medium, or another telecommunications device via a communication line.

50. An enterprise evaluation program to be executed in an enterprise evaluation device comprising management-finance information acquisition means for acquiring management-finance information from a management-finance database, earnings on intellectual asset calculation, means, for calculating the earnings on intellectual asset from the management-finance information, return on intellectual asset calculation means for calculating return on intellectual asset from the earnings on intellectual asset, excess earnings on intellectual asset calculation means for calculating the excess earnings on intellectual asset from the return on intellectual asset, excess return on intellectual asset calculation means for calculating excess return on intellectual asset, output means for outputting the excess return on intellectual asset, and information processing means capable of controlling the management-finance information acquisition means, earnings on intellectual asset calculation means, return on intellectual asset calculation means, excess earnings on intellectual asset calculation means, excess return on intellectual asset calculation means and output means,

wherein the information processing means realizes:

a function for causing the management-finance information acquisition means to acquire the total assets, gross operating profit, patent and other royalty income, financial assets, return on financial assets, tangible fixed assets, sales volume and return on tangible fixed assets of a specified enterprise from the management-finance database containing management-finance information of enterprises;

a function for causing the earnings on intellectual asset calculation means to calculate the earnings on intellectual asset of a specified enterprise by subtracting a value obtained by multiplying the return on financial assets to the financial assets and a value obtained by multiplying the return on tangible assets to the tangible fixed assets from the sum of the acquired gross operating profit and patent and other royalty income;

a function for causing the return on intellectual asset calculation means to calculate the return on intellectual asset of a specified enterprise through dividing the calculated earnings on intellectual asset of a specified enterprise by the total assets, and calculate an average return on intellectual asset of a plurality of enterprises;

a function for causing the excess earnings on intellectual asset calculation means to calculate the excess earnings on intellectual asset by multiplying the total assets to a value obtained by subtracting the average return on intellectual asset from the return on intellectual asset of a specified enterprise;

a function for causing the excess return on intellectual asset calculation means to calculate the excess return on intellectual asset through dividing the calculated excess earnings on intellectual asset by the acquired sales volume; and

a function for causing the output means to output the calculated excess return on intellectual asset to display means, printing means, recording medium, or another telecommunications device via a communication line.

51. An enterprise evaluation program to be executed in an enterprise evaluation device comprising management-finance information acquisition means for acquiring management-finance information from a management-finance database, total factor productivity calculation means for calculating total factor productivity from the management-finance information, excess earnings on intellectual asset calculation means for calculating excess earnings on intellectual asset from the management-finance information, excess return on intellectual asset calculation means for calculating excess return on intellectual asset, display data generation means for generating display data, output means for outputting the display data, and information processing means capable of controlling the management-finance information acquisition means, total factor productivity calculation means, excess earnings on intellectual asset calculation means, excess return on intellectual asset calculation means, display data generation means and output means,

wherein the information processing means realizes:

a function for causing the management-finance information acquisition means to acquire the rate of change in value added amount, labor distribution rate, rate of change in depreciation target tangible fixed assets, rate of change in the number of employees, total assets and return on intellectual asset of a specified enterprise, average return on intellectual asset and sales volume from the management-finance database containing management-finance information of enterprises;

a function for causing the total factor productivity calculation means to calculate the total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

a function for causing the excess earnings on intellectual asset calculation means to calculate the excess earnings on intellectual asset by multiplying the total assets to a value obtained by subtracting the average return on intellectual asset from the return on intellectual asset of a specified enterprise;

a function for causing the excess return on intellectual asset calculation means to calculate the excess return on intellectual asset through dividing the calculated excess earnings on intellectual asset by the acquired sales volume;

a function for causing the display data generation means to generate the display data for associating the calculated total factor productivity and excess return on intellectual asset for display; and

a function for causing the output means to output the display data to display means, printing means, recording medium, or another telecommunications device via a communication line.

52. An enterprise evaluation program to be executed in an enterprise evaluation device comprising management-finance information acquisition means for acquiring management-finance information from a management-finance database, total factor productivity calculation means for calculating total factor productivity from the management-finance information, earnings on intellectual asset calculation means for calculating earnings on intellectual asset from the management-finance information, return on intellectual asset calculation means for calculating return on intellectual asset from the earnings on intellectual asset, excess earnings on intellectual asset calculation means for calculating excess earnings on intellectual asset from the return on intellectual asset, excess return on intellectual asset calculation means for calculating excess return on intellectual asset, display data generation means for generating display data, output means for outputting the display data, and information processing means capable of controlling the management-finance information acquisition means, total factor productivity calculation means, earnings on intellectual asset calculation means, return on intellectual asset calculation means, excess earnings on intellectual asset calculation means, excess return on intellectual asset calculation means, display data generation means and output means,

wherein the information processing means realizes:

a function for causing the management-finance information acquisition means to acquire the rate of change in value added amount, labor distribution rate, rate of change in depreciation target tangible fixed assets, rate of change in the number of employees, total assets, gross operating profit, patent and other royalty income, financial assets, return on financial assets, tangible fixed assets, sales volume and return on tangible fixed assets of a specified enterprise from the management-finance database containing management-finance information of enterprises;

a function for causing the total factor productivity calculation means to calculate the total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

a function for causing the earnings on intellectual asset calculation means to calculate the earnings on intellectual asset of a specified enterprise by subtracting a value obtained by multiplying the return on financial assets to the financial assets and a value obtained by multiplying the return on tangible assets to the tangible fixed assets from the sum of the acquired gross operating profit and patent and other royalty income;

a function for causing the return on intellectual asset calculation means to calculate the return on intellectual asset of a specified enterprise through dividing the calculated earnings on intellectual asset of a specified enterprise by the total assets, and calculate an average return on intellectual asset of a plurality of enterprises;

a function for causing the excess earnings on intellectual asset calculation means to calculate the excess earnings on intellectual asset by multiplying the total assets to a value obtained by subtracting the average return on intellectual asset from the return on intellectual asset of a specified enterprise;

a function for causing the excess return on intellectual asset calculation means to calculate the excess return on intellectual asset through dividing the calculated excess earnings on intellectual asset by the acquired sales volume;

a function far causing the display data generation means to generate the display data for associating the calculated total factor productivity and excess return on intellectual asset for display; and
a function for causing the output means to output the display data to display means, printing means, recording medium, or another telecommunications device via a communication line.

53. An enterprise evaluation program to be executed in an enterprise evaluation device comprising management-finance information acquisition means for acquiring management-finance information from a management-finance database, total factor productivity calculation means for calculating total factor productivity from the management-finance information, earnings on intellectual asset calculation means for calculating earnings on intellectual asset from the management-finance information, return on intellectual asset calculation means for calculating return on intellectual asset from the earnings on intellectual asset, excess earnings on intellectual asset calculation means for calculating excess earnings on intellectual asset from the return on intellectual asset, excess return on intellectual asset calculation means for calculating excess return on intellectual asset, display data generation means for generating display data, output means for outputting the display data, and information processing means capable of controlling the management-finance information acquisition means, total factor productivity calculation means, earnings on intellectual asset calculation means, return on intellectual asset calculation means, excess earnings on intellectual asset calculation means, excess return on intellectual asset calculation means, display data generation means and output means,
wherein the information processing means realizes:

a function for causing the management-finance information acquisition means to acquire the rate of change in value added amount, labor distribution rate, rate of change in depreciation target tangible fixed assets, rate of change in the number of employees, total assets, operating profit; R&D cost, patent and other royalty income, financial assets, return on financial assets, tangible fixed assets, sales volume and return on tangible fixed assets of a specified enterprise from the management-finance database containing management-finance information of enterprises;
a function for causing the total factor productivity calculation means to calculate the total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;
a function for causing.the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;
a function for causing the return on intellectual asset calculation means to calculate the return on intellectual asset of a specified enterprise through dividing the calculated earnings on intellectual asset of a specified enterprise by the total assets, and calculate an average return on intellectual asset of a plurality of enterprises;
a function for causing the excess earnings on intellectual asset calculation means to calculate the excess earnings on intellectual asset by multiplying the total assets to a value obtained by subtracting the average return on intellectual asset from the return on intellectual asset of a specified enterprise;
a function for causing the excess return on intellectual asset calculation means to calculate the excess return on intellectual asset through dividing the calculated excess earnings on intellectual asset by the acquired sales volume;
a function for causing the display data generation means to generate the display data for associating the calculated total factor productivity and excess return on intellectual asset for display; and
a function for causing the output means to output the display data to display means, printing means, recording medium, or another telecommunications device via a communication line.

54. An enterprise evaluation program to be executed in an enterprise evaluation device comprising management-finance information acquisition means for acquiring management-finance information from a management-finance database, total factor productivity calculation means for calculating total factor productivity from the management-finance information, earnings on intellectual asset calculation means for calculating earnings on intellectual asset from the management-finance information, return on intellectual asset calculation means for calculating return on intellectual asset from the earnings on intellectual asset, excess earnings on intellectual asset calculation means for calculating excess earnings on intellectual asset from the return on intellectual asset, excess return on intellectual asset calculation means for calculating excess return on intellectual asset, display data generation means for generating display data, output means for outputting the display data, and information processing means capable of controlling the management-finance information acquisition means, total factor productivity calculation means, earnings on intellectual asset calculation means, return on intellectual asset calculation means, excess earnings on intellectual asset calculation means, excess return on intellectual asset calculation means, display data generation means and output means,
wherein the information processing means realizes:

a function for causing the management-finance information acquisition means to acquire the rate of change in value added amount, labor distribution rate, rate of change in depreciation target tangible fixed assets, rate of change in the number of employees, total assets, sales profit, administrative expenses, R&D cost, patent and other royalty income, financial assets, return on financial assets, tangible fixed assets, sales volume and return on tangible fixed assets of a specified enterprise from the management-finance database containing management-finance information of enterprises;
a function for causing the total factor productivity calculation means to calculate the total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;
a function for causing the earnings on intellectual asset calculation means to calculate the earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost and patent and other royalty income;
a function for causing the return on intellectual asset calculation means to calculate the return on intellectual asset of a specified enterprise through dividing the calculated earnings on intellectual asset of a specified enterprise by the total assets, and calculate an average return on intellectual asset of a plurality of enterprises;
a function for causing the excess earnings on intellectual asset calculation means to calculate the excess earnings on intellectual asset by multiplying the total assets to a value obtained by subtracting the average return on intellectual asset from the return on intellectual asset of a specified enterprise;
a function for causing the excess return on intellectual asset calculation means to calculate the excess return on intellectual asset through dividing the calculated excess earnings on intellectual asset by the acquired sales volume;
a function for causing the display data generation means to generate the display data for associating the calculated total factor productivity and excess return on intellectual asset for display; and
a function for causing the output means to output the display data to display means, printing means, recording medium, or another telecommunications device via a communication line.

55. An enterprise evaluation program to be executed in an enterprise evaluation device comprising management-finance information acquisition means for acquiring management-finance information from a management-finance database, total factor productivity calculation means for calculating total factor productivity from the management-finance information, earnings on intellectual asset calculation means for calculating earnings on intellectual asset from the management-finance information, return on intellectual asset calculation means for calculating return on intellectual asset from the earnings on intellectual asset, excess earnings on intellectual asset calculation means for calculating excess earnings on intellectual asset from the return on intellectual asset, excess return on intellectual asset calculation means for calculating excess return on intellectual asset, display data generation means for generating display data, output means for outputting the display data, and information processing means capable of controlling the management-finance information acquisition means, total factor productivity calculation means, earnings on intellectual asset calculation means, return on intellectual asset calculation means, excess earnings on intellectual asset calculation means, excess return on intellectual asset calculation means, display data generation means and output means,
wherein the information processing means realizes:

a function for causing the management-finance information acquisition means to acquire the rate of change in value added amount, labor distribution rate, rate of change in depreciation target tangible fixed assets, rate of change in the number of employees, total assets, operating profit, R&D cost included in manufacturing costs, R&D cost included in administrative expenses, patent and other royalty income, financial assets, return on financial assets, tangible fixed assets, sales volume and return on tangible fixed assets of a specified enterprise from the management-finance database containing management-finance information of enterprises;
a function for causing the total factor productivity calculation means to calculate the total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired operating profit, R&D cost included in manufacturing costs, R&D cost included in administrative expenses and patent and other royalty income;

a function for causing the return on intellectual asset calculation means to calculate the return on intellectual asset of a specified enterprise through dividing the calculated earnings on intellectual asset of a specified enterprise by the total assets, and calculate an average return on intellectual asset of a plurality of enterprises;

a function for causing the excess earnings on intellectual asset calculation means to calculate the excess earnings on intellectual asset by multiplying the total assets to a value obtained by subtracting the average return on intellectual asset from the return on intellectual asset of a specified enterprise;

a function for causing the excess return on intellectual asset calculation means to calculate the excess return on intellectual asset through dividing the calculated excess earnings on intellectual asset by the acquired sales volume;

a function for causing the display data generation means to generate the display data for associating the calculated total factor productivity and excess return on intellectual asset for display; and

a function for causing the output means to output the display data to display means, printing means, recording medium, or another telecommunications device via a communication line.

56. An enterprise evaluation program to be executed in an enterprise evaluation device comprising management-finance information acquisition means for acquiring management-finance information from a management-finance database, total factor productivity calculation means for calculating total factor productivity from the management-finance information, earnings on intellectual asset calculation means for calculating earnings on intellectual asset from the management-finance information, return on intellectual asset calculation means for calculating return on intellectual asset from the earnings on intellectual asset, excess earnings on intellectual asset calculation means for calculating excess earnings on intellectual asset from the return on intellectual asset, excess return on intellectual asset calculation means, for calculating excess return on intellectual asset, display data generation means for generating display data, output means for outputting the display data, and information processing means capable of controlling the management-finance information acquisition means, total factor productivity calculation means, earnings on intellectual asset calculation means, return on intellectual asset calculation means, excess earnings on intellectual asset calculation means, excess return on intellectual asset calculation means, display data generation means and output means,

wherein the information processing means realizes:

a function for causing the management-finance information acquisition means to acquire the rate of change in value added amount, labor distribution rate, rate of change in depreciation target tangible fixed assets, rate of change in the number of employees, total assets, sales profit, R&D cost included in manufacturing costs, administrative expenses, R&D cost included in administrative expenses, patent and other royalty income, financial assets, return on financial assets, tangible fixed assets, sales volume and return on tangible fixed assets of a specified enterprise from the management-finance database containing management-finance information of enterprises;

a function for causing the total factor productivity calculation means to calculate the total factor productivity by subtracting a value obtained by multiplying the rate of change in depreciation target tangible fixed assets to a value obtained by subtracting the labor distribution rate from 1, and a value obtained by multiplying the rate of change in the number of employees to the labor distribution rate, from the rate of change in value added amount;

a function for causing the earnings on intellectual asset calculation means to calculate the earnings on intellectual asset by subtracting the administrative expenses, a value obtained by multiplying the return on financial assets to the financial assets and a value obtained by multiplying the return on tangible assets to the tangible fixed assets from the sum of the acquired sales profit, R&D cost included in manufacturing costs, R&D cost included in administrative expenses and patent and other royalty income;

a function for causing the return on intellectual asset calculation means to calculate the return on intellectual asset of a specified enterprise through dividing the calculated earnings on intellectual asset of a specified enterprise by the total assets, and calculate an average return on intellectual asset of a plurality of enterprises;

a function for causing the excess earnings on intellectual asset calculation means to calculate the excess earnings on intellectual asset by multiplying the total assets to a value obtained by subtracting the average return on intellectual asset from the return on intellectual asset of a specified enterprise;

a function for causing the excess return on intellectual asset calculation means to calculate the excess return on intellectual asset through dividing the calculated excess earnings on intellectual asset by the acquired sales volume;

a function for causing the display data generation means to generate the display data for associating the calculated total factor productivity and excess return on intellectual asset for display; and

a function for causing the output means to output the display data to display means, printing means, recording medium, or another telecommunications device via a communication line.

57. An enterprise evaluation program to be executed in an enterprise evaluation device comprising management-finance information acquisition means for acquiring management-finance information from a management-finance database, expected intellectual property profit calculation means for calculating expected intellectual property profit from the management-finance information, earnings on intellectual asset calculation means for calculating earnings on intellectual asset from the management-finance information, display data generation means for generating display data, output means for outputting the display data, and information processing means capable of controlling the management-finance information acquisition means, expected intellectual property profit calculation means, earnings on intellectual asset calculation means, display data generation means and output means,

wherein the information processing means realizes:

a function for causing the management-finance information acquisition means to acquire the expected enterprise value profit, gross operating profit, patent and other royalty income, financial assets, return on financial assets, tangible fixed assets and return on tangible fixed assets of a specified enterprise from the management-finance database containing management-finance information of enterprises;

a function for causing the expected intellectual property profit calculation means to calculate the expected intellectual property profit by subtracting the sum of a value obtained by multiplying the return on financial assets to the acquired financial assets and a value obtained by multiplying the return on tangible assets to the tangible fixed assets from the expected enterprise value profit;

a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired gross operating profit and patent and other royalty income;

a function for causing the display data generation means to generate the display data for associating the calculated expected intellectual property profit and earnings on intellectual asset for display; and

a function for causing the output means to output the display data to display means, printing means, recording medium, or another telecommunications device via a communication line.

58. An enterprise evaluation program to be executed in an enterprise evaluation device comprising management-finance information acquisition means for acquiring management-finance information from a management-finance database, expected intellectual property profit calculation means for calculating expected intellectual property profit from the management-finance information, earnings on intellectual asset calculation means for calculating earnings on intellectual asset from the management-finance information, display data generation means for generating display data, output means for outputting the display data, and information processing means capable of controlling the management-finance information acquisition means, expected intellectual property profit calculation means, earnings on intellectual asset calculation means, display data generation means and output means,

wherein the information processing means realizes:

a function for causing the management-finance information acquisition means to acquire the expected enterprise value profit, operating profit, R&D cost, patent and other royalty income, financial assets, return on financial assets, tangible fixed assets and return on tangible fixed assets of a specified enterprise from the management-finance database containing management-finance information of enterprises;

a function for causing the expected intellectual property profit calculation means to calculate the expected intellectual property profit by subtracting the sum of a value obtained by multiplying the return on financial assets to the acquired financial assets and a value obtained by multiplying the return on tangible assets to the tangible fixed assets from the expected enterprise value profit;

a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired operating profit, R&D cost and patent and other royalty income;

a function for causing the display data generation means to generate the display data for associating the calculated expected intellectual property profit and earnings on intellectual asset for display; and

a function for causing the output means to output the display data to display means, printing means, recording medium, or another telecommunications device via a communication line.

59. An enterprise evaluation program to be executed in an enterprise evaluation device comprising management-finance information acquisition means for acquiring management-finance information from a management-finance database, expected intellectual property profit calculation means for calculating expected intellectual property profit from the management-finance information, earnings on intellectual asset calculation means for calculating earnings on intellectual asset from the management-finance information, display data generation means for generating display data, output means for outputting the display data, and information processing means capable of controlling the management-finance information acquisition means, expected intellectual property profit calculation means, earnings on intellectual asset calculation means, display data generation means and output means,
wherein the information processing means realizes:

a function for causing the management-finance information acquisition means to acquire the fixed liabilities, return on fixed liabilities, total market value, return on total market value, gross operating profit, patent and other royalty income, financial assets, return on financial assets, tangible fixed assets and return on tangible fixed assets of a specified enterprise from the management-finance database containing management-finance information of enterprises;
a function for causing the expected intellectual property profit calculation means to calculate the expected intellectual property profit by subtracting a value obtained by multiplying the return on financial assets to the financial assets and a value obtained by multiplying the return on tangible assets to the tangible fixed assets from the sum of a value obtained by multiplying the return on fixed liabilities to the acquired fixed liabilities and a value obtained by multiplying the return on total market value to the total market value;
a function for causing the earnings on intellectual asset calculation means to calculate the earnings on intellectual asset by subtracting a value obtained by multiplying the return on financial assets to the financial assets and a.value obtained by multiplying the return on tangible assets to the tangible fixed assets from the sum of the acquired gross operating profit and patent and other royalty income;
a function for causing the display data generation means to generate the display data for associating the calculated expected intellectual property profit and earnings on intellectual asset for display; and
a function for causing the output means to output the display data to display means, printing means, recording medium, or another telecommunications device via a communication line.

60. An enterprise evaluation program to be executed in an enterprise evaluation device comprising management-finance information acquisition means for acquiring management-finance information from a management-finance database, expected intellectual property profit calculation means for calculating expected intellectual property profit from the management-finance information, earnings on intellectual asset calculation means for calculating earnings on intellectual asset from the management-finance information, display data generation means for generating display data, output means for outputting the display data, and information processing means capable of controlling the management-finance information acquisition means, expected intellectual property profit calculation means, earnings on intellectual asset calculation means, display data generation means and output means,
wherein the information processing means realizes:

a function for causing the management-finance information acquisition means to acquire the fixed liabilities, return on fixed liabilities, total market value, return on total market value, operating profit, R&D cost, patent and other royalty income, financial assets, return on financial assets, tangible fixed assets and return on tangible fixed assets of a specified enterprise from the management-finance database containing management-finance information of enterprises;
a function for causing the expected intellectual property profit calculation means to calculate the expected intellectual property profit by subtracting a value obtained by multiplying the return on financial assets to the acquired financial assets and a value obtained by multiplying the return on tangible assets to the tangible fixed assets from the sum of a value obtained by multiplying the return on fixed liabilities to the acquired fixed liabilities and a value obtained by multiplying the return on total market value to the total market value;
a function for causing the earnings on intellectual asset calculation means to calculate the earnings on intellectual asset by subtracting a value obtained by multiplying the return on financial assets to the financial assets and a value obtained by multiplying the return on tangible assets to the tangible fixed assets from the sum of the acquired operating profit., R&D cost and patent and other royalty income;
a function for causing the display data generation means to generate the display data for associating the calculated expected intellectual property profit and earnings on intellectual asset for display; and
a function for causing the output means to output the display data to display means, printing means, recording medium, or another telecommunications device via a communication line.

61. An enterprise evaluation program to be executed in.an enterprise evaluation device comprising management-finance information acquisition means for acquiring management-finance information from a management-finance database, gazette acquisition means for acquiring registration gazettes based on patent applications, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents from the number of inventions and number of extinguished inventions, total patent assets calculation means for calculating the total patent assets from the management-finance information and the total number of effective patents, output means for outputting the total patent assets, and information processing means capable of controlling the management-finance information acquisition means, gazette acquisition means, number-of-inventions acquisition means, number-of-extinguished-inventions acquisition means, total number-of-effective-patents calculation means, total patent assets calculation means and output means,

wherein the information processing means realizes:

a function for causing the management-finance information acquisition means to acquire R&D cost in a first specified period of a specified enterprise from the management-finance database containing management-finance information of enterprises;

a function for causing the gazette acquisition means to acquire registration gazettes based on patent applications filed by a specified enterprise within a second specified period from a database;

a function for causing the number-of-inventions acquisition means to acquire the number of patents subjected to, before a predetermined time, registration or number of claims of the patents as the number of inventions from the acquired registration gazettes;

a function for causing the number-of-extinguished-inventions acquisition means to acquire the number of extinguished inventions of patents extinguished before the predetermined time among the acquired number of inventions;

a function for causing the total number-of-effective-patents calculation means to calculate the total number of effective patents by subtracting the number of extinguished inventions from the acquired number of inventions;

a function for causing the total patent assets calculation means to calculate the total patent assets by multiplying the total number of effective patents to a value obtained through dividing the acquired R&D cost by the number of inventions; and

a function for causing the output means to output the calculated total patent assets to display means, printing means, recording medium, or another telecommunications device via a communication line.

62. An enterprise evaluation program to be executed in an enterprise evaluation device comprising management-finance information acquisition means for acquiring management-finance information from a management-finance database, gazette acquisition means for acquiring registration gazettes based on patent applications, number-of-inventions per applicant acquisition means for acquiring the number of registered inventions per unit of applicant from the registration gazettes, number of registered inventions acquisition means for acquiring the total number of registered inventions from the number or registered inventions per unit of applicant, number-of-extinguished-inventions acquisition means for acquiring the number of extinguished inventions among the number of inventions, total number-of-effective-patents calculation means for calculating the total number of effective patents from the number of inventions and number of extinguished inventions, total effective patent remaining ratio calculation means for calculating the total effective patent remaining ratio from the total number of effective patents, total patent assets calculation means for calculating the total patent assets from the management-finance information and the total number of effective patents, output means for outputting the total patent assets to display means, and information processing-means capable of controlling the management-finance information acquisition means, gazette acquisition means, number-of-inventions per applicant acquisition means, number of registered inventions acquisition means, number-of-extinguished-inventions acquisition means, total number-of-effective-patents calculation means, total effective patent remaining ratio calculation means, total patent assets calculation means and output means,

wherein the information processing means realizes:

a function for causing the management-finance information acquisition means to acquire R&D cost in a first specified period of a specified enterprise from the management-finance database containing management-finance information of enterprises;

a function for causing the gazette acquisition means to acquire registration gazettes based on patent applications filed by a specified enterprise within a second specified period from a database;

a function for causing the number of inventions per applicant acquisition means to acquire the number of patents subjected to, before a predetermined time, registration or number of claims of the patents as the number of registered inventions from each of the acquired registration gazettes, acquire the number of applicants listed in each of the acquired gazettes, and acquire the number of registered inventions per unit of applicant through dividing the acquired number:of registered inventions by the number of applicants;

a function for causing the number of registered inventions acquisition means to acquire the total number of registered inventions as the number of inventions by integrating the acquired number of registered inventions per unit of applicant for the all acquired gazettes;

a function for causing the number-of-extinguished-inventions acquisition means to acquire the number of extinguished inventions of patents extinguished before the predetermined time among the acquired number of inventions;

a function for causing the total number-of-effective-patents calculation means to calculate the total number of effective patents by subtracting the number of extinguished inventions from the acquired number of inventions;

a function for causing the total effective patent remaining ratio calculation means to calculate the total effective patent remaining ratio through dividing the calculated total number of effective patents by the number of inventions;

a function for causing the total patent assets calculation means to calculate the total patent assets by multiplying the total number of effective patents to a value obtained through dividing the acquired R&D cost by the.number of registered inventions; and

-a function for causing the output means to output the calculated total patent assets to display means, printing means, recording medium, or another telecommunications device via a communication line.

63. An enterprise evaluation program to be executed in an enterprise evaluation device comprising management-finance information acquisition means for acquiring management-finance information from a management-finance database, gazette acquisition means for acquiring registration gazettes based on patent applications, number-of-inventions acquisition means for acquiring the number of inventions from the registration gazettes, number-of-extinguished-inventions acquisition means for acquiring the number of extinguished inventions among the number of inventions, total number-of-effective-patents calculation means for calculating the total number of effective patents from the number of inventions and number of extinguished inventions, total patent assets calculation means for calculating the total patent assets from the management-finance information and the total number of effective patents, display data generation means for generating display data, output means for outputting the display data, and information processing means capable of controlling the management-finance information acquisition means, gazette acquisition means, number-of-inventions acquisition means, number-of-extinguished-inventions acquisition means, total number-of-effective-patents calculation means, total patent assets calculation means, display data generation means and output means,

wherein the information processing means realizes:

a function for causing the management-finance information acquisition means to acquire R&D cost in a first specified period and sales volume in a second specified period of a specified enterprise from the management-finance database containing management-finance information of enterprises;

a function for causing the gazette acquisition means to acquire registration gazettes based on patent applications filed by a specified enterprise within a third specified period from a database;

a function for causing the number-of-inventions acquisition means to acquire the number of patents subjected to, before a predetermined time, registration or number of claims of the patents as the number of inventions from the acquired registration gazettes;

a function for causing the number-of-extinguished-inventions acquisition means to acquire the number of extinguished inventions of patents extinguished before the predetermined time among the acquired number of inventions;

a function for causing the total number-of-effective-patents calculation means to calculate the total number of effective patents by subtracting the number of extinguished inventions from the acquired number of inventions;

a function for causing the total patent assets calculation means to calculate the total patent assets by multiplying the total number of effective patents to a value obtained through dividing the acquired R&D cost by the number of inventions;

a function for causing the display data generation means to generate display data for associating the calculated total patent assets and the acquired sales volume for display; and

a function for causing the output means to output the display data to display means, printing means, recording medium, or another telecommunications device via a communication line.

**64.** An enterprise evaluation program to be executed in an enterprise evaluation device comprising management-finance information acquisition means for acquiring management-finance information from a management-finance database, gazette acquisition means for acquiring registration gazettes based on patent applications, number-of-inventions per applicant acquisition means for acquiring the number of registered inventions per unit of applicant from the registration gazettes, number of registered inventions acquisition means for acquiring the total number of registered inventions from the number of registered inventions per unit of applicant, number-of-extinguished-inventions acquisition means for acquiring the number of extinguished inventions among the number of inventions, total number-of-effective-patents calculation means for calculating the total number of effective patents from the number of inventions and number of extinguished inventions, total effective patent remaining ratio calculation means for calculating the total effective patent remaining ratio from the total number of effective patents, total patent assets calculation means for calculating the total patent assets from the management-finance information and the total number of effective patents, display data generation means for generating display data, output means for outputting the display data, and information processing means capable of controlling the management-finance information acquisition means, gazette acquisition means, number-of-inventions per applicant acquisition means, number of registered inventions acquisition means, number-of-extinguished-inventions acquisition means, total number-of-effective-patents calculation means, total effective patent remaining ratio calculation means, total patent assets calculation means, display data generation means and output means,
wherein the information processing means realizes:

a function for causing the management-finance information acquisition means to acquire R&D cost in a first specified period and sales volume in a second specified period of a specified enterprise from the management-finance database containing management-finance information of enterprises;
a function for causing the gazette acquisition means to acquire registration gazettes based on patent applications filed by a specified enterprise within a third specified period from a database;
a function for causing the number of inventions per applicant acquisition means to acquire the number of patents subjected to, before a predetermined time, registration or number of claims of the patents as the number of registered inventions from each of the acquired registration gazettes, acquire the number of applicants listed in each of the acquired gazettes, and acquire the number of registered inventions per unit of applicant through dividing the acquired number of registered inventions by the number of applicants;
a function for causing the number of registered inventions acquisition means to acquire the total number of registered inventions as the number of inventions by integrating the acquired number of registered inventions per unit of applicant for the all acquired gazettes;
a function for causing the number-of-extinguished-inventions acquisition means to acquire the number of extinguished inventions of patents extinguished before the predetermined time among the acquired number of inventions;
a function for causing the total number-of-effective-patents calculation means to calculate the total number of effective patents by subtracting the number of extinguished inventions from the acquired number of inventions;
a function for causing the total effective patent remaining ratio calculation means to calculate the total effective patent remaining ratio through dividing the calculated total number of effective patents by the number of inventions;
a function for causing the total patent assets calculation means to calculate the total patent assets by multiplying the total number of effective patents to a value obtained through dividing the acquired R&D cost by the number of registered inventions;
a function for causing the display data generation means to generate display data for associating the calculated total patent assets and the acquired sales volume for display; and
a function for causing the output means to output the display data to display means, printing means, recording medium, or another telecommunications device via a communication line.

FIG. 1

PRINTER /32

DATABASE /20

(a) MANAGEMENT–
FINANCE INFORMATION
(b) PATENT INFORMATION
(c) MARKET VALUE
INFORMATION
(d) TECHNICAL
DOCUMENTS

COMMUNICATION
NETWORK /10

FIG. 2

## FIG. 3

### (a) MANAGEMENT-FINANCE INFORMATION

| (A) Information on Size of Company | (B) Financial Information of Company | | (C) Combined Information of Company |
|---|---|---|---|
| Number of employees | Sales volume | Total assets | Sales volume per employee |
| Number of officers | Sales profit | Tangible fixed assets | R&D cost per employee. |
| Capital | Operating profit | Amount of capital investment | Sales profit per employee |
| Number of plants/offices | Gross operating profit | Depreciation costs | Operating profit per employee |
| Ground floor area | Sales profit ratio | Patent royalty income | Gross operating profit per employee |
| Total floor area | Operating profit ratio | Financial assets (liquid assets and liquid liabilities) | |
| Ownership ratio of premises | Gross operating profit ratio | Interests paid/discounts | |
| Ownership ratio of building | Total market value to total assets ratio | Long-term prime rate (long-term borrowing rate) | |
| Number of employees (consolidated basis) | Total market value to stockholders' equity ratio | Short-term prime rate | |
| Number of officers (consolidated basis) | Total market value to sales volume ratio | Interest on bonds | |
| Capital (consolidated basis) | Total market value to gross operating profit ratio | 10-year government bond yield ratio | |
| Number of plants/offices (consolidated basis) | Total market value to operating profit ratio | Personnel costs, (including officers' compensation and labor costs) | |
| Ground floor area (consolidated basis) | Gross operating profit to total assets ratio | Welfare expenses | |
| Total floor area (consolidated basis) | Gross operating profit to stockholders' equity ratio | Capital stock | |
| Ownership ratio of premises (consolidated basis) | Operating profit to total assets ratio | Total number of outstanding shares | |
| Ownership ratio of building (consolidated basis) | Operating profit to Stockholders' equity ratio | Stock price (Nikkei Stock Average) | |
| | Stockholders' equity ratio | Taxes and public charges | |
| | Balance of total market value and stockholders' equity | | |
| | R&D cost | | |
| | R&D cost to sales volume ratio | | |
| | R&D cost to operating profit ratio | | |
| | R&D cost to gross operating profit ratio | | |

FIG. 4A

(b) PATENT INFORMATION

| (A) Application Related Matters | |
|---|---|
| Filing date | Number of filings |
| Application number | Number of request for examination |
| Title of the invention | Number of filings based on IPC |
| Inventors | Number of filings based on keywords |
| Applicants | Number of claims filed |
| Scope of claims | Years spent on examination requests |
| Abstract | Number of inventors |
| IPC | Number of applicants (number of joint applications) |
| FI | Number of domestic priority-claiming applications |
| F term | Number of domestic priority bases claimed in applications |
| Agents | Number of priority bases from foreign countries |
| Publication date | Number of applications in which an exception to loss of novelty is requested |
| Publication number | Number of applications in which examination is requested before laid-open |
| Existence of request for examination | Number of divisional applications |
| Date of request for examination | Number of withdrawn/abandoned applications |
| Priority date | Number of converted applications |
| Priority number | Number of expedited examinations |
| Date of publication of translations of PCT international application | Number of filings (in each country) |
| Number for publication of translations of PCT international application | Number of inventors in applications (in each country) |
| Date of domestic re-publication of PCT international application | Number of applicants in applications (in each country) |
| Number for domestic re-publication of PCT international application | Number of priority-claiming applications (in each country) |
| International filing date | Number of priority bases claimed in applications (in each country) |
| International application number | Number of divisional applications (in each country) |
| International publication date | |
| International publication number | |
| Designated countries | |

FIG. 4B

(b) PATENT INFORMATION

| (B) Registration Related Matters | |
|---|---|
| Registration date | Number of registrations |
| Issue date of registration | Number of claims registered |
| Registration number | Number of expired patents after registration |
| Scheduled day of expiration of right | Years spent from application to registration |
| Date of publication of examined application | Patent registration rate |
| Publication number of examined application | Patent allowance rate |
| Annual maintenance fee payment status | Years spent from request for examination to registration |
| Number of final decisions for rejection | Number of applications in which preferential examination is conducted |
| Date of final decision for rejection | Number of rejections issued |
| Number of claims decided to be finally rejected | Number of amendments filed |
| Number of appeals against final decision for rejection | Number of amendments filed (for formalities) |
| number of abandoned/withdrawn applications after request for examination | Number of written oppositions filed |
| Number of abandoned/withdrawn claims after request for examination | Number of appeals and trials |
| Number of invalidation trials | Number of registrations for creating patent right |
| Appeal/trial number | Number of registrations for extending term of patent right |
| Date of decision to appeal/trial | Number of transferred patents |
| Number of claims demanded for invalidation trial | Number of registrations (in each country) |
| Number of appeals to dismissal of amendment or trials for correction | Years required for registration (in each country) |
| Number of oppositions | Years spent on examination (in each country) |
| Number of claims demanded for opposition | Number of rejections issued (in each country) |
| Inventors of registered patent | Number of amendments filed (in each country) |
| Number of inventors of registered patent | Number of amendments filed (for formalities) (in each country) |
| Applicants of registered patent | Number of oppositions filed (in each country) |
| References cited | Number of applications in which preferential examination is conducted |
| | Number of rejections issued |
| | |

FIG. 5

EP 1 686 517 A1

"PATENT QUARTERLY JOURNAL" INDEX LIST OF ENTERPRISE VALUE EVALUATION SYSTEM

A: Business, Profit and Market Value Related Index (1)

| Index Group | Index | Formula |
|---|---|---|
| (A) Investment | Facility Investment Amount | {(Current Term Tangible Fixed Assets - Previous Term Tangible Fixed Assets)} + (Current Term Depreciation Cost) |
| | R&D Cost | Total Amount of R&D Cost |
| | Investment Trend Index | Term-on-Term Ratio of {(Facility Investment Amount) + (R&D Cost)} |
| (B) Management/Finance Analysis | Facility Investment Efficiency | (Value Added Amount)/(Tangible Fixed Assets) |
| | Labor Productivity | (Value Added Amount)/(Number of Employees) |
| | Labor Equipment Ratio | (Tangible Fixed Assets)/(Number of Employees) |
| | Labor Distribution Share | {(Personnel Expense to be Included in Selling Cost and Administrative Expenses) + (Labor Cost to be Included in Manufacturing Cost)}/(Value Added Amount) |
| | Total Factor Productivity | (Value Added Amount Rate of Change) - {(1 - Labor Distribution Share (To Value Added)) × (Depreciation Target Tangible Fixed Assets Rate of Change)} - {(Labor Distribution Share (To Value Added)) × (Number of Employees Rate of Change)} |
| | Cost-to-Sales Ratio | (Cost of Sales)/(Sales Volume) |
| | Cost of Sales-and-Administration Ratio to Sales | (Selling Cost and Administrative Expenses)/(Sales Volume) |
| | Interest Bearing Debt Ratio | (Interest Bearing Debt)/(Total Assets) |
| | Equity to Asset Ratio | (Equity Capital)/(Total Assets) |
| (C) Profit Related Items | Sales Volume | (Sales Volume) |
| | Value Added Amount | (Operating Net Profit) + (Interest Paid and Discount) + (R&D Cost) + (Depreciation Cost) + (Personnel Expense (including board members' remuneration)) + (Welfare Expense) + (Tax and Dues)  (Operating Net Profit) = (Operating Profit) - (Interest Paid and Discount) |
| | Gross Operating Profit (GBP) | (Operating Profit) + (R&D Cost) |
| | Earnings Before Interest, Taxes, Depreciation and Amortization (EBITDA) | (Operating Profit) + (Depreciation Cost) |
| | Operating Profit | (Operating Profit) |
| | Operating Net Profit | (Operating Profit) - (Interest Paid and Discount) |
| | Patent Royalty Income | (Patent Royalty Income (Including Royalty Income of Trademarks and Brands, etc.)) |
| | ROA α | {(Value Added Amount) + (Patent Royalty Income)}/(Total Assets) |
| | ROA β | {(GBP) + (Patent Royalty Income)}/(Total Assets) |
| | ROA γ | {(EBITDA) + (Patent Royalty Income)}/(Total Assets) |
| | ROA δ | {(Operating Profit) + (Patent Royalty Income)}/(Total Assets) |
| | Earnings on Intellectual Assets (EOIA) | {(GBP) + (Patent Royalty Income)} - {(Financial Assets) × (Profit Ratio m)} + {(Tangible Fixed Assets) × (Profit Ratio f)} (Profit Ratio m): Application of Short Term Prime Rate; (Profit Ratio f): Application of Long Term Prime Rate |
| | Return On Intellectual Assets (ROIA) | (Earnings on Intellectual Assets)/(Total Assets) |

FIG. 6

EP 1 686 517 A1

"PATENT QUARTERLY JOURNAL" INDEX LIST OF ENTERPRISE VALUE EVALUATION SYSTEM

A: Business, Profit and Market Value Related Index (2)

| Index Group | Index | Formula |
|---|---|---|
| (D) Excess Profit Analysis | Excess Value Added Amount | Sales Volume × [(Sales Volume Value Added Ratio) - (Industry Average Sales Volume Value Added Ratio)] |
| | Excess GBP | Sales Volume × [(Sales Volume GBP Ratio) - (Industry Average Sales Volume GBP Ratio)] |
| | Excess EBITDA | Sales Volume × [(Sales Volume EBITDA Ratio) - (Industry Average Sales Volume EBITDA Ratio)] |
| | Excess Operating Profit | Sales Volume × [(Operating Profit Ratio (To Sales)) - (Industry Average Operating Profit Ratio (To Sales))] |
| | Excess ROA $\alpha$ | (ROA $\alpha$) - (Industry Average ROA $\alpha$) |
| | Excess ROA $\beta$ | (ROA $\beta$) - (Industry Average ROA $\beta$) |
| | Excess ROA $\gamma$ | (ROA $\gamma$) - (Industry Average ROA $\gamma$) |
| | Excess ROA $\delta$ | (ROA $\delta$) - (Industry Average ROA $\delta$) |
| | Excess Earnings on Intellectual Assets (EXEOIA) | (Net Assets) × [(Ratio of Earnings on Intellectual Assets) - (Industry Average of Ratio of Earnings on Intellectual Assets) |
| (M) Market Evaluation Related Items | MVA | (Value of Stock) - (Shareholders' Equity)　(Value of Stock) = (Total Number of Outstanding Stock) × (Stock Price) |
| | PBR | (Value of Stock)/(Equity Capital) |
| | Expected Intellectual Property Profit | [(Fixed Liabilities) × (Profit Ratio a) + (Value of Stock) × (Profit Ratio p)] - [(Financial Assets) × (Profit Ratio m) + (Tangible Fixed Assets) × (Profit Ratio f)]} (Profit Ratio a): (Weighted Average of Long Term Prime Rate and Bond Rate) × (1 - Corporate Tax) (Profit Ratio p): Calculated Based on Capital Asset Pricing Model (CAPM). Yield on Long Term 10-Year Government Bonds, Stock Investment Profit Ratio, $\beta$ Value were used; (Profit Ratio m): Application of Short Term Prime Rate (Profit Ratio f): Application of Long Term Prime Rate |
| (PE) Patent Profitability Related Items | Patent Profitability $\alpha$ | [(GBP) + (Patent Royalty Income)]/(Total Number of Effective Patents) |
| | Patent Profitability $\beta$ | [(Excess Value Added) + (Patent Royalty Income)]/(Total Number of Effective Patents) |
| | Patent Profitability $\gamma$ | [(Excess GBP) + (Patent Royalty Income)]/(Total Number of Effective Patents) |
| | Patent Profitability $\delta$ | (Excess Earnings on Intellectual Assets (EXEOIA))/(Total Number of Effective Patents) |

FIG. 7

EP 1 686 517 A1

"PATENT QUARTERLY JOURNAL" INDEX LIST OF ENTERPRISE VALUE EVALUATION SYSTEM

B: R&D and Patent Related Index (1)

| Index Group | Index | Formula |
|---|---|---|
| (R) R&D Related Items | R&D Cost Ratio $\alpha$ | (R&D Cost)/(Sales Volume) |
| | R&D Cost Ratio $\beta$ | (R&D Cost)/(Value Added Amount) |
| | R&D Cost Ratio $\gamma$ | (R&D Cost)/(GBP) |
| | R&D Cost Ratio $\delta$ | (R&D Cost)/(Total Assets) |
| | Number of Inventors | (Calculated Based on "Inventor" Column of Laid-Open Publications) |
| | Ratio of Inventors | (Number of Inventors)/(Number of Employees) |
| | R&D Cost per Inventor | (R&D Cost)/(Number of Inventors) |
| (PA) Patent Application Related Items | Number of Patent Applications | (Joint Application is Recorded as One Application) |
| | Number of Claims Filed | (Sum of Number of Claims of Laid-Open Publications) |
| | Number of Claims per Patent Application | (Number of Claims Filed)/(Number of Patent Applications) |
| | Number of application per Inventor | (Number of Patent Applications (Other Than Joint Applications))/(Number of Inventors) |
| | Number of Claims per Inventor (Patent Application) | (Number of Claims Filed (Other Than Joint Applications))/(Number of Inventors) |
| | Number of Joint Applications | (Number of Joint Applications Among Patent Applications Filed) |
| | Joint Filing Ratio | (Number of Joint Applications)/(Number of Patent Applications) |
| | Number of Applicants in Joint | (Number of Joint Applicants in Joint Applications) |
| | Patent Application Stock | (Cumulative Number of Patent Applications) |
| (PB) Examination Request Related Items | Number of Examination Requests | (Number of Examination Requests Filed) |
| | Years to Examination Request (Average) | { $\Sigma$ (Date of Examination Request - Filing Date)}/{(Number of Examination Requests)×(Annual Number of Days)} |
| | Examination Request Ratio | (Examination Request Ratio Pertaining to Number of Patent Applications of Each Year) |
| | Cumulative Number of Examination Requests | (Cumulative Number of Examination Requests) |

FIG. 8

EP 1 686 517 A1

"PATENT QUARTERLY JOURNAL" INDEX LIST OF ENTERPRISE VALUE EVALUATION SYSTEM

B: R&D and Patent Related Index (2)

| Index Group | Index | Formula |
|---|---|---|
| (PT) Patent Acquisition (Registration) Related Items | Number of Patents Granted | (Number of Patents Granted) |
| | Number of Claims Registered | (Number of "Claims" in Registered Gazette) |
| | Years to Patent Granted (Average) | { Σ (Patent Registration Date - Patent Filing Date)}/{(Number of Patents Granted)×(Annual Number of Days)} |
| | Patent Granted Ratio to Number of Applications | (Number of Patents Granted Each Year)/(Number of Patent Applications Filed Each Year) |
| | Patent Granted Stock | (Patent Granted Stock at End of Each Year) |
| | Patent Granted Ratio to Number of Examination Requests | (Number of Patents Granted Each Year)/(Number of Examination Requests Filed Each Year) |
| | Patent Granted Stock Ratio to Examination Request Stock | (Patent Granted Stock)/(Cumulative Number of Examination Requests) |
| | Number of Effective Patents Granted | (Number of Patents Granted Each Year) - (Number of Patents Invalidated Among Patent Registrations Each Year) |
| (PP) Patent Productivity | Patent Application Productivity | (Number of Claims of Patent Applications in a year)/(R&D Cost in a previous year) |
| | Examination Request Productivity | Correction of (Patent Application Productivity). (Patent Application Productivity) × (Estimated Examination Request Ratio) (Estimated Examination Request Ratio: Sought Based on Number of Examination Requests for Previous Applications in which the term for Examination Request is expired.) |
| | Patent Granted Productivity | Correction of (Patent Application Productivity). (Patent Application Productivity) × (Estimated Registration Ratio) (Estimated Registration Ratio: Sought Based on Number of Registrations of Previous Applications, Lapsed Years, Average Required Years to Patent Granted) |
| (PS) Patent Stock Related Items | Total Number of Effective Patents | (Patent Granted Stock) - (Patent Invalidation Stock) |
| | Patent Granted Renewal Ratio | (Total Number of Effective Patents)/(Patent Granted Stock) |
| | Years to Renewal Patent Granted Expiration (Average) | { Σ (Scheduled Invalidation Date of Each Patent of the Total Number of Effective Patents - Year End)}/{(Total Number of Effective Patents) × (Annual Number of Days)} |
| | Patent Stock Index | (Total Number of Effective Patents) × (Years to Renewal Patent Granted Expiration (Average)) |
| | Total Patent Assets | {(R&D Cost)/(Number of Patents Granted)}×(Total Number of Effective Patents) |

FIG. 9

EP 1 686 517 A1

"PATENT QUARTERLY JOURNAL" INDEX LIST OF ENTERPRISE VALUE EVALUATION SYSTEM

C: Patent Portfolio Related Index

| Index Group | Index | Formula |
|---|---|---|
| (PAP) Patent Application Portfolio analysis | Patent Application Portfolio analysis | (Power of Number of Claims Share Per Technical Field)    (Share: Share of Each Technical Field in an Enterprise or Share of each Enterprise in All Enterprises in a Technical Field) |
| | Patent Diversification Index (PDI) | [1 - $\Sigma$(Share of Each Technical Field in an Enterprise)$^2$] |
| | Patent Competitive Position Index (PCPI) | $\Sigma$[[$\Sigma$ (SEI Index Per Technical Field)] ×(Share of Each Company Per Technical Field)] × (1 + Excess Growth Rate) |
| | Average Patent Competitive Position Index (Average PCPI) | (Patent Competitive Position Index (PCPI))/(Number of Technical Fields covered by Company's Patent Applications (Average in 3 Years)) |
| (PKA) Characteristic Keywords | Characteristic Keywords | (Selected Keywords Having an Appearance Frequency That is Not Large in All Patent Publications and That is Large in Patent Publications of the Same Company) |
| | Number of Characteristic Keywords | (Representation of Character of an Enterprise by the Number of Keywords under a Constant Condition of Selecting the Characteristic Keywords) |
| (PSI) Patent Similarity Analysis | Patent Similarity Index | (Ratio of Patent Publications Having the Keyword of the Subject Patent Publication within a Population) |
| | Patent Similarity Index to the Same Company (PSIself) | (Patent Similarity Index (PSI) When the Population is the Same Company's Patent Publications) |
| | Patent Similarity Index to All Companies (PSIall) | (Patent Similarity Index (PSI) When the Population is All Patent Publications Including the Other Companies' Patent Publications) |
| | Normal Patent Publication | (Patent Publications Having Significantly Large PSIall) |
| | Exceptional Patent Publication | (Patent Publications Having Significantly Small PSIall) |

FIG. 10    TRANSITION OF TOTAL FACTOR PRODUCTIVITY
OF THE THREE MAJOR AUTOMOBILE MAKERS

| | YEAR 2000 | YEAR 2001 | YEAR 2002 |
|---|---|---|---|
| COMPANY TY | 4.2 | 21.3 | 10.2 |
| COMPANY NS | 10.3 | 25.3 | 12.9 |
| COMPANY HD | −2.9 | 12.4 | 3.1 |

FIG. 11

TOTAL FACTOR PRODUCTIVITY − EXCESS RETURN ON INTELLECTUAL ASSET

$y = 0.4233x + 0.5721$

FIG. 12

EARNINGS ON INTELLECTUAL ASSET − EXPECTED INTELLECTUAL PROPERTY PROFIT

$y = 0.1051x − 496.41$

EP 1 686 517 A1

FIG. 13

RETURN ON INTELLECTUAL ASSET (ROIA) – PATENT PROFITABILITY $\alpha$
(CHEMICAL)
$y = 0.4652x - 1.6982$

FIG. 14

EARNINGS ON INTELLECTUAL ASSET (EOIA) – PATENT PROFITABILITY $\beta$
(CHEMICAL)
$y = 583x + 43617$

97

FIG. 15

TOTAL PATENT ASSETS – SALES VOLUME (CHEMICAL)
y = 1.8393x + 142787

FIG. 16

TOTAL PATENT ASSETS – SALES VOLUME (ELECTRICAL EQUIPMENT)
y = 1.1586x + 237227

FIG. 17

EXCESS EARNINGS ON INTELLECTUAL ASSET (EXEOIA) – R&D COST RATIO $\delta$
(CHEMICAL)
$y = 7131.1x - 22060$

FIG. 18

EXCESS EARNINGS ON INTELLECTUAL ASSET (EXEOIA) – R&D COST RATIO $\delta$
(ELECTRICAL EQUIPMENT)
$y = 14528x - 81181$

FIG. 19

```
                    ┌──────────────────────┐
                    │        START         │
                    └──────────────────────┘
                               │
                               ▼         ╱─ S501
              ┌──────────────────────────────┐
              │    SELECT ENTERPRISE FOR     │
              │  ENTERPRISE VALUE EVALUATION │
              └──────────────────────────────┘
                               │         ╱─ S502
                               ▼
              ┌──────────────────────────────┐
              │  SELECT MENU FOR ENTERPRISE  │
              │       VALUE EVALUATION       │
              └──────────────────────────────┘
                               │         ╱─ S503
                               ▼
              ◇──────── SELECT COMBINATION ────────◇
         ┌────────┘                                 └────────┐
         ▼   ╱─ S604                                 ▼   ╱─ S504
┌──────────────────────────┐         ┌──────────────────────────┐
│ ACQUIRE MANAGEMENT-FINANCE│        │  ACQUIRE PATENT INFORMATION│
│       INFORMATION         │        └──────────────────────────┘
└──────────────────────────┘                    │   ╱─ S505
         │   ╱─ S605                             ▼
┌──────────────────────────┐         ┌──────────────────────────┐
│   CALCULATE MANAGEMENT-   │        │ CALCULATE PATENT INFORMATION│
│    FINANCE INFORMATION    │        └──────────────────────────┘
└──────────────────────────┘                    │   ╱─ S506
         │   ╱─ S606                             ▼
┌──────────────────────────┐         ┌──────────────────────────┐
│ ORGANIZE CALCULATION RESULT│       │ ORGANIZE CALCULATION RESULT│
│   OF MANAGEMENT-FINANCE    │       │    OF PATENT INFORMATION   │
│       INFORMATION          │       └──────────────────────────┘
└──────────────────────────┘                    │
         └──────────────┐          ┌────────────┘
                        ▼          ▼   ╱─ S507
              ┌──────────────────────────────┐
              │         CREATE GRAPH         │
              └──────────────────────────────┘
                               │   ╱─ S508
                               ▼
              ┌──────────────────────────────┐
              │         OUTPUT GRAPH         │
              └──────────────────────────────┘
                               │   ╱─ S509
                               ▼
              ┌──────────────────────────────┐
              │   DETERMINE ENTERPRISE VALUE │
              └──────────────────────────────┘
                               │
                               ▼
                    ┌──────────────────────┐
                    │         END          │
                    └──────────────────────┘
```

FIG. 20

ENTERPRISE VALUE EVALUATION
INPUT CONDITION SETTING (2)

SELECT CONDITIONS IN THE WINDOWS BELLOW

BACK
SET

TARGET (1)

| All industries | | |
|---|---|---|
| Industry | Food | ☐ |
| Enterprise | Ceramic | ☐ |
| Other unit | Steel, nonferrous and metal | ☐ |
| | Machinery and shipbuilding | ☐ |
| | Electrical equipment | ■ |
| | Automobile & transport machine | ☐ |
| | Fabric, pulp and paper | ☐ |
| | Precision equipment | ☐ |
| | Other manufacturing | ☐ |
| | Construction | ☐ |
| | Information & telecommunication | ☐ |
| | Electricity and gas | ☐ |
| | Chemical | ☐ |
| | Service | ☐ |
| | Pharmaceutical | ☐ |

TARGET (2)

| Industry | ☐ |
|---|---|
| Enterprise | ☐ |
| Enterprise | |
| Other unit | |

Company name

Company code

Applicant code

Search

FIG. 21

EP 1 686 517 A1

ENTERPRISE VALUE EVALUATION MENU (1)

SELECT INDEXES IN THE WINDOWS BELLOW

| BACK |
| SET |

**BUSINESS, PROFIT AND MARKET VALUE**

| (A) Investment index | ☐ |
| (B) Management-finance analysis index | ■ |
| (C) Profit related index | ☐ |
| (D) Excess profit analysis index | ☐ |
| (M) Market evaluation related index | ☐ |
| (PE) Patent profitability index | ☐ |

**R&D AND PATENT**

| (R) Research and development related index | ☐ |
| (PA) Patent application related index | ☐ |
| (PB) Examination request related index | ☐ |
| (PT) Patent acquisition (registration) related index | ☐ |
| (PP) Patent productivity index | ☐ |
| (PS) Patent stock related index | ☐ |

**PATENT PORTFOLIO**

| (PAP) Patent application portfolio analysis | ☐ |
| (PKA) Characteristic keyword list | ☐ |
| (PSI) Patent similarity analysis | ☐ |

FIG. 22

EP 1 686 517 A1

103

## ENTERPRISE VALUE EVALUATION MENU (2)

SELECT INDEXES IN THE WINDOWS BELLOW

BACK
SET

### BUSINESS, PROFIT AND MARKET VALUE

| | |
|---|---|
| (A) Investment index | ☐ |
| (B) Management-finance analysis index | ☐ Facility investment efficiency |
| (C) Profit related index | ☐ Labor productivity |
| (D) Excess profit analysis index | ☐ Labor equipment ratio |
| (M) Market evaluation related index | ☐ Labor distribution rate |
| (PE) Patent profitability index | ☐ Total labor distribution rate |
| | ■ Total factor productivity |
| | ☐ Cost-to-sales ratio |
| | ☐ Cost of sales-and-administration ratio to sales |
| | ☐ Interest bearing debt ratio |
| | ☐ Equity to asset ratio |

### R&D AND PATENT

| | |
|---|---|
| (R) Research and development related index | ☐ |
| (PA) Patent application related index | ☐ |
| (PB) Examination request related index | ☐ |
| (PT) Patent acquisition (registration) related index | ☐ |
| (PP) Patent productivity index | ☐ |
| (PS) Patent stock related index | ☐ |

### PATENT PORTFOLIO

| | |
|---|---|
| (PAP) Patent application portfolio analysis | ☐ |
| (PKA) Characteristic keyword list | ☐ |
| (PSI) Patent similarity analysis | ☐ |

FIG. 23

ENTERPRISE VALUE EVALUATION MENU (1)

BACK
SET

SELECT INDEXES IN THE WINDOWS BELLOW

BUSINESS, PROFIT AND MARKET VALUE

(A) Investment index ☐
(B) Management-finance analysis index ☐
(C) Profit related index ☐
(D) Excess profit analysis index ☐
(M) Market evaluation related index ☐
(PE) Patent profitability index ☐

R&D AND PATENT

(R) Research and development related index ■
(PA) Patent application related index ☐
(PB) Examination request related index ☐
(PT) Patent acquisition (registration) related index ☐
(PP) Patent productivity index ☐
(PS) Patent stock related index ☐

PATENT PORTFOLIO

(PAP) Patent application portfolio analysis ☐
(PKA) Characteristic keyword list ☐
(PSI) Patent similarity analysis ☐

FIG. 24

EP 1 686 517 A1

**ENTERPRISE VALUE EVALUATION MENU (3)**

**SELECT INDEXES IN THE WINDOWS BELLOW**

| BACK |
|------|
| SET |

**BUSINESS, PROFIT AND MARKET VALUE**

| | |
|---|---|
| (A) Investment index | ☐ |
| (B) Management-finance analysis index | ☐ |
| (C) Profit related index | ☐ |
| (D) Excess profit analysis index | ☐ |
| (M) Market evaluation related index | ☐ |
| (PE) Patent profitability index | ☐ |

**R&D AND PATENT**

| | | |
|---|---|---|
| (R) Research and development related index | ☐ R&D cost ratio $\alpha$ | |
| (PA) Patent application related index | ☐ R&D cost ratio $\beta$ | |
| (PB) Examination request related index | ☐ R&D cost ratio $\gamma$ | |
| (PT) Patent acquisition (registration) related index | ■ R&D cost ratio $\delta$ | |
| (PP) Patent productivity index | ☐ Number of inventors | |
| (PS) Patent stock related index | ☐ Inventor ratio | |
| | ☐ R&D cost per inventor | |

**PATENT PORTFOLIO**

| | |
|---|---|
| (PAP) Patent application portfolio analysis | ☐ |
| (PKA) Characteristic keyword list | ☐ |
| (PSI) Patent similarity analysis | ☐ |

105

FIG. 25

EP 1 686 517 A1

## ENTERPRISE VALUE EVALUATION MENU (1)

SELECT INDEXES IN THE WINDOWS BELLOW

| BACK |
|---|
| SET |

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ■ | (PT) Patent acquisition (registration) related index | ☐ | | |
| (M) Market evaluation related index | ☐ | (PP) Patent productivity index | ☐ | | |
| (PE) Patent profitability index | ☐ | (PS) Patent stock related index | ☐ | | |

FIG. 26

EP 1 686 517 A1

## ENTERPRISE VALUE EVALUATION MENU (2)

SELECT INDEXES IN THE WINDOWS BELLOW

BACK
SET

### BUSINESS, PROFIT AND MARKET VALUE

| | |
|---|---|
| (A) Investment index | ☐ |
| (B) Management-finance analysis index | ☐ |
| (C) Profit related index | ☐ |

| (D) Excess profit analysis index | ☐ Excess value added amount |
|---|---|
| (M) Market evaluation related index | ☐ Excess GBP |
| (PE) Patent profitability index | ☐ Excess EBITDA |
| | ☐ Excess operating profit |
| | ☐ Excess ROA. $\alpha$ |
| | ☐ Excess ROA. $\beta$ |
| | ☐ Excess ROA. $\gamma$ |
| | ☐ Excess ROA. $\delta$ |
| | ■ Excess earnings on intellectual asset (EXEOIA) |

### R&D AND PATENT

| | |
|---|---|
| (R) Research and development related index | ☐ |
| (PA) Patent application related index | ☐ |
| (PB) Examination request related index | ☐ |
| (PT) Patent acquisition (registration) related index | ☐ |
| (PP) Patent productivity index | ☐ |
| (PS) Patent stock related index | ☐ |

### PATENT PORTFOLIO

| | |
|---|---|
| (PAP) Patent application portfolio analysis | ☐ |
| (PKA) Characteristic keyword list | ☐ |
| (PSI) Patent similarity analysis | ☐ |

FIG. 27

ENTERPRISE VALUE EVALUATION
OUTPUT CONDITION SETTING

SELECT CONDITIONS IN THE WINDOWS BELLOW

| BACK |
| SET |

MAP POSITION

| | |
|---|---|
| 1 map | ■ |
| 2 maps | ☐ |
| 1 data sheet | ☐ |
| 2 data sheets | ☐ |
| 1 map with data | ☐ |
| 2 maps with data | ☐ |
| 1 map with comment | ☐ |
| 2 maps with comment | ☐ |
| 1 map with data and comment | ☐ |
| 2 maps with data and comment | ☐ |

OUTPUT DATA

| | | |
|---|---|---|
| R&D cost ratio $\alpha$ | none | ☐ |
| R&D cost ratio $\beta$ | top 5 | ☐ |
| R&D cost ratio $\gamma$ | top 10 | ☐ |
| R&D cost ratio $\delta$ | top 15 | ☐ |
| COMMENT | top 20 | ■ |
| (free entry) | numerical input | ☐ |

TRANSITION OF EARNINGS ON INTELLECTUAL ASSET (EOIA)
(CHEMICAL)

FIG. 28

EP 1 686 517 A1

109

FIG. 29

TRANSITION OF EARNINGS ON INTELLECTUAL ASSET (EOIA)
(ELECTRICAL EQUIPMENT)

EARNINGS ON INTELLECTUAL ASSET
(MILLION YEN)

450000
400000
350000
300000
250000
200000
150000
100000
50000
0

HT  TS  MB  NC  FJ  MS  SH  SN  SY  PI

1999
2000
2001
2002

2002  2001  2000  1999

FIG. 30

TRANSITION OF RETURN ON INTELLECTUAL ASSET (ROIA)
(CHEMICAL)

FIG. 31

TRANSITION OF RETURN ON INTELLECTUAL ASSET (ROIA)
(ELECTRICAL EQUIPMENT)

RETURN ON INTELLECTUAL ASSET (%)

FIG. 32

TRANSITION OF EXCESS EARNINGS ON INTELLECTUAL ASSET (EXEOIA) (CHEMICAL)

TRANSITION OF EXCESS EARNINGS ON INTELLECTUAL ASSET
(EXEOIA) (ELECTRICAL EQUIPMENT)

EXCESS EARNINGS ON INTELLECTUAL ASSET

200000
150000
100000
50000
0
−50000
−100000
−150000
−200000
−250000

HT  TS  MB  NC  FJ  MS  SH  SN  SY  PI

1999
2000
2001
2002

⊠2002  ⊠2001  ☐2000  ■1999

FIG. 33

EP 1 686 517 A1

FIG. 34

EXEOIA - TFP (CHEMICAL, 2002)

$y = -58.328x + 4935.2$

FIG. 35

EXEOIA - TFP (ELECTRICAL EQUIPMENT, 2002)

$y = 758.53x + 11697$

# INTERNATIONAL SEARCH REPORT

| International application No. |
| --- |
| PCT/JP2004/004598 |

**A. CLASSIFICATION OF SUBJECT MATTER**
Int.Cl$^7$ G06F17/60

According to International Patent Classification (IPC) or to both national classification and IPC

**B. FIELDS SEARCHED**

Minimum documentation searched (classification system followed by classification symbols)
Int.Cl$^7$ G06F17/60

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-352071 A (Masakazu NAKAI), 06 December, 2002 (06.12.02), Abstract (Family: none) | 1-64 |
| A | WO 00/60495 A2 (AURIGIN SYSTEMS INC), 12 October, 2000 (12.10.00), Abstract & JP 2003-527647 A | 1-64 |
| A | WO 2000/75851 A1 (STOCKPRICEPREDICTOR COM LLC), 14 December, 2000 (14.12.00), Abstract & JP 2004-500617 A | 1-64 |

☐ Further documents are listed in the continuation of Box C.      ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 27 April, 2004 (27.04.04) | 18 May, 2004 (18.05.04) |

| Name and mailing address of the ISA/<br>Japanese Patent Office | Authorized officer |
| --- | --- |
| Facsimile No. | Telephone No. |

Form PCT/ISA/210 (second sheet) (January 2004)